# EUROPEAN PATENT APPLICATION

(11) **EP 1 650 681 A2**
(43) Date of publication of application: **26.04.2006**
(21) Application number: 05256298.0
(22) Date of filing: 10.10.2005
(51) Int. Cl.: G06F 17/30

(54) **Data structure, database system, and method for data management and/or conversion**

(30) Priority: 25.10.2004 JP 2004309439
(71) Applicant: Hewlett-Packard Development Company, L.P., Houston, TX 77070 (US)
(72) Inventor: Yamamoto, Akio, Hewlett-Packard Japan, Ltd, Tokyo (JP); Shimizu, Hiroyuki, Hewlett-Packard Japan Ltd., Tokyo (JP); Ukai, Fumitoshi, Hewlett-Packard Japan Ltd., Tokyo (JP)
(74) Representative: Exell, Jonathan Mark

(57) **Abstract**

A database system for creating a database of a directory tree form by associating each of one or more association nodes with one or more topic nodes, each of the one or more topic nodes having data belonging thereto, and an association attribute being defined to represent each of associations between the associated association nodes and topic nodes, the database system including a directory tree creating element for creating an association node entry for each of the association nodes and an association attribute entry for each of the association attributes, and for creating a directory tree by correlating the entries in accordance with an association between the respective association node and the respective association attribute; and a data correlating element for correlating the data belonging to one of the topic nodes with the created association attribute entry in accordance with an association between the topic node and the respective association attribute.

## Description

### RELATED APPLICATIONS

The present application is based on, and claims priority from, Japanese Application Number 2004-309439, filed October 25, 2004, the disclosure of which is hereby incorporated by reference herein in its entirety.

### TECHNICAL FIELD

The embodiments of the present invention relate to a data structure, a database system, a method and a computer-readable medium storing a program for data management and/or conversion.

### BACKGROUND

Relational databases have been used for storing associated data and for searching for desired stored data.

Examples include the following references: "The Associative Model of Data White Paper" (Lazy Software, September 2000), JP 2001-209647 A, and WO 00/29980, all of which are incorporated by reference herein in their entireties.

However, in some of the methods disclosed in the above references, it is not easy to change the structure (schema) of the already completed relational databases.

In other methods disclosed in the above references, descriptive contents of the data become complex, and the data are not always uniquely parsed prior to storing, therefore the original data may not be accurately reproduced from the stored data when necessary.

Furthermore, in the methods disclosed in the above references, when a database is distributed among a plurality of servers, it is not easy to distribute loads among said servers.

### SUMMARY

In accordance with an embodiment of the present invention, a database system is provided for creating a database of a directory tree form by associating each of one or more association nodes with one or more topic nodes, each of the one or more topic nodes having data belonging thereto, and an association attribute being defined to represent each of associations between the associated association nodes and topic nodes. The database system comprises a directory tree creating element for creating an association node entry for each of the association nodes and an association attribute entry for each of the association attributes, and for creating a directory tree by correlating the entries in accordance with an association between the respective association node and the respective association attribute; and a data correlating element for correlating the data belonging to one of the topic nodes with the created association attribute entry in accordance with an association between the topic node and the respective association attribute.

In accordance with an embodiment of the present invention, a data management method is provided for creating a database of a directory tree form by associating each of one or more association nodes with one or more topic nodes, each of the one or more topic nodes having data belonging thereto, and an association attribute being defined to represent each of associations between the associated association nodes and topic nodes. The method comprises
creating an association node entry for each of the association nodes and an association attribute entry for each of the association attributes; creating a directory tree by correlating the entries in accordance with an association between the respective association node and the respective association attribute; and correlating the data belonging to one of the topic nodes with the created association attribute entry in accordance with an association between the topic node and the respective association attribute.

In accordance with an embodiment of the present invention, a computer-readable medium storing therein a program is provided. The program is for use in a database system including a computer for creating a database of a directory tree form by associating each of one or more association nodes with one or more topic nodes, each of the one or more topic nodes having data belonging thereto, and an association attribute being defined to represent each of associations between the associated association nodes and topic nodes. The program when executed in the database system causes the computer to perform the steps of creating an association node entry for each of the association nodes and an association attribute entry for each of the association attributes; creating a directory tree by correlating the entries in accordance with an association between the respective association node and the respective association attribute; and correlating the data belonging to one of the topic nodes with the created association attribute entry in accordance with an association between the topic node and the respective association attribute.

In accordance with an embodiment of the present invention, a computer-readable memory having stored thereon a data structure is provided. The data structure comprises a topic node field for storing therein object data belonging to a plurality of objects; an association node field for storing therein association data describing associations among said objects; and an association attribute field for storing therein role data representing attributes of roles played by the objects with respect to the associated associations.

In accordance with an embodiment of the present invention, a method is provided for converting a first data structure having a plurality of nodes connected by a plurality of links to a second data structure having a plurality of associated topic and association nodes. The method comprises converting each of the nodes of the first data structure to one of the topic nodes of the second data structure; converting each of the links of the first data structure to one of the association nodes of the second data structure; in the second data structure, associating each of the association nodes with two of the topic nodes corresponding to the nodes which in the first data structure are connected by the link corresponding to said association node; and in the second data structure, assigning an association attribute to each association between the associated association and topic nodes to represent attributes of roles played by the nodes with respect to the associated links in the first data structure.

The objects, features and advantages of the embodiments of the present invention will become apparent upon consideration of the following detailed description of the specific embodiments thereof, especially when taken in connection with the accompanying drawings.

### BRIEF DESCRIPTION OF THE DRAWINGS

The embodiments of the present invention are illustrated by way of example, and not by limitation, in the figures of the accompanying drawings, wherein elements having the same reference numeral designations represent like elements throughout.

Fig. 1 is a diagram showing schematically a data structure or model when associative network data is converted according to an embodiment of the present invention.

Fig. 2(a) is a diagram showing schematically a series of (n) associated data to be stored, and Fig. 2(b) is a diagram showing schematically how said series of data are stored in accordance with the data model shown in Fig. 1.

Figs. 3(a)-(b) are diagrams each showing schematically an example of a method of expressing associations between associated nodes in accordance with an embodiment of the present invention.

Fig. 4 is a diagram showing schematically examples of expressing associative network data in accordance with an embodiment of the present invention.

Fig. 5 is a block diagram of a preferred embodiment of the present invention.

Fig. 6 is a diagram showing a configuration of a first database system (DB system) according to an embodiment of the present invention.

Fig. 7 is a diagram illustrating a hardware configuration of a DB server and a PC shown in Fig. 6.

Fig. 8 is a diagram showing schematically the data structure of Fig. 3(a) in a rearranged form.

Fig. 9 is a diagram showing schematically the data structure of Fig. 8 in a generalized form.

Fig. 10 is a diagram showing schematically the data associations of Figs. 3(b) and 4 in a generalized form.

Fig. 11 is a view of an association role (AR) table used for storing the data of the data structure shown in Fig. 9.

Fig. 12 is a view of a T node identifier (ID) table used for storing the data of the data structure shown in Fig. 9.

Fig. 13 is a view of an A node identifier (ID) table used for storing the data of the data structure shown in Fig. 9.

Fig. 14 is a diagram schematically illustrating a data search method in, e.g., the DB server shown in Figs. 6 and 7 in accordance with an embodiment of the present invention.

Fig. 15 is a flowchart showing a search process performed in the DB server shown in Figs. 6 and 7.

Fig. 16 is a flowchart showing an associated node selection process based on a search filter shown in Fig. 15.

Fig. 17 is a flowchart showing a process of obtaining a node ID and a node name shown in Figs. 15 and 16.

Fig. 18 is a block diagram showing schematically a structure of, e.g., a DB program 2 run on the DB server shown in Figs. 6 and 7 in accordance with an embodiment of the present invention.

Fig. 19 is a diagram schematically illustrating data input to the DB server (DB program; Fig. 18) shown in Figs. 6 and 7, and search conditions.

Fig. 20 is a view of an AR table created, e.g., by an AR entry creation unit (Fig. 18) and an ARDB management unit and stored in the ARDB in accordance with an embodiment of the present invention.

Fig. 21 is a view of a T node ID table created, e.g., by an ID entry creation unit (Fig. 18) and an IDDB management unit and stored in the IDDB in accordance with an embodiment of the present invention.

Fig. 22 is a view of an A node ID table created, e.g., by the ID entry creation unit (Fig. 18) and the IDDB management unit in accordance with an embodiment of the present invention.

Fig. 23 is a diagram illustrating a configuration of a second DB system in accordance with an embodiment of the present invention.

Fig. 24 is a diagram illustrating a configuration of a third DB system of an embodiment of the present invention.

Fig. 25 is a diagram schematically illustrating a graphical representation of information in the DB system shown in Fig. 24.

Fig. 26 is a diagram schematically illustrating a directory information tree representation of the information shown in Fig. 25.

Fig. 27 is a diagram schematically illustrating a method of partitioning associative data represented in a directory structure in accordance with an embodiment of the present invention.

Fig. 28 is a diagram showing schematically a referring relation between an entry dn_A2 of a DB server (A) and an entry dn_N of a DB server (N) shown in Fig. 27.

Fig. 29 is a view of a directory tree table used for managing the associative data partitioned and stored in the DB servers (A to N) shown in Fig. 27 in accordance with an embodiment of the present invention.

Fig. 30 is a view of a data table used for classifying top entries dn_A to dn_N of the directory tree (or subtree) stored in the DB servers (A to N) and associative data stored in the subtree in accordance with an embodiment of the present invention.

Fig. 31 is a diagram showing schematically a structure of a first DB management program run on the DB management server shown in Fig. 24 in accordance with an embodiment of the present invention.

Fig. 32 is a view of a GUI screen which is displayed by use of the DB management program shown in Fig. 31 on the input/output device (Figs. 6 and 7) of a computer (PC) used for inputting data in accordance with an embodiment of the present invention.

Fig. 33 is a flowchart showing a registration process of the associative data using the DB management program shown in Fig. 31 in accordance with an embodiment of the present invention.

Fig. 34 is a flowchart showing a process of modifying the data table (Fig. 30) with the DB management program shown in Fig. 31 in accordance with an embodiment of the present invention.

Fig. 35 is a flowchart showing a process of modifying the directory tree table with the DB management program shown in Fig. 31 in accordance with an embodiment of the present invention.

Fig. 36 is a sequence diagram showing schematically the overall execution of the DB management program shown in Fig. 31 in accordance with an embodiment of the present invention.

Fig. 37 is a diagram showing schematically a second DB program run on each of the DB servers shown in Fig. 24 in accordance with an embodiment of the present invention.

Fig. 38 is a diagram showing schematically a search program run on a retrieval device shown in Fig. 24 in accordance with an embodiment of the present invention.

Fig. 39 is a flowchart showing a search process using the search program shown in Fig. 38.

Fig. 40 is a sequence diagram showing an overall process of the DB management program shown in Fig. 31 and the search program shown in Fig. 38 in accordance with an embodiment of the present invention.

Fig. 41 is a first diagram illustrating schematically the associative data of a flat directory structure registered in the DB server of the DB system shown in Fig. 24, in accordance with an embodiment of the present invention.

Fig. 42 is a second diagram illustrating schematically the associative data of the directory structure shown in Fig. 41.

Fig. 43 is a third diagram illustrating schematically the associative data of the directory structure shown in Fig. 41.

Fig. 44 is a fourth diagram illustrating schematically the associative data of the directory structure registered in the DB server of the DB system shown in Fig. 24, showing sales information of only a specific region, in accordance with an embodiment of the present invention.

Fig. 45 is a fifth diagram illustrating schematically the associative data of the directory structure registered in the DB server of the DB system shown in Fig. 24, showing sales information of multiple regions, in accordance with an embodiment of the present invention.

Fig. 46 is a view of a directory tree table containing top entries of the sales information (associative data) shown in Figs. 44 and 45.

Fig. 47 is a view of a data table containing top entries, classification types and classification values thereof when the sales information (associative data) shown in Figs. 44 and 45 is partitioned into subtrees in accordance with an embodiment of the present invention.

Fig. 48 is a view of a GUI screen used for searching for the sales information shown in Figs. 44 and 45 in accordance with an embodiment of the present invention.

Fig. 49 is a diagram showing schematically a process executed by the retrieval device shown in Fig. 24 to detect a DB server to be retrieved from the directory tree table and the data table shown in Figs. 46 and 47 in accordance with an embodiment of the present invention.

Fig. 50 is a view of a search request message for creating an LDAP operation obtained from search conditions shown in Fig. 48 and used for searching for the sales information of only the Kanto region shown in Fig. 44.

Figs. 51(A)-(B) are diagrams each illustrating schematically a newly added subtree in the DB server of the DB system shown in Fig. 24, before and after the addition of the new subtree, respectively, in accordance with an embodiment of the present invention.

Fig. 52 is a view of a search condition management table used for the addition of the new subtree shown in Figs. 51 (A) and (B).

Figs. 53(A)-(B) are diagrams each illustrating schematically the subtree exchange/movement between the DB servers of the DB system shown in Fig. 24, before and after the exchange, respectively, in accordance with an embodiment of the present invention.

Figs. 54(A)-(B) are views showing the updating of the directory tree table (Fig. 46) for the DB servers participating in the exchange of the subtree shown in Figs. 53(A) and (B), before and after updating, respectively, in accordance with an embodiment of the present invention.

Fig. 55 is a diagram showing schematically a third DB program in accordance with an embodiment of the present invention, which runs on the DB server when the addition of the new subtree and its movement/exchange are performed in the DB system shown in Fig. 24.

Fig. 56 is a diagram showing schematically a second DB management program in accordance with an embodiment of the present invention, which runs on the DB management server when the addition of the new subtree and its movement/exchange are performed in the DB system shown in Fig. 24.

Fig. 57 is a flowchart showing a process of a DB management program shown in Fig. 56.

Fig. 58 is a diagram illustrating schematically entries on the same level across a plurality of DB servers in accordance with an embodiment of the present invention.

Fig. 59 is a diagram showing schematically a second search program in accordance with an embodiment of the present invention, which runs on the retrieval device when the addition of the new subtree and its movement/exchange are performed in the DB system shown in Fig. 24.

### DETAILED DESCRIPTION OF EMBODIMENTS

Before the embodiments of the invention are explained in detail, it is to be understood that the invention is not limited in its application to the details of construction and the arrangements of components set forth in the following description or illustrated in the drawing. The invention is capable of other embodiments and of being practiced or being carried out in various ways. Also, it is understood that the phraseology and terminology used herein are for the purpose of description and should not be regarded as limiting. The use of letters to identify steps of a method or process is simply for identification and is not meant to indicate that the steps should be performed in a particular order.

Data containing various components are parsed, and the parsed data are stored.

It is desired that when necessary the original data are accurately reproduced from the stored data.

In general, in a partial set R c A × B of Cartesian product of sets A × B, notation of aRb with respect to an ordered pair (a, b) ∈ R means that "a has a relation R with b". As a simple example of original data that need to be stored and later reproduced, "playwright Shakespeare wrote drama Hamlet" will now be considered.

The original data are in a binary relation. That is, the original data "playwright Shakespeare wrote drama Hamlet" can be expressed in the "aRb" format, in which a is "playwright Shakespeare", R is "author-work", and b is "drama Hamlet".

Thus, the original data are stored in a database as "a", "R" and "b", and can be reproduced when necessary.

However, when the number of data components increases, i.e., when the original data are not in a binary relation but in an n-ary relation, a series of such associated data are expressed in a hypergraph structure, and processing of the data is not simple.

Accordingly, a method of decomposing any n-ary relation into a number of binary relations, parsing the data into a combination of the binary relations, and storing the parsed data in a database is employed.

As a first example, "playwright Shakespeare wrote drama Hamlet in England in about 1600" will now be considered.

This example shows a quaternary relation which is decomposed into a combination of six binary relations as shown in Table 1, because 4C2 = 6.

**Table 1**

| a | R | b |
|---|---|---|
| Playwright Shakespeare | Author - Work | Drama Hamlet |
| Playwright Shakespeare | Author - Creation time | About 1600 |
| Playwright Shakespeare | Author - Creation country | England |
| Drama Hamlet | Work - Creation time | About 1600 |
| Drama Hamlet | Work - Creation country | England |
| About 1600 | Creation time - Creation country | England |

In other words, with any given n, a combination of nC2 binary relations is necessary to express an n-ary relation.

Next, "playwright Shakespeare wrote drama Twelfth Night in about 1600" will be considered as a second example. This example shows a tertiary relation which is decomposed into a combination of 3 binary relations, i.e., n = 3, and 3C2 = 3. The result is shown in Table 2.

**Table 2**

| a | R | b |
|---|---|---|
| Playwright Shakespeare | Author - Work | Drama Twelfth Night |
| Playwright Shakespeare | Author - Creation time | About 1600 |
| Drama Twelfth Night | Work - Creation time | About 1600 |

In this case, storage of information of the first example and information of the second example in the same database causes a problem in that the same binary relation composed of "playwright Shakespeare" - "author-creation time" - "about 1600" is stored.

Another problem is the impossibility of judging which one of the combinations of the binary relations used to express the data of the first and second examples should be employed to reproduce the original information. In other words, the data, e.g., the first and second examples, are not uniquely parsed and stored.

These problems can be solved by adding an identifier to each of the binary relations. However, there is a drawback because data structure and processing will become more complex.

It is known to store binary or tertiary or any n-ary data in relational databases.

A relational database includes one or more fields in which data items are stored. A simple example of a relational database is a table in which fields or data elements are arranged in columns, and data items are arranged in rows. As used herein, a "field" or a "data element" is understood as a logical definition of data, whereas a "data item" is understood to be an actual unit of data stored in a field.

Return now to the first example "playwright Shakespeare wrote drama Hamlet in England in about 1600".

(1) "Who", (2) "what", (3) "when", (4) "where", (5) "why", and (6) "how" can be specified as data elements or fields.

Corresponding to these fields, data items of (1) "playwright Shakespeare", (2) "drama Hamlet", (3) "about 1600", (4) "England", (5) "NULL", and (6) "wrote" can be stored.

However, the following problems are inherent in the method of storing data using relational databases.

(1) It is not easy to add data elements later when new data come in. Addition is not a problem in the case of data composed of stereotyped components. In the case of inputting data containing various components, however, it is necessary to change the schema of the database for adding data elements each time new data come in with a new data component or components. Schema changing is generally difficult especially when data is inputted on-line.

(2) Since the later addition of new fields or data elements is not easy, during the initial database construction, the schema may be constructed with the maximum number of fields or data elements. However, many of the fields are unlikely to contain any data item. This inevitably leads to a reduction in the efficiency of memory use.

To solve such problems, a data storage method based on "Associative Model of Data" developed by "Lazy Software" Inc. (England) has been proposed as a model alternative to the conventional relational database model.

According to this associative data model, information is processed in terms of association between objects, and this association is expressed in a "Source-Verb-Target" syntax.

This model solves some of the problems inherent in the storage method based on relational databases.

However, the associative data model has the following problems. In the case of processing a complex data relation, the model's method of expressing a relation between data is complex and not intuitive. As discussed above, when an n-ary relation is expressed in the form of a binary tree, the data are not uniquely parsed and stored. In addition, an operator can optionally change the data structure when the data is stored in the database. Thus, original information may not be accurately reproduced.

As described above, the relational database has conventionally been known as the method of storing multiple data associated with one another.

According to this method, fields or data elements are preset, and data items are stored in such fields.

The method is advantageous in that the data relation can be easily understood and/or expressed. However, addition of new fields or data elements to the already constructed database, i.e., modification of the structure (schema) of the already constructed database, is not easy.

If new fields or data items are added later, NULL entries will generated with respect to the stored data, causing a problem about a reduction in the memory use efficiency.

On the other hand, in the case of "Associative Model of Data" proposed by the Lazy Software Inc., the problems about the difficulty in adding new data items and the reduction in the memory use efficiency are solved. However, the data descriptive contents become complex, and the data structure is not intuitive, causing another problem in that the parsed/stored data is not unique.

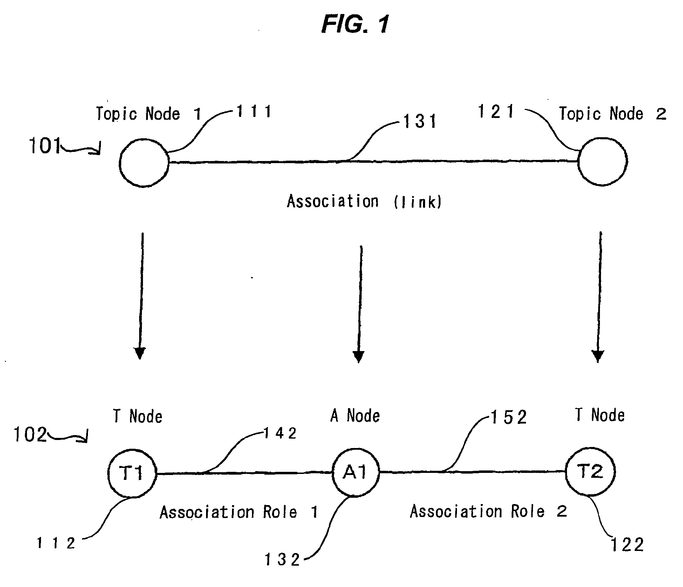

Fig. 1 shows associative network data 101 composed of topic nodes 111, 121 and a link 131 representing an association between the nodes 111, 121, and data model 102 in accordance with an embodiment of the present invention. The association (link) 131 is redefined in data model 102 as an association node 132 (referred to as "A node" hereinafter). The topic nodes 111, 121 correspond to topic nodes 112, 122 (referred to as "T node" hereinafter) in data model 102. Data model 102 further includes links 142, 152 respectively connecting T nodes 112, 122 to A node 132 and having attributes that reflect the roles (referred to as "association roles" hereinafter) played by topic nodes 111, 121, with respect to the association or link 131 in the associative network data 101.

Thus, associative network data 101 is converted to data model 102. In an embodiment of the present invention, data model 102 is constructed anew. In a simple example, data model 102 is represented in the form of an association role table including three fields, i.e., one "A node" field, one "T node" field and one "Association Role" field, and information extracted from associative network data 101 are entered as data items in the rows(records) of such an association role table (referred to as "AR table" hereinafter) as shown in Table 3. In an embodiment, the AR table which is defined as part of a relational database is managed using a relational database management system.

**Table 3**

| A node | T node | Association role |
|---|---|---|
| A1 | T1 | Association role 1 |
| A1 | T2 | Association role 2 |

Accordingly, new attribute information regarding certain data (topic node) is defined as another associative data, and expressed as data associated with a row of the AR table by using a combination of corresponding A and T nodes and the links between the nodes (i.e., basic components in the data model in accordance with an embodiment of the present invention), whereby new attribute information can be added without changing the existing table structure (database schema).

Furthermore, identifiers are assigned to the A and T nodes to uniquely identify the nodes. For the identifiers, an identifier table (referred to as "ID table" hereinafter) is defined and contains node types representing node attribute types and node names representing attribute values, i.e., specific contents of the nodes (Table 5).

The ID table is managed by the relational database management system as in the case of the AR table.

In an embodiment of the present invention, a T node is newly added as data describing a specific meaning of an association represented by a certain A node, and these two nodes, i.e., the preexisting A node and the new T node, are associated with each other by an association role predefined as "reification".

By further defining/describing an association between the new T node and another new T node added similarly for another A node, it is possible to express a relation between the associations represented by the two original A nodes.

The new T node and the association role "reification" particularly introduced to describe the meaning of an A node can be stored/managed by the AR table.

By managing the nodes using the ID table and the AR table, a data expression method capable of expressing not only the associations between the A and T nodes but also the associations between the A nodes is realized.

In the prior method, nC2 binary relations are necessary to express a piece of an n-ary data. According to an embodiment of the present invention, however, only n relations will be required to express the same n-ary data.

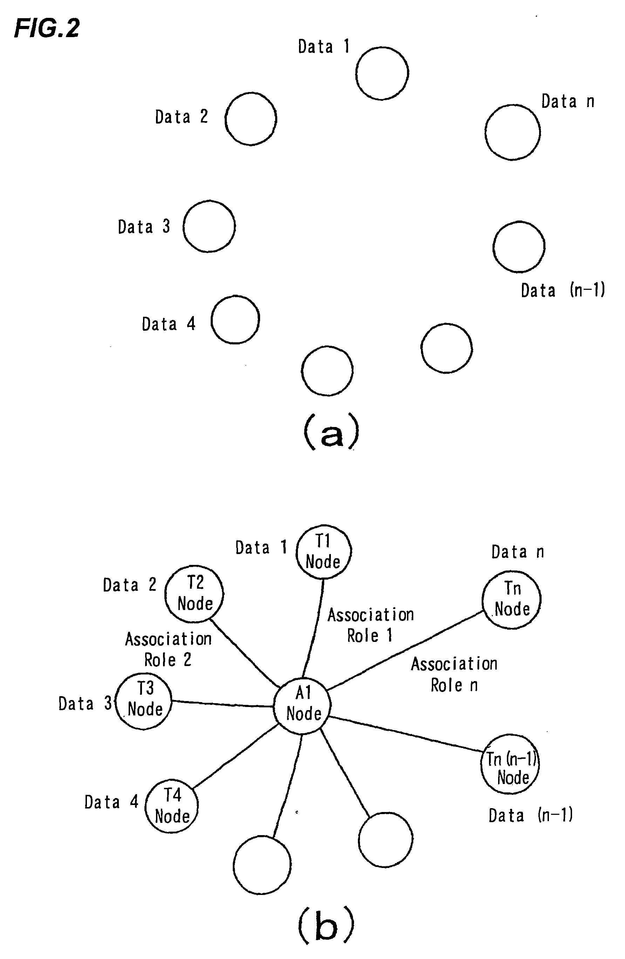

In other words, when a data set composed of n data components having one common association (Fig. 2, (a)) are stored in accordance with an embodiment of the present invention, one new node (A node) common to the data set is added, and then an association role is defined for each data components, i.e., T nodes (Fig. 2, (b)).

The resulting AR table is given in Table 4.

**Table 4**

| A node | T node | Association role |
|---|---|---|
| A1 | T1 | Association role 1 |
| A1 | T2 | Association role 2 |
| A1 | T3 | Association role 3 |
| A1 | T4 | Association role 4 |
| . | . | . |
| . | . | . |
| A1 | T(n-1) | Association role (n-1) |
| A1 | Tn | Association role n |

"A1" used in Fig. 2(b) and Table 4 is an identifier assigned to the respective A node, indicating that the data components (T nodes having other identifiers "T1" to "Tn" assigned thereto) have a certain common association.

Multiple A nodes with multiple, different identifiers are added when the data components have multiple, different common associations.

Furthermore, for the A and T nodes to which the identifiers have been assigned, an ID table having a "Node Type" field and a "Node Name" field as data attributes is created as shown in Table 5.

**Table 5**

| Node ID | Node Type | Node Name |
|---|---|---|
| A1 | A Node Type 1 | A Node Name 1 |
| T1 | T Node Type 1 | T Node Name 1 |
| T2 | T Node Type 2 | T Node Name 2 |
| . | . | . |
| . | . | . |
| Tn | T Node Type n | T Node Name n |

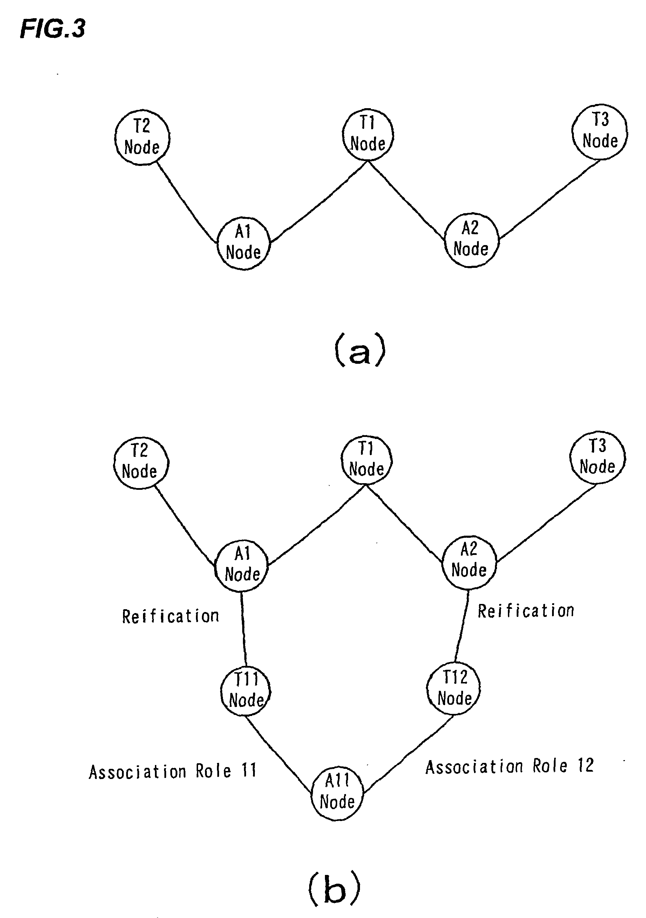

Figs. 3(a)-3(b) show an example in which T nodes T1 and T2 are associated with each other by an A node A1 and T nodes T1 and T3 are associated with each other by an A node A2 (Fig. 3, (a)), a T node (identifier T11) is newly added to describe a specific meaning of an association indicated by the A node A1, and associated with the A node A1 based on an association role predefined as "reification".

Similarly, the A node A2 is associated with a new T node T12 based on an association role "reification", and an association between the two T nodes T11 and T12 is defined by using the A node A11 (Fig. 3, (b)).

Thus, a relation between the two original A nodes A1 and A2 can be expressed by using an AR table similar to that shown in Table 6.

**Table 6**

| A node | T node | Association role |
|---|---|---|
| A1 | T11 | Reification |
| A2 | T12 | Reification |
| A11 | T11 | Association role 11 |
| A11 | T12 | Association role 12 |

### Data Storage Method/Data Structure

Hereinafter, the data storage method and the data structure in accordance with an embodiment of the present invention will be described.

As a specific example, "playwright Shakespeare wrote drama Hamlet in England in about 1600" will be considered as first data.

The first data represent a quaternary relation having data components of (1) "playwright Shakespeare", (2) "drama Hamlet", (3) "about 1600", and (4) "England". When the first data are parsed using the prior method into binary relations, a combination of six binary relations will be required as shown in Table 7, because 4C2 = 6.

**Table 7**

| Topic node 1 | Link (association) | Topic node 2 |
|---|---|---|
| Playwright Shakespeare | Author - Work | Drama Hamlet |
| Playwright Shakespeare | Author - Creation time | About 1600 |
| Playwright Shakespeare | Author - Creation country | England |
| Drama Hamlet | Work - Creation time | About 1600 |
| Drama Hamlet | Work - Creation country | England |
| About 1600 | Creation time - Creation country | England |

The parsed data are converted according to an embodiment of the present invention. The first record (row) of Table 7 is converted as described below.

Data component "playwright Shakespeare" in the topic node 1 indicates "playwright" in this information. Thus, the data component is parsed into "playwright" and "Shakespeare", wherein "Shakespeare" is set as a T node, and "author" is set as an association role. As described later, "playwright" is set as a T node.

For the link "author-work" indicating an association, an A node is added for "authorship of Hamlet" so as to indicate that the series of information belong to the same group.

Since "authorship of Hamlet" is used to indicate that the series of information belong to the same group, other expressions are allowed as long as the information can be differentiated from information of the other group.

Thus, the first record (row) of Table 7 is converted as shown in Table 8.

**Table 8**

| A node | T node | Association role |
|---|---|---|
| Authorship of Hamlet | Shakespeare | Author |

Similarly, "drama Hamlet" in the topic node 2 is converted as shown in Table 9 because it is "work" in this information. Additionally, "drama" is set as a T node.

**Table 9**

| A node | T node | Association role |
|---|---|---|
| Authorship of Hamlet | Hamlet | Work |

Next, similar conversion of the second record (row) of Table 7 is shown in Table 10.

**Table 10**

| A node | T node | Association role |
|---|---|---|
| Authorship of Hamlet | Shakespeare | Author |
| Authorship of Hamlet | About 1600 | Creation time |

Here, the data items "authorship of Hamlet", "Shakespeare" and "author" can be omitted because they are redundant. Thereafter, all the records (rows) of Table 7 are similarly converted, redundant data are omitted, and the result is shown in Table 11.

**Table 11**

| A node | T node | Association role |
|---|---|---|
| Authorship of Hamlet | Shakespeare | Author |
| Authorship of Hamlet | Hamlet | Work |
| Authorship of Hamlet | About 1600 | Creation time |
| Authorship of Hamlet | England | Creation country |

Accordingly, when a data set composed of four data components having one common association is expressed in binary relations using the prior method, six records are necessary, because 4C2 = 6. However, it can be understood that only four records are necessary according to an embodiment of the present invention.

In an embodiment, when a data set having four data components are parsed and stored in a database, one new node (A node) common for the data set is added, an association role is then defined for each data component, and the database having "A node", "T node" and "association role" fields is defined. Thus, the data structure in accordance with the embodiment of the present invention can be constructed anew.

Here, an identifier "A1" is assigned to the A node "authorship of Hamlet". It can be understood that the data having common identifiers "A1" belong to one group. Additionally, identifiers "T11" to "T14" are assigned to four T nodes "Shakespeare", "Hamlet", "about 1600" and "England", respectively.

Thus, an AR table is created for the first data as shown in Table 12.

**Table 12**

| A node | T node | Association role |
|---|---|---|
| A1 | T11 | Author |
| A1 | T12 | Work |
| A1 | T13 | Creation time |
| A1 | T14 | Creation country |

An A node (identifier A1) indicating "authorship of Hamlet" is set as "authorship-related information", and node types of the T nodes to which the identifiers T11 to T14 have been assigned are set as "playwright", "drama", "time" and "country". Accordingly, an ID table is created as represented by Table 13.

**Table 13**

| Node ID | Node Type | Node Name |
|---|---|---|
| A1 | Authorship-related information | (NULL) |
| T11 | Playwright | Shakespeare |
| T12 | Drama | Hamlet |
| T13 | Time | About 1600 |
| T14 | Country | England |

As second data, a statement that "Japanese translation with drama Hamlet as original work was published by oo Publishing Company in February 2003" will be considered in a further example.

The second data are parsed as follows according to an embodiment of the present invention. Here, an A node common for all data component is "Japanese translation of Hamlet", and an identifier "A2" is assigned thereto. The result is shown in Table 14.

**Table 14**

| A node | T node | Association role |
|---|---|---|
| A2 | Hamlet | Original work |
| A2 | Hamlet | Translation |
| A2 | February 2003 | Publication date |
| A2 | ○○ Publishing Company | Publication |

An identifier "T12" has been assigned to Hamlet which is an original work. Thus, when an identifier "T22" is assigned to the translation Hamlet, and identifiers "T23" and "T24" are assigned to the publication date and the publisher, an AR table for the second data is shown in Table 15.

**Table 15**

| A node | T node | Association role |
|---|---|---|
| A2 | T12 | Original work |
| A2 | T22 | Translation |
| A2 | T23 | Publication date |
| A2 | T24 | Publication |

Additionally, an ID table is created as represented by Table 16.

**Table 16**

| Node ID | Node Type | Node Name |
|---|---|---|
| A2 | Authorship-related information | (NULL) |
| T22 | Drama | Hamlet |
| T23 | Date | February 2003 |
| T24 | Publisher | ○○ Publishing Company |

The first and second data, and other such data are stored in the same database. Thus, an AR table and an ID table similar to Tables 17 and 18 are eventually obtained.

**Table 17**

| A node | T node | Association role |
|---|---|---|
| A1 | T11 | Author |
| A1 | T12 | Work |
| A1 | T13 | Creation time |
| A1 | T14 | Creation country |
| A2 | T12 | Original work |
| A2 | T22 | Translation |
| A2 | T23 | Publication date |
| A2 | T24 | Publication |
| . | . | . |
| . | . | . |

**Table 18**

| Node ID | Node type | Node name |
|---|---|---|
| A1 | Authorship-related information | (NULL) |
| T11 | Playwright | Shakespeare |
| T12 | Drama | Hamlet |
| T13 | Time | About 1600 |
| T14 | Country | England |
| A2 | Authorship-related information | (NULL) |
| T22 | Drama | Hamlet |
| T23 | Date | February 2003 |
| T24 | Publisher | oo Publishing Company |
| . | . | . |
| . | . | . |

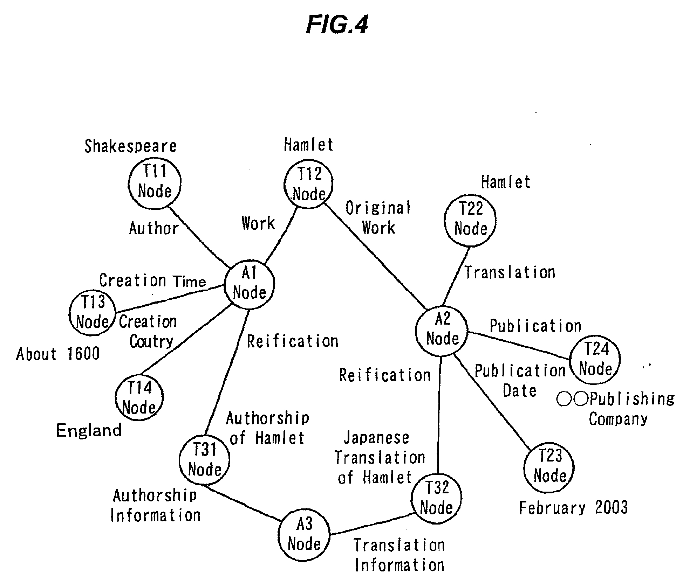

Furthermore, as shown in Fig. 4, additional T nodes are provided to describe specific meanings of the associations indicated by the A nodes with identifiers A1 and A2. Identifiers "T31" and "T32" are assigned to the additional/new T nodes, and the additional/new T nodes are associated with the nodes A1 and A2 through association roles "reification".

Node types of these two new T nodes are set as "authorship information", and node names are set as "authorship of Hamlet" and "Japanese translation of Hamlet", respectively.

An A node indicating an association between the nodes T31 and T32 is newly added with an identifier A3, and a node type is set as "original work-translation information".

Roles of the nodes T31 and T32 in the association are "original work information" and "translation information". Through the aforementioned processing, an AR table and an ID table are added as represented by Tables 19 and 20, respectively. In an embodiment of the present invention, Tables 19, 20 are appended to Tables 17, 18, respectively.

**Table 19**

| A node | T node | Association role |
|---|---|---|
| A1 | T31 | Reification |
| A2 | T32 | Reification |
| A3 | T31 | Original work information |
| A3 | T32 | Translation information |

**Table 20**

| Node ID | Node type | Node name |
|---|---|---|
| T31 | Authorship information | Authorship of Hamlet |
| T32 | Authorship information | Japanese translation of Hamlet |
| A3 | Original work - Translation information | (NULL) |

To directly store the first and second data in the same relational database, an item (data attribute), e.g., corresponding to "Hamlet" as a translation version or "○○ Publishing Company", must be newly added as a new field. This addition, in accordance with the prior method, is not easy because the table structure of the database must be changed accordingly.

However, according to an embodiment of the present invention, by adding a new row, i.e., a new record rather than a new field, to the existing AR table as shown above, it is possible to differentiate the first data from the second data, by storing data having different data attributes as different groups.

The first and second data are expressed as shown in Fig. 4 using A nodes, T nodes and links representing associations between the nodes.

An embodiment of the present invention provides a method of easily representing data having complex structure and a storage/management method using relational databases.

Next, an exemplary search for desired data in the database of an embodiment of the present invention will be described.

For example, a user wishes to know the publisher of the Japanese translation of drama Hamlet written by playwright Shakespeare.

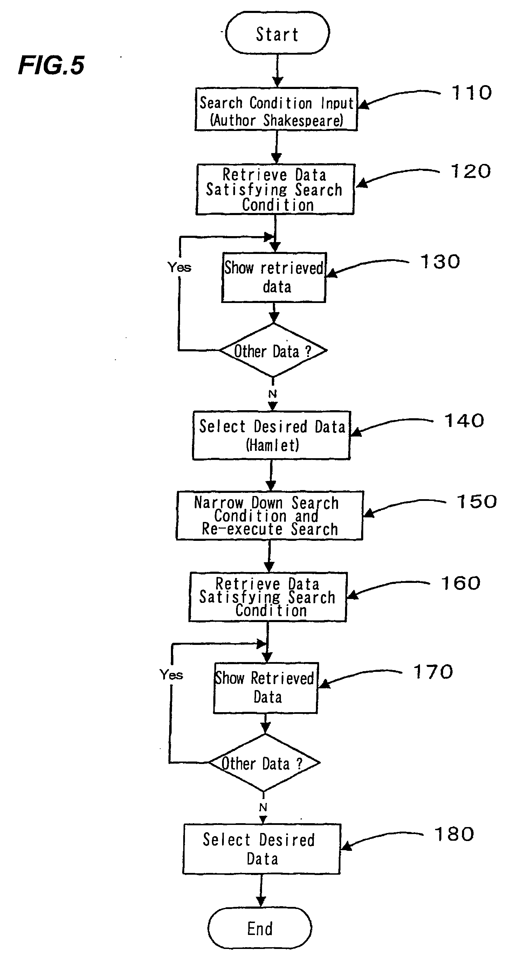

Fig. 5 is a flowchart showing the search process performed in accordance with an embodiment of the present invention. The flowchart of Fig. 5 will be described hereinafter.
At step 110: The user inputs search conditions as "drama" (or "work") written by "playwright" (or "author"), "Shakespeare".
At step 120: One or more groups of data satisfying the search conditions are retrieved.
At step 130: Data corresponding to "drama" among the retrieved one or more groups of data are displayed.
At step 140: The user selects a desired drama name, i.e., "Hamlet", from the displayed data.
At step 150: The database is searched again, with "Hamlet" and "translation" as the new search conditions.
At step 160: Further one or more groups of data satisfying the new search conditions are retrieved.
At step 170: Data regarding "publisher" and "publication date" among the retrieved one or more groups of data are displayed.
At step 180: The user selects a desired publisher from the displayed data.

A detailed description will be given below.

The user inputs "Shakespeare" and "author" as search conditions, and searches for data.

In this particular example, there is a node name "Shakespeare" of a T node and an association role "author" in the database. An identifier of the T node (e.g., T11) whose association role is "author" is retrieved by referring to the AR table (e.g., Table 17) in the database. Subsequently, one or more groups of identifiers of A nodes corresponding to the T node (e.g., T11) whose node name is "Shakespeare" are retrieved by referring to node name attributes stored in the ID table (e.g., Table 18).

Within the search result including the retrieved one or more groups of A node identifiers, another search condition, i.e., a T node identifier whose association role is "work", is selected from the AR table (e.g., Table 17).

Data, i.e., node names, regarding the selected T node, i.e., drama(s) corresponding to the association role "work" are displayed from the ID table (e.g., Table 18) based on the selected identifier.

For example, dramas or node names "Hamlet", "Taming of the Shrew", "Merchant of Venice", "Midsummer Night's Dream", "King Lear" and the like are displayed. The user selects a desired drama, or node name, i.e., "Hamlet".

Subsequently, using the identifier "T12" of the selected node name "Hamlet" as a key, the system in accordance with an embodiment of the present invention searches for an A node identifier containing an identifier "T12" as a T node ID and having an association role "translation" at the same time from the AR table (e.g., Table 17).

Accordingly, one or more groups of data associated with the A node identifiers satisfying the search conditions are retrieved.

Node names of T nodes having "publication" and "publication date" as association roles are displayed from the retrieved one or more groups of data by referring to the ID table (e.g., Table 18).

The user can now select a desired publisher from the displayed data, i.e., "○○ Publishing Company" which has indeed published a translation of drama Hamlet recently in "February 2003".

The process of Fig. 5 has been described as one search example. Needless to say, when the number of search conditions increases, the number of searching times in the database is not limited to two as shown in Fig. 5 and can be an arbitrary number of times depending on the search conditions.

In the described specific example, a single attribute is defined as an association role. However, each association role is not limited to only one, single attribute.

In other words, an association role can have a plurality of attributes. In the above examples, more detailed attributes can be defined by adding and specifying genres such as "tragic drama", "comedy", "romance", "historical drama" and the like to the association role "drama".

### Features of Data Storage Method/Data Structure

As described above, according to the data storage method and the data structure of an embodiment of the present invention, by using the widely used relational database form, the data can be stored and managed while the hypergraph structure representing a relation of a series of data having tertiary or more complex relations, generally n-ary mutual relations, is maintained.

According to the method of directly mapping the associative network data in the table(s) of a relational database in accordance with an embodiment of the present invention, it is possible to solve the prior problem that it is impossible to efficiently store/manage data having tertiary or more complex relations, generally n-ary relations.

It is also possible to solve the prior problem that modifications, such as addition of attribute data to the data stored in the database, necessitate changing of the structure of the relational database table, causing a loss of flexibility and requiring much labor.

Furthermore, it is possible to give specific meanings to a series of associations by using additional identifiers usually assigned to data and additional association roles in the framework of the same database schema.

### First Database System

Hereinafter, a first database of an embodiment of the present invention will be described.

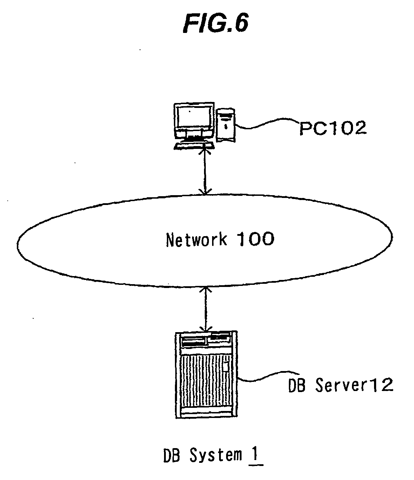

Fig. 6 shows a configuration of the first database system (DB system) 1 of an embodiment of the present invention is implemented.

Referring to Fig. 6, the first DB system 1 of an embodiment of the present invention is configured by connecting a database server (DB server) 12 to a computer (PC) 102 used for inputting and searching for data via a network 100 such as LAN, WAN or Internet.

In the description below, terminology may be partially or slightly different from the terminology used above to describe the data storage method and the data structure with reference to Figs. 4 and 5 and Tables 7 to 20. However, the meanings of the corresponding terms of the descriptions are substantially identical.

In case of discrepancies, the meanings of the terms used in the below description of the DB system 1, will control.

Throughout the drawings referenced below, similar components will be denoted by similar reference numerals.

### Hardware Configuration

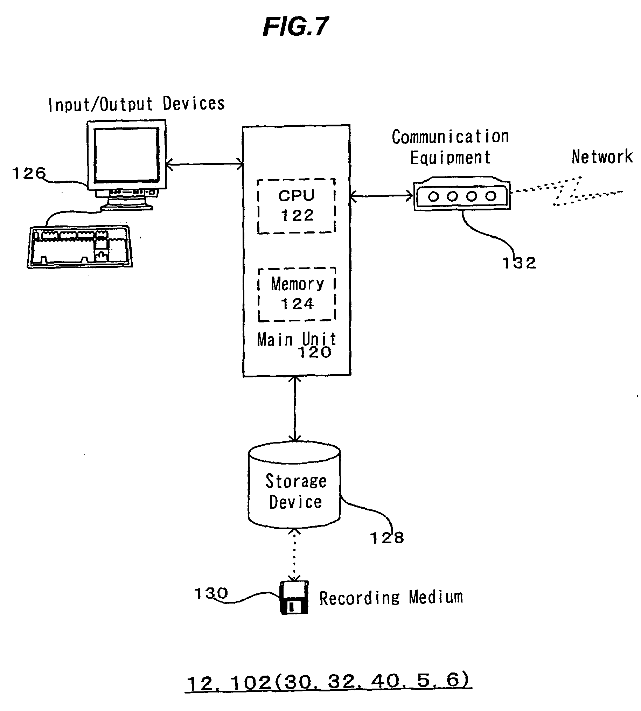

Fig. 7 shows a hardware configuration of the DB server 12 and the PC 102 shown in Fig. 6.

Referring to Fig. 7, the DB server 12 and the PC 102 include a main unit 120 including a CPU 122, a memory 124, and peripheral circuits therefor, input/output devices 126 including a display unit and a keyboard, and a recording device 128 such as a CD or an HDD. Further, when the DB server 12 and the PC 102 (components for performing communication may be generically referred to as communication node, hereinafter) are connected to the network 100, a communication device 132 for performing communication with the other communication node via the network 100 may be added.

In other words, the DB server 12 and the PC 102 include components as computers provided with functions of performing communication with the other communication node.

### Data Structure

The DB server 12 is constructed to allow data storage and searching for stored data in accordance with the data storage method and the data structure of an embodiment of the present invention described above with reference to Figs. 4 and 5, and Tables 7 to 20.

The data structure and the data search mechanism in the DB server 12 will now be described.

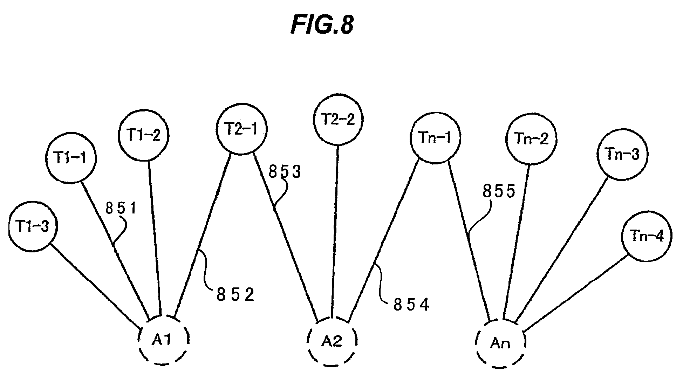

Fig. 8 shows the data associations of Fig. 3(a) in a rearranged form.

Referring to Fig. 8, in the DB server 12, a topic node (T node, hereinafter) is associated with one or more association nodes (A nodes, hereinafter), and an association attribute R is defined between the associated T and A nodes.

The association attribute R may be any attribute for defining an association between the T and A nodes. However, for a specific and clear description presented below, a specific example in which the association attribute R is an association role R (as detailed in the aforementioned description of the data storage method and the data structure of an embodiment of the present invention) will be considered.

The data associations shown in Fig. 3(a) can be rearranged as shown in Fig. 8.

Among A nodes A1 to An shown in Fig. 8 (n is an integer of 1 or more, but n does not indicate the same number in all cases), the A node A1 and T nodes T1-1 to T1-3, and T2-1 associated with the A node A1 are interconnected by links.

Similarly, T nodes T2-1, T2-2 and Tn-1 associated with the A node A2, and the A node A2 are interconnected by links.

The same holds true for the A node An. T nodes Tn-1 to Tn-4 associated with the A node An, and the A node An are interconnected by links.

In other words, Fig. 8 shows that the T node T2-1 has associations with both of the A nodes A1 and A2, and the T node Tn-1 has associations with both of the A nodes A2 and An.

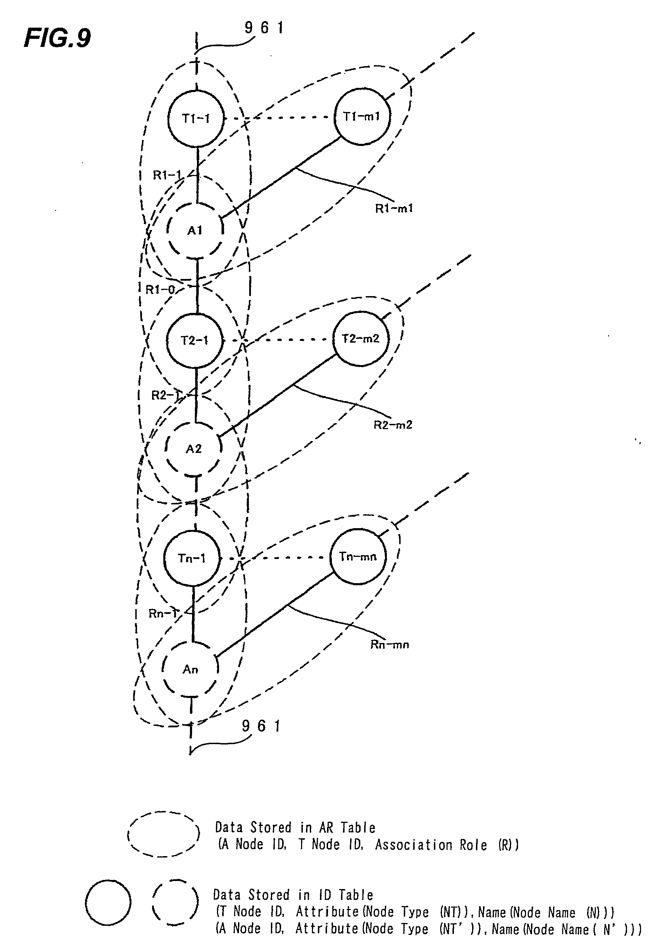

Fig. 9 shows the data structure of Fig. 8 in a generalized form.

The links 851, 852, 853, 854, 855 from the T node T1-1 through the A node A1, the T node T2-1, the A node A2 and the T node Tn-1 to the A node An in Fig. 8 are represented along a path 961 extended in a top-to-bottom direction in Fig. 9.

In a specific example, Fig. 9 additionally shows the following.

(1) The T nodes T1-1 to T1-m1 and T2-1 are associated with the A node A1, and association roles R1-1 to R1-m1 and R1-0 are defined in associations (links) between the T nodes T1-1 to T1-m1 and T2-1 and the A node A1.

(2) The T nodes T2-1 to T2-m2 and the T node omitted from Fig. 9 are associated with the A node A2, and association roles R2-1 to R2-m2 are defined in associations between the T nodes T2-1 to T2-m2 and A node A2.

(3) Similarly thereafter, the T node omitted from Fig. 9 is associated with the A node, and an association role R is defined therebetween.

(4) The T nodes Tn-1 to Tn-mn and the T node omitted from Fig. 9 are associated with the A node An, and association roles Rn-1 to Rn-mn (m1 to mn, and n is an integer) are defined in associations between the T nodes Tn-1 to Tn-mn and the A node An.

In other words, in the DB server 12, each of the T nodes is associated with one or more A nodes, and each of the A nodes is associated with one or more T nodes, whereby the plurality of T nodes can be associated with one another via the A nodes, and the plurality of A nodes can be associated with one another via the T nodes.

In the DB server 12, a plurality of combinations of the A and T nodes associated as shown in Fig. 9 can be stored.

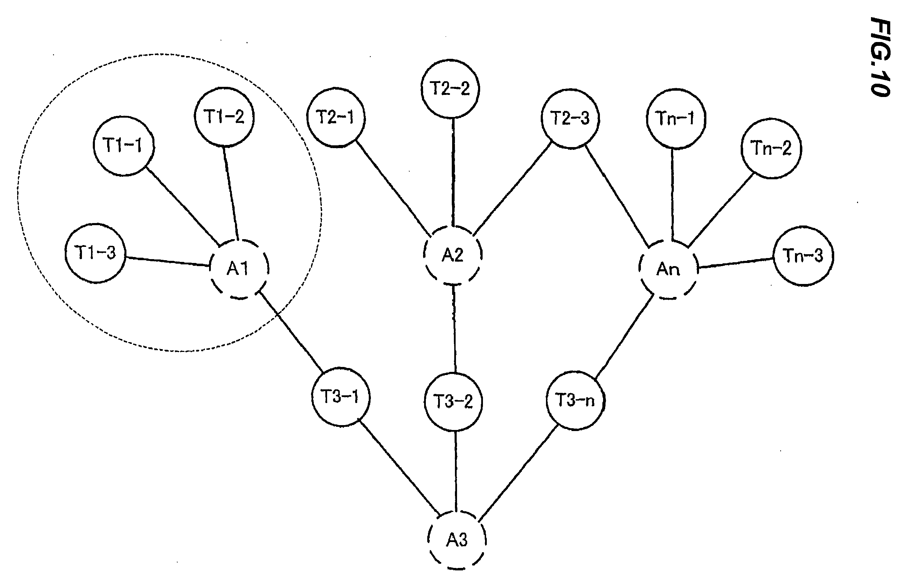

Fig. 10 is a diagram showing the data associations of Figs. 3(b) and 4 in a generalized form.

Referring to Fig. 10, the T nodes T1-1 to T1-3 (, and T3-1) associated with the A node A1 are connected to the A node A1 by links, the T nodes T2-1 to T2-3 (, and T3-2) associated with the A node A2 are connected to the A node A2 by links, and the A node An and the T nodes Tn-1 to Tn-3, and T2-3 (, and T3-n) are connected together by links.

The T node T2-3 is connected to both of the A nodes A2 and An by links, which means that the T node T2-3 is associated with both of the A nodes A2 and An.

When, like in this case, a series of information associated by the A nodes A1, A2 and An have a common association, a new association node A3 can be defined.

For example, when the A node A1 is information regarding the original work of Hamlet, the A node A2 is information regarding the translation of Hamlet, and the A node An is information regarding the performance of Hamlet, associative data represented by the A nodes A1, A2 and An have a commonality as data regarding Hamlet.

Thus, to indicate that the data associated by the A nodes A1, A2 and An have the commonality, the new association node A3 is defined and stored in the database.

As shown by broken line in Fig. 10, to specifically describe the series of information represented by the A node A1 and the T nodes T1-1 to T1-3, a new T node T3-1 is defined and stored in the database.

Similarly, to specifically describe the associations of the A nodes A2 and An, new T nodes T3-2 and T3-n are defined and stored in the database.

For example, data "authorship of Hamlet" is defined as topic contents in the T node T3-1, data "Japanese translation of Hamlet" is defined as topic contents in the T node T3-2, and data "performance of Hamlet" is defined as topic contents in the T node T3-n. These data are stored in the database.

Additionally, an association role R is defined between the new A node A3 and each of the T nodes T3-1 to T3-n, and stored in the database.

For example, "original work information" is defined as an association role R between the new A node A3 and the T node T3-1, "translation information" is defined as an association role R between the new A node A3 and the T node T3-2, and "performance information" is defined as an association role R between the new A node A3 and the T node T3-n. These data are stored in the database.

Similarly, for example, association roles R predefined as "reification" by the system are defined between the A nodes A1, A2 and An and the T nodes T3-1, T3-2 and T3-n.

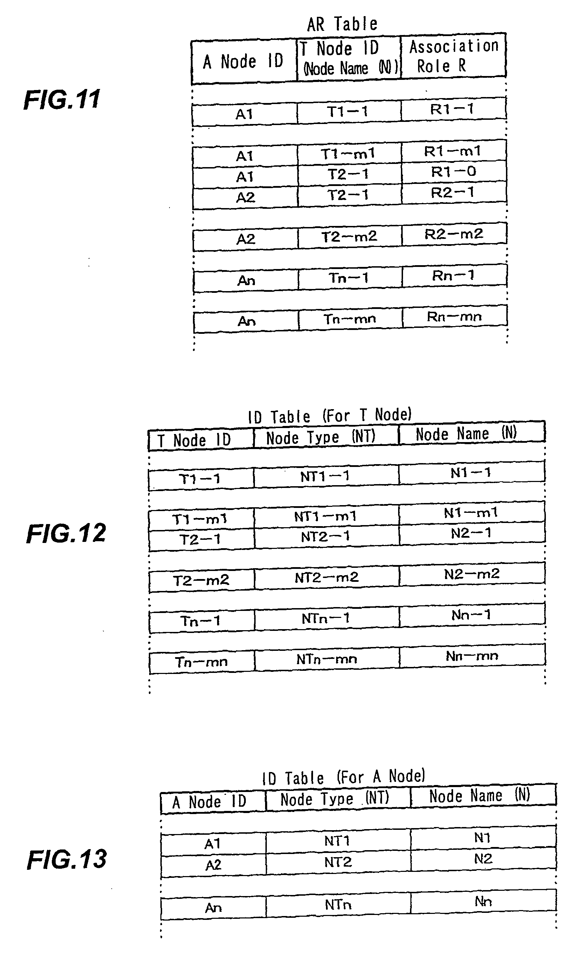

Fig. 11 shows an association role (AR) table used for storing the data of the structure shown in Fig. 9.

Fig. 12 shows a T node identifier (ID) table used for storing the data of the structure shown in Fig. 9.

Fig. 13 shows an A node identifier (ID) table used for storing the data of the structure shown in Fig. 9.

In the DB server 12, the data of the A and T nodes associated by the structure shown in Fig. 9 and the data of the T node are stored by using the AR table of Fig. 11 and the ID table of Fig. 12.

Each of the entries (or records or rows) of the AR table shown in Fig. 11 represents one given A node, one T node associated with the A node, and an association role R defined between the associated A and T nodes, and includes the A node ID, the T node ID, and the association role R.

In other words, each of the entries of the AR table includes the identifier of the A node at one end of one of the links shown in Fig. 9, the identifier of the T node at the other end of the link, and the association role defining an attribute of the link.

Such entries are created for all the links (links between the T node T1-1 and the A node A1 and between the T node Tn-mn and the A node An) shown in Fig. 9, and stored in the AR table. Accordingly, the associations between the A and T nodes shown in Fig. 9 are stored in the AR table of Fig. 11.

Each T node has its contents (name of the T node, data of the T node itself, data referred to by the T node, and the like). Further, for each T node, in addition to the identifier (ID) stored in each entry of the AR table, an attribute of the T node (node type (NT); topic attribute) is defined. Hereinafter, a specific example in which each T node has only its name (node name (N)) as its contents will be considered.

Each entry of the T node ID table shown in Fig. 12 includes an identifier (ID) of one of the T nodes shown in Fig. 9, an attribute (node type (NT)) defined for the T node, and a name (node name (N)) of the T node.

Such entries are created for all the T nodes T1-1 to Tn-mn shown in Fig. 9, and stored in the T node ID table. Accordingly, the data of all the T nodes shown in Fig. 9 are stored.

Each entry of the A node ID table shown in Fig. 13 includes an identifier (ID) of one of the A nodes shown in Fig. 9, an attribute (node type (NT')) defined for the A node, and a name (node name (N')) of the A node.

Such entries are created for all the A nodes A1 to An shown in Fig. 9, and stored in the A node ID table. Accordingly, the data of all the A nodes shown in Fig. 9 are stored.

It is to be noted that similar forms can be employed to store the associations between the A and T nodes and the data of the A and T nodes shown in Fig. 9 in addition or as alternative to the table forms. In the description below, however, a specific example of using the AR table and the ID tables will be considered.

Depending on use, configuration or processing task of the DB server 12, as shown in Fig. 11, each entry may include contents (node name (N)) of the T node in place of the identifier (ID) of the T node in the AR table.

Similarly, in the AR table, each entry may further include contents of the T node.

### Data Search

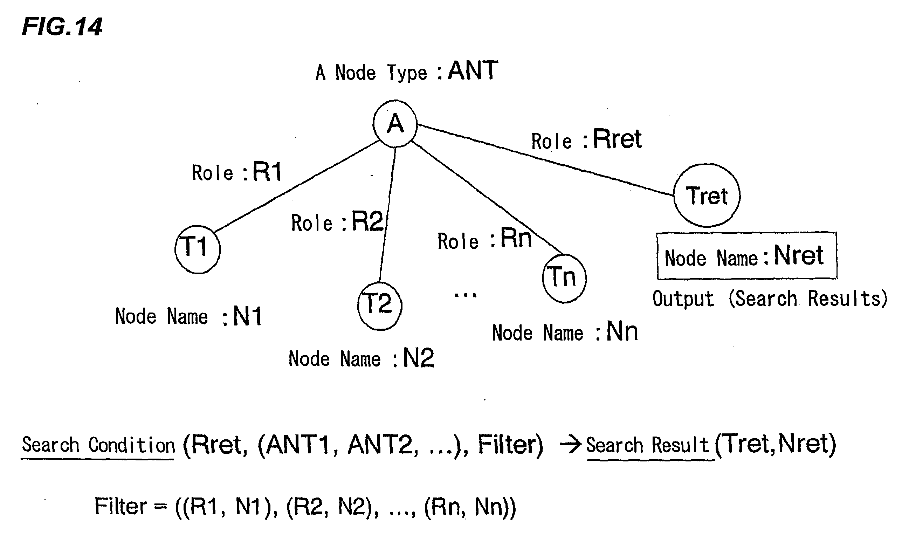

Fig. 14 shows a data search method in the DB server 12 shown in Figs. 6 and 7.

As shown in Fig. 14, a specific example will be considered in which T nodes T1 to Tn and a T node Tret (T return), a search-result-to-be(output), are associated with a certain A node, association roles R1 to Rn and Rret are defined between the A node and the T nodes T1 to Tn and Tret, and the T nodes T1 to Tn and Tret have node names N1 to Nn and Nret.

In the DB server 12, one or more combinations of the association role Rret defined for Tret, an attribute of the A node used for searching (node type NT; ANT1 and ANT2 in Fig. 14), the association role R and the node name N of the T node used for the searching are used as search conditions.

As shown in Fig. 14, for example, the search conditions are represented by (Rret, (ANT1, ANT2, ...), Filter), where Filter = ((R1, N1), (R2, N2), ..., (Rn, Nn)).

The search conditions can further contain an attribute NT of the T node (third condition data) as described later.

Among the search conditions, one or more combinations (R1, N1), (R2, N2), ... (Rn, Nn) of the association role R and the node name N of the T node included in the Filter are used as filters for searching, and thus will be referred to as search filters hereinafter.

Among the search conditions, the attributes of the A node (ANT1, ANT2, ...) can be omitted.

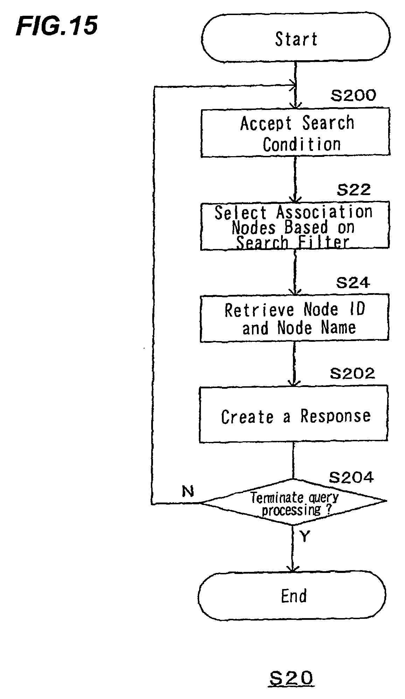

Fig. 15 is a first flowchart showing an overall process (S20) of the searching process in the DB server 12 shown in Figs. 6 and 7.

Referring to Fig. 15, in a step S200, for example, the DB server 12 accepts the search conditions shown in Fig. 14 which has been entered, e.g., by the searcher using the input/output device 126 of the PC 102 (Fig. 6) or the DB server 12.

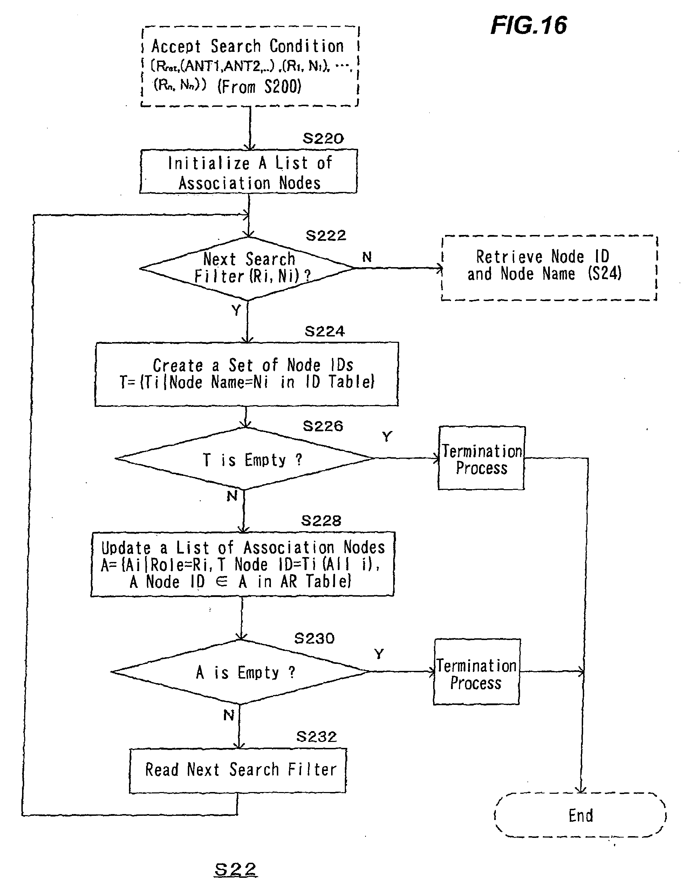

In a step S22, detailed in Fig. 16, an association node is selected based on a search filter which will be described later.

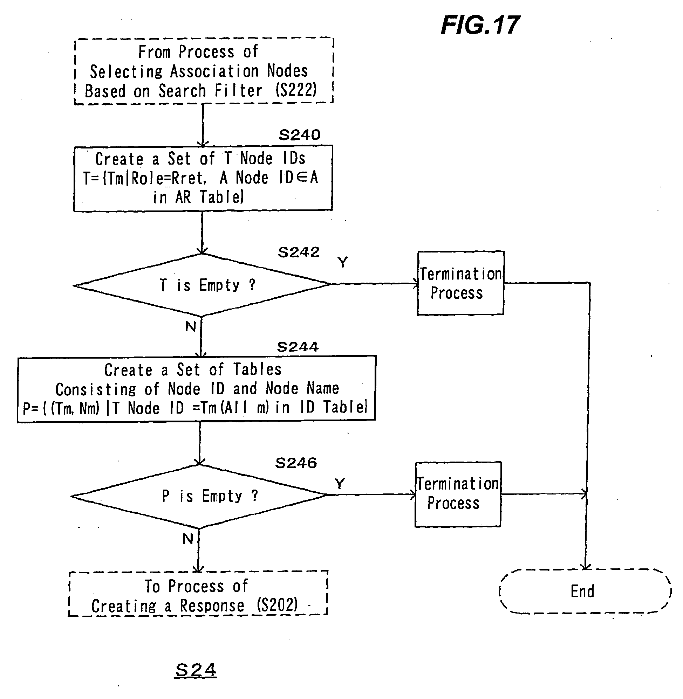

In a step S24, detailed in Fig. 17, a node ID and a node name which will be described later are obtained.

In a step S202, the DB server 12 creates a response to the searcher's query based on an identifier (node ID) and the node name (Nret) of the T node Tret obtained as a search result through the processing in S24.

For the response, only the node name Nret, various data referred to by the node Tret, or various data indicating the node Tret can be used.

In a step S204, referring to Fig. 15, the DB server 12 determines whether searcher's query has been terminated or not.

The DB server 12 ends the process when the searcher's query has been terminated, or returns to the processing in S200 otherwise.

Fig. 16 is a flowchart showing an association node selection process (S22) based on the search filter shown in Fig. 15.

Referring to Fig. 16, upon the acceptance of the search conditions (Rret, (ANT1, ANT2, ...), Filter), Filter = ((R1, N1), (R2, N2), ..., (Rn, Nn)) in the processing in S200 shown in Fig. 15, the DB server 12 initializes a list of association nodes used for processing in a step S220.

In this association node list, among the A nodes obtained from the AR table (Fig. 11), an identifier of an A node containing one of the attributes of the A nodes (node type; ANT1, ANT2, ...) in the search conditions as its attribute (node type NT) is stored.

It is to be noted that when the attributes of the A nodes are omitted from the search conditions ((ANT1, ANT2, ...) = NULL), in the processing in S220, all the identifiers of the A nodes obtained from the AR table (Fig. 11) are stored.

In a step S222, the DB server 12 determines whether processing has been carried out or not for all the search filters (Ri, Ni).

The DB server 12 proceeds to processing in S24 (Figs. 15 and 17) if the processing has been carried out for all the search filters. Otherwise, the DB server 12 sets any one of the search filters (Ri, Ni) not yet processed as the next filter for processing, and proceeds to processing in S224.

In step S224, the DB server 12 searches the T node ID table (Fig. 12) to retrieve all entries containing the node names Ni of the search filters (Ri, Ni), and creates a set of T node identifiers contained in the retrieved entries (node ID set T, where T = {Ti| node name = Ni in ID table}).

It is to be noted that when the search conditions contain attributes of T nodes (node type; NT) and the search filters are represented by (Ri, Ni, NTi), in the processing in S224, the DB server 12 only needs to retrieve entries containing the node names Ni and the node types NTi of the search filters (Ri, Ni, NTi) from the ID table, and to create a set of T node identifiers contained in the retrieved entries as a node ID set T.

In a step S226, the DB server 12 determines whether the node ID set T obtained in the processing in S224 is empty or not.

When the node ID set T is empty, the DB server 12 performs processing for terminating the search process (display a "zero matches found" message or the like to the searcher), and ends the search process. Otherwise, the DB server 12 proceeds to processing in S228.

In step S228, the DB server 12 searches the AR table (Fig. 11) to update the association node list A.

That is, the DB server 12 retrieves all the entries containing the association roles Ri of the search filters (Ri, Ni) and the T node identifiers included in the node ID set T obtained in the processing in S224 from the AR table, and stores the A node identifiers contained in the retrieved entries in the association node list A (A = {Aj| role = Ri, T node identifier = Ti (all i), A node identifier ∈ A in AR table}).

In a step S230, the DB server 12 determines whether the association node list A obtained in the processing in S228 is empty or not.

When the association node list A is empty, the DB server 12 performs processing for terminating the search process, and ends the search process. Otherwise, the DB server 12 proceeds to processing in S232.

In step S232, the DB server 12 reads the search filter included in the search conditions but not processed and returns to the processing in S222.

Fig. 17 is a flowchart showing a node ID and node name obtaining process S24 shown in Figs. 15 and 16.

Referring to Fig. 17, upon the completion of the association node selection process S22 based on the search filters, in a step S240, the DB server 12 searches the AR table (Fig. 11) to create a T node ID set T.

That is, the DB server 12 retrieves all the entries containing the association roles Rret included in the search conditions and A node identifiers included in the association node list A obtained in the processing in S22 (S228) from the AR table, and creates a set of T node identifiers (T node ID set T) contained in the retrieved entries (T = {Tm| role = Rret, A node identifier ∈ A in AR table}).

In a step S242, the DB server 12 determines whether the T node ID set T obtained in the processing in S240 is empty or not.

When the T node ID set T is empty, the DB server 12 performs termination processing to end the search process. Otherwise, the DB server 12 proceeds to S244.

In step S244, the DB server 12 searches the T node ID table (Fig. 12) to create a node ID and node name set P.

That is, the DB server 12 retrieves from the ID table all the entries containing any of the T node identifiers Tm contained in the T node ID set T created in the processing in S240, and creates a set P of node names Nm and T node identifiers Tm contained in the entries (P = {(Tm, Nm) | T node identifier = Tm (all m) in ID table}).

In a step S246, the DB server 12 determines whether the set P of the T node identifiers and the T node names obtained in the processing in S244 is empty or not.

The DB server 12 performs termination processing to end the search process when the set P of the T node identifiers and the T node names is empty. Otherwise, the DB server 12 proceeds to processing in S202.

This set P is used for creating the response to the searcher in the processing in S202 shown in Fig. 15.

### DB Program 2

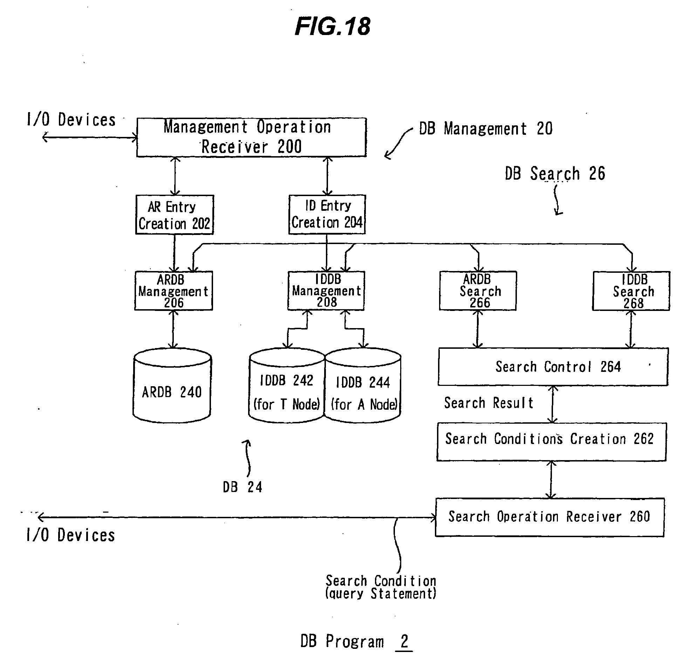

Fig. 18 shows a structure of a DB program 2 executed in the DB server 12 shown in Figs. 6 and 7.

In Fig. 18, for clear illustration purposes, lines showing the data flow are omitted if not required.

Referring to Fig. 18, the DB program 2 includes a DB management unit 20, a DB unit 24 and a DB search unit 26.

The DB management unit 20 includes a management operation receiver 200, an AR entry creation unit 202, an ID entry creation unit 204, an AR database management unit (ARDB management unit) 206, and an ID database management unit (IDDB management unit) 208.

The DB unit 24 includes an AR database (ARDB) 240, a T node ID database (IDDB) 242, and an A node IDDB 244.

The DB search unit 26 includes a search operation receiver 260, a search condition creation unit 262, a search control unit 264, an AR database search unit (ARDB search unit) 266, and an ID database search unit (IDDB search unit) 268.

For example, the DB program 2 is carried on and read from the recording medium 130 (Fig. 7) to the DB server 12, loaded into the memory 124, and executed under an operating system in the DB server 12 by specifically using hardware of the DB server 12 (similar for each program below).

With these components, the DB program 2 is used to create an AR database (Fig. 11) and an ID database (Figs. 12 and 13) described above with reference to Figs. 9 to 13, and perform data search using the databases (Figs. 14 to 17).

In the DB unit 24, the ARDB 240 stores the AR table shown in Fig. 11.

The IDDB 242 stores the T node ID table shown in Fig. 12.

The IDDB 244 stores the A node ID table shown in Fig. 13.

Fig. 18 shows a specific example in which the T node ID table and the A node ID table shown in Figs. 12 and 13 are stored in the IDDBs 242 and 244. However, the T node ID table and the A node ID table may be stored in the same database.

The T node ID table and the A node ID table do not need to be always created separately, but they may be integrally created in one database.

In the DB management unit 20, the management operation receiver 200 receives an operation of managing or modifying data stored in the AR table and the ID table from the input/output device 126 (Fig. 7) or from the PC 102 (Fig. 6) through the network 100, and outputs the operation to the ARDB management unit 206 and the IDDB management unit 208.

The management operation receiver 200 receives user's operation for designating an A node and a T node, an association between the A node and the T node, an association role R defined between the A node and the T node (links), identifies (ID) assigned to the A node and the T node, a node name (N) assigned to the T node, and an attribute (Fig. 9) defined for the T node, and outputs the operation to the AR entry creation unit 202 and the ID entry creation unit 204.

For example, the management operation receiver 200 displays a user interface (UI) image representing the A node and the T node, an association therebetween as shown in Fig. 14 in the input/output device 126, receives user's operation on the UI image, and accepts the designations.

The AR entry creation unit 202 creates entries of the AR table shown in Fig. 11 according to user's designations input from the management operation receiver 200, and outputs the entries to the ARDB management unit 206.

The ARDB management unit 206 adds the entries of the AR table input from the AR entry creation unit 202 to the AR table stored in the ARDB 240.

The ARDB management unit 206 modifies contents of the AR table stored in the ARDB 240 according to user's operation input from the management operation receiver 200.

The ARDB management unit 206 retrieves the entries of the AR table stored in the ARDB 240 according to search requests by the ARDB search unit, and outputs the entries to the ARDB search unit 266.

The ID entry creation unit 204 creates entries for the T node and A node ID tables shown in Figs. 12 and 13 according to user's designation input from the management operation receiver 200, and outputs the entries to the IDDB management unit 208.

The IDDB management unit 208 adds the entries of the T node ID table input from the ID entry creation unit 204 to the T node ID table stored in the IDDB 242.

The IDDB management unit 208 adds the entries of the A node ID table input from the ID entry creation unit 204 to the A node ID table stored in the IDDB 244.

The IDDB management unit 208 modifies contents of the ID table stored in the IDDBs 242 and 244 according to user's operation input from the management operation receiver 200.

The IDDB management unit 208 retrieves the entries of the ID table stored in the IDDBs 242 and 244 according to search requests by the IDDB search unit 268, and outputs the entries to the IDDB search unit 268.

In the DB search unit 26, the search operation receiver 260 receives searcher's operation for designating search conditions (Fig. 14, attribute of an optional T node (node type (NT)) may be further contained) used for the search process shown in Figs. 14 to 17 from the input/output device 126 (Fig. 7) or from the PC 102 (Fig. 6) through the network 100.

The search operation receiver 260 outputs the received operation to the search condition creation unit 262.

For example, when the search operation receiver 260 accepts search conditions in a form of a natural language query, the search condition creation unit 262 parses the query statement to take out words.

Next, the search condition creation unit 262 searches the AR table and the ID table stored in the ARDB 240 and the IDDBs 242 and 244 through the ARDB search unit 266, the IDDB search unit 268, the ARDB management unit 206 and the IDDB management unit 208, and extracts words used as search conditions.

Further, the search condition creation unit 262 combines the extracted words according to the structure of the query sentence, retrieves the search conditions in the form of (Rret, (ANT1, ANT2, ...), ((R1, N1), (R2, N2), ..., (Rn, Nn)) shown in Fig. 14, and outputs the search conditions to the search control unit 264.

It is to be noted that when the searcher directly designates the search conditions in the form of (Rret, (ANT1, ANT2, ...), ((R1, N1)), (R2, N2), ..., (Rn, Nn))) shown in Fig. 14, the search condition creation unit 262 may be omitted.

The search condition creation unit 262 may be a tool for assisting retrieval of the search conditions (Rret, (ANT1, ANT2, ...), ((R1, N1), (R2, N2), ..., (Rn, Nn))) by the searcher.

The search control unit 264 controls the ARDB search unit 266 and the IDDB search unit 268 according to the search conditions (Rret, (ANT1, ANT2, ...), ((R1, N1), (R2, N2), ..., (Rn, Nn))) input from the search condition creation unit 262 (search operation receiver 260) to perform searching in the ARDB 240 (AR table; Fig. 11) and the IDDBs 242, 244 (ID tables; Figs. 12 and 13) through the ARDB management unit 206 and the IDDB search unit 208 as shown in Figs. 15 to 17.

When a search result (set P; Fig. 17) is obtained by the searching based on the search conditions, the search control unit 264 creates a response based on the search result, displays the response in the input/output device 126 (Fig. 7), or displays the response in the input/output device 126 of the PC 102 through the network 100 (Fig. 6) to the searcher.

The ARDB search unit 266 searches the ARDB 240 (AR table; Fig. 11) through the ARDB management unit 206 under the control of the search control unit 264, and returns the search result to the search control unit 264.

The IDDB search unit 268 searches the IDDBs 242 and 244 (ID tables; Figs. 12 and 13) through the IDDB management unit 208 under the control of the search control unit 264, and returns the search result to the search control unit 264.

### Overall Operation

Hereinafter, an overall operation of the DB server 12 (DB program 2; Fig. 18) shown in Figs. 6 and 7 will be described with respect to specific examples.

### Creation of AR Table and ID Table

To begin with, a process of creating an AR table and ID tables by the DB management unit 20 of the DB program 2 will be described.

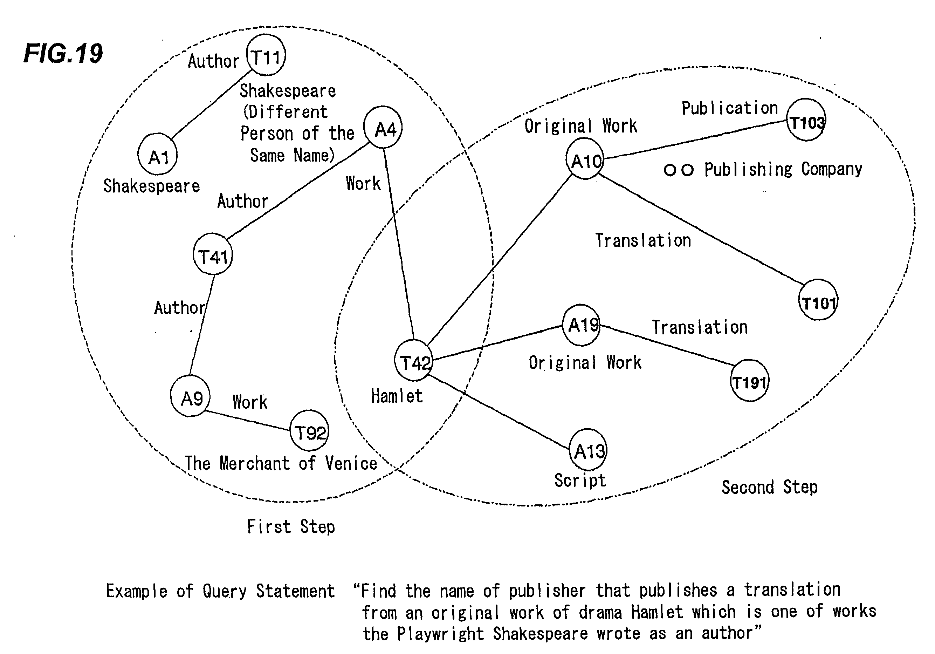

Fig. 19 shows data input to the DB server 12 (DB program 2; Fig. 18) shown in Figs. 6 and 7, and search conditions to perform searching for data contained therein.

For example, data associated as shown in Fig. 19 are input to the management operation receiver 200 of the DB program 2.

The data shown in Fig. 19 contain A nodes and T nodes associated as described below, and node names are assigned to the T nodes (however, attributes of the A nodes (node type (NT) and node names, and attributes of the T nodes (node type (NT)) are omitted from subsections (1) to (8) below and Fig. 19).

(1) "A node A1" and "T node T11" are associated together, an association role R "Author" is defined therebetween, and a node name "Shakespeare (different person of the same name)" is assigned to the "T node T11".

(2) "A node A9" and "T nodes T92 and T41" are associated together, association roles R "Work" and "Author" are defined therebetween, and node names "The Merchant of Venice" and "Shakespeare" are assigned to the "T nodes T92 and T42".

(3) "A node A4" and "T nodes T41 and T42" are associated together, association roles R "Author" and "Work" are defined therebetween, and a node name "Hamlet" is assigned to the "T node T42".

(4) "A node A13" and "T node T42" are associated together, and an association role R "Script" is defined therebetween.

(5) "A node A19" and "T node T42" are associated together, and an association role R "Original Work" is defined therebetween.

(6) "A node A10" and "T node T42" are associated together, and an association role R "Original Work" is defined therebetween.

(7) "A node A10" and "T nodes T103 and T101" are associated together, association roles R "Publication" and "Translation" are defined therebetween, and a node name "○○ Publishing Company" is assigned to the "T node T103".

(8) "A node A19" and "T node T191" are associated together, and an association role R "Translation" is defined therebetween.

The management operation receiver 200 receives input data, and outputs the data to the AR entry creation unit 202 and the ID entry creation unit 204.

The AR entry creation unit 202 creates each entry of the AR table from the data shown in Fig. 19, and outputs the entry to the ARDB management unit 206.

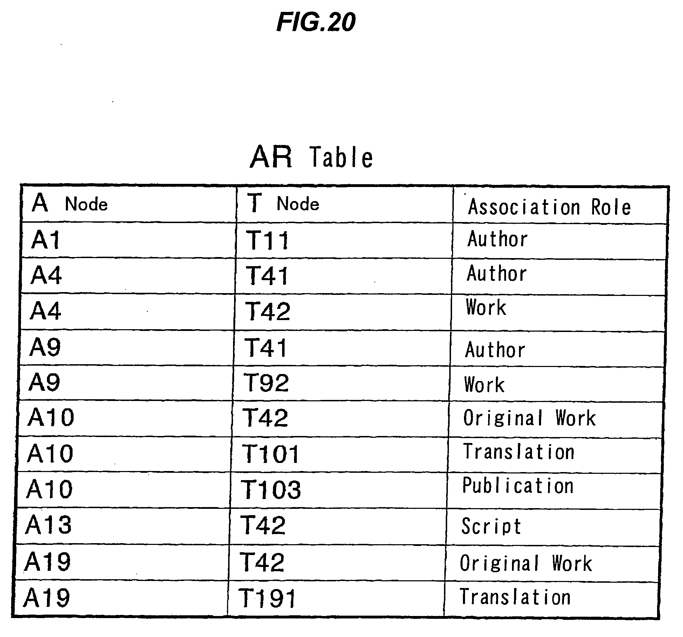

Fig. 20 shows an AR table created by the AR entry creation unit 202 (Fig. 18) and the ARDB management unit 206 and stored in the ARDB 240.

It is to be noted that in the drawings below, NULL indicates that there is no attribute (node type)/name (node name).

The ARDB management unit 206 sequentially adds the entries of the AR table input from the AR entry creation unit 202 to the AR table stored in the ARDB 240.

As a result of the processing by the AR entry creation unit 202 and the ARDB management unit 206, an AR table shown in Fig. 20 is created from data shown in Fig. 19, and stored in the ARDB 240.

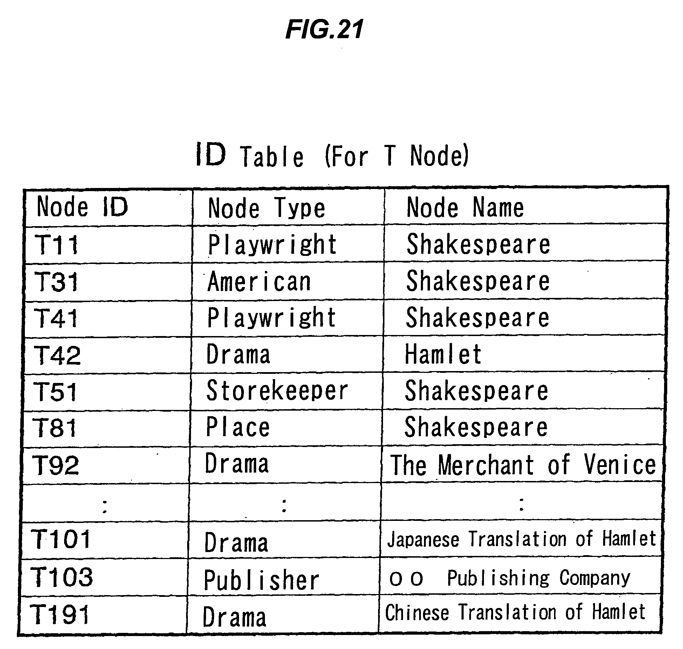

Fig. 21 shows a T node ID table created by the ID entry creation unit 204 (Fig. 18) and the IDDB management unit 208 and stored in the IDDB 242.

The ID entry creation unit 204 creates entries of the T node ID table from the data shown in Fig. 19, and outputs the entries to the IDDB management unit 208.

The IDDB management unit 208 sequentially adds the entries of the T node ID table input from the ID entry creation unit 204 to the ID table stored in the IDDB 242.

As a result of the processing by the ID entry creation unit 204 and the IDDB management unit 208, a T node ID table shown in Fig. 21 is created from the data shown in Fig. 19, and stored in the IDDB 242.

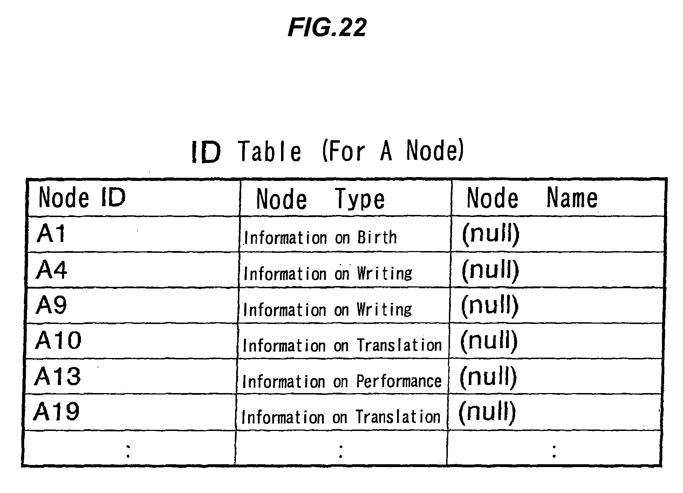

Fig. 22 shows an A node ID table created by the ID entry creation unit 204 (Fig. 18) and the IDDB management unit 208.

The ID entry creation unit 204 creates entries of the A node ID table from the data shown in Fig. 19, and outputs the entries to the IDDB management unit 208.

The IDDB management unit 208 sequentially adds the entries of the ID table input from the ID entry creation unit 204 to the A node IDDB table stored in the IDDB 244.

As a result of the processing by the ID entry creation unit 204 and the IDDB management unit 208, an A node ID table similar to that shown in Fig. 22 is created from the data shown in Fig. 19, and stored in the IDDB 244.

### Data Search

For example, when the searcher inputs a search condition "what is the name of the publisher that publishes a translation of the original work of drama Hamlet which is one of the works that the Playwright Shakespeare wrote as an author?" in a form of a query statement to the input/output device 126 (Fig. 7) of the DB server 12, the search condition creation unit 262 analyzes this query statement, and parses the query statement into two parts, first and second halves as shown in Fig. 19.

In the second half of the query statement "the works that the Playwright Shakespeare wrote as an author", to retrieve data regarding "Work", the search condition creating unit 262 sets an association role Rret of the T node Tret to be a search result as "Work".

The search condition creation unit 262 creates a search filter (R1 = "Author", N1 = "Shakespeare") from the second half "Shakespeare wrote as an author".

Further, the search condition creation unit 262 creates search conditions (Rret, (ANT1), ((R1, N1))) = (Work, (NULL), ((Author, Shakespeare))) corresponding to the second half of the query statement from the association role (Rret = "Work") of the T node Tret and the search filter (R1 = "Author", N1 = "Shakespeare").

In the first half of the query statement "what is the name of the publisher that publishes a translation of the original work of drama Hamlet?", to retrieve information regarding "Publisher that publishes", the search condition creating unit 262 sets an association role Rret of the T node Tret to be a search result as "Publication".

The search condition creation unit 262 creates a first search filter (R1 = "Original Work", N1 = "Hamlet") from the condition that an "original work" of drama "Hamlet" included in the first half, and creates a second search filter (R2 = "Translation", N2 = "NULL (not specified)") from "Translation" included in the first half.

Further, the search condition creation unit 262 creates search conditions (Rret, (ANT1), ((R1, N1), (R2, N2))) = (Publication, (NULL), ((Original Work, Hamlet), (Translation, NULL))) corresponding to the first half of the query statement from the association role (Rret = "Publication"), the first search filter ("R1 = "Original Work", N1 = "Hamlet") and the second filter (R2 = "Translation", N2 = "NULL").

Based on the search conditions created by the search condition creation unit 262, the search control unit 264 searches the ARDB 240 (AR table; Fig. 20) and the IDDB 242 (T node ID table; Fig. 21) through the ARDB search unit 266 and the IDDB search unit 268 to obtain search results as described below.

First, from the search conditions obtained from the second half of the query statement, the search control unit 264 performs the following.

(1) The search control unit 264 refers to the T node ID table stored in the IDDB 242 (Fig. 18) to retrieve all identifiers (ID) of T nodes whose node names are "Shakespeare", and obtains T11, T31, T41, T51, and T81 (Fig. 21) as a result of this processing.

(2) The search control unit 264 refers to the AR table (Fig. 20) stored in the ARDB 240 to retrieve all A node identifiers in which roles are "Author" and T node identifies match the T node identifiers obtained in the processing of (1), and obtains A1, A4 and A9 as a result of this processing.

(3) The search control unit 264 refers to the AR table to retrieve T node identifiers (ID; generally plural) corresponding to A nodes whose association roles R are "Work" among the A node identifiers obtained in the processing of (2), and obtains T42 and T92 as a result of this processing.

(4) The search control unit 264 refers to the ID table, and sets node names of identifiers corresponding to the T node identifiers obtained by the processing of (3) together with T node identifiers (ID) as search results.

That is, the search control unit 264 performs searching based on the search conditions (Work, (NULL), ((Author, Shakespeare))) obtained from the second half of the query statement by the processing of (1) to (4), and obtains search results (T42, Hamlet), and (T92, the Merchant of Venice).

Next, based on the search conditions obtained from the first half of the query statement and the search results corresponding to the second half, the search control unit 264 performs the following.

(5) From the search results (T42, Hamlet) and (T92, the Merchant of Venice) corresponding to the second half of the query statement, the search control unit 264 selects (T42, Hamlet) whose node name corresponds to the first search filter (original work, Hamlet), and obtains its node identifier (ID) T42.

(6) The search control unit 264 refers to the AR table to retrieve all the A node identifiers in which association roles are "Original Work" and T node identifiers match the node identifiers (ID) obtained by the processing of (5), and obtains A10 and A19 as a result.

(7) The search control unit 264 refers to the AR table to retrieve all identifiers whose roles are "Translation" among the A node identifiers obtained by the processing of (6), and obtains A10 and A19 as a result.

(8) The search control unit 264 refers to the AR table to retrieve T node identifiers corresponding to the A nodes whose roles are "Publication" among the A node identifiers obtained by the processing of (7), and obtains T103 as a result (when there are translations from a plurality of publishers, a plurality of T nodes are obtained).

(9) The search control unit 264 refers to the ID table, and sets node names of node IDs corresponding to the T node identifiers obtained by the processing of (8) together with node identifiers as search results (T103, oo Publishing Company).

That is, the search control unit 264 performs searching based on the search conditions (Publication, (NULL), ((Original Work, Hamlet), (Translation, NULL))) obtained from the first half of the query statement by the processing of (5) to (9), and obtains the search results (T013, oo Publishing Company).

(10) The search control unit 264 displays the search results in the input/output device 126 (Fig. 7) or the like to the searcher.

### Second Database System 3

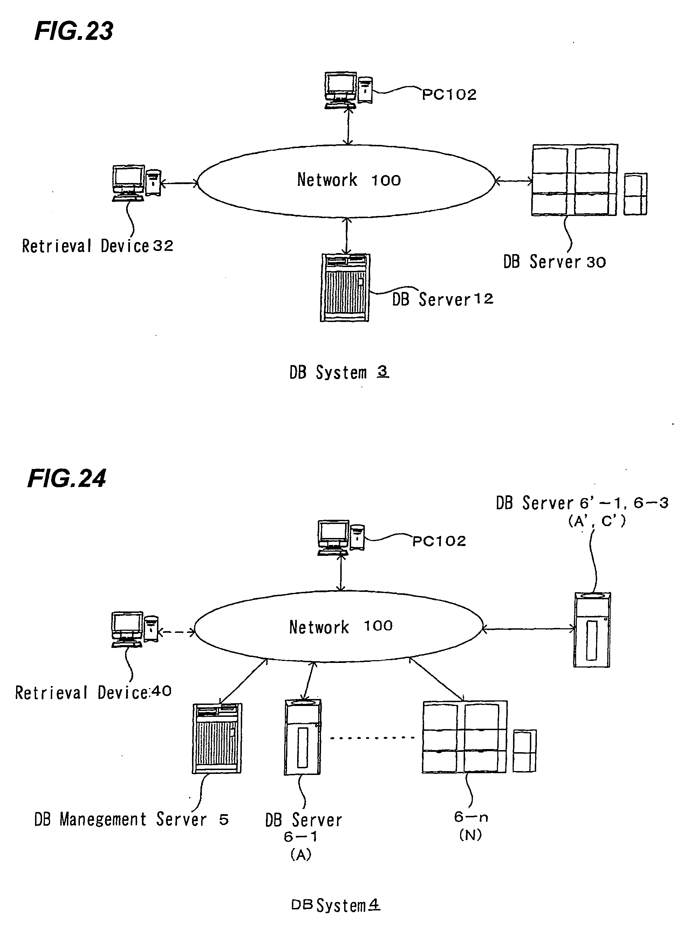

Fig. 23 shows a configuration of a second DB system 3 in accordance with an embodiment of the present invention.

Referring to Fig. 23, the second DB system 3 is configured by interconnecting the DB server 12, a DB server 30 for operating the DB management unit 20 and the DB unit 24 of the DB program 2 on hardware (Fig. 7) similar to the DB server 12, and a retrieval device 32 for operating the DB search unit 26 of the DB program 2 on hardware similar to the DB server 12 through a network 100.

Thus, the DB program 2 does not need to be always executed on one computer, but it may be distributed to a plurality of computers interconnected through a network to be executed.

### Third DB System 4

Hereinafter, the third DB system 4 of an embodiment of the present invention configured to store and search association information based on a directory structure will be described.

Fig. 24 shows a configuration of the third DB system 4.

Referring to Fig. 24, the DB system 4 is configured by interconnecting the PC 102, the retrieval device 40, the DB management server 5 and n DB servers 6-1 to 6-n through the network 100.

It is to be noted that when any one of a plurality of components, such as the DB servers 6-1 to 6-n, is not specified, it may be simply referred to as the DB server 6.

Hardware of the retrieval device 40, the DB management server 5 and the DB server 6 employs a configuration shown in Fig. 7.

When the DB server 6 includes a search function as in the case of the DB server 12 (Fig. 6) and the DB program 2 (Fig. 18) of the first DB system 1 shown in Fig. 6, the retrieval device 40 may be made unnecessary.

Furthermore, in the DB system 4, a replica server (mirror sever; DB server 6') may be provided corresponding to each DB server 6.

Hereinafter, the DB serves 6-1 to 6-n may be referred to as DB servers A to N.

Next, data representation in the DB system 4 of Fig. 24 will be described.

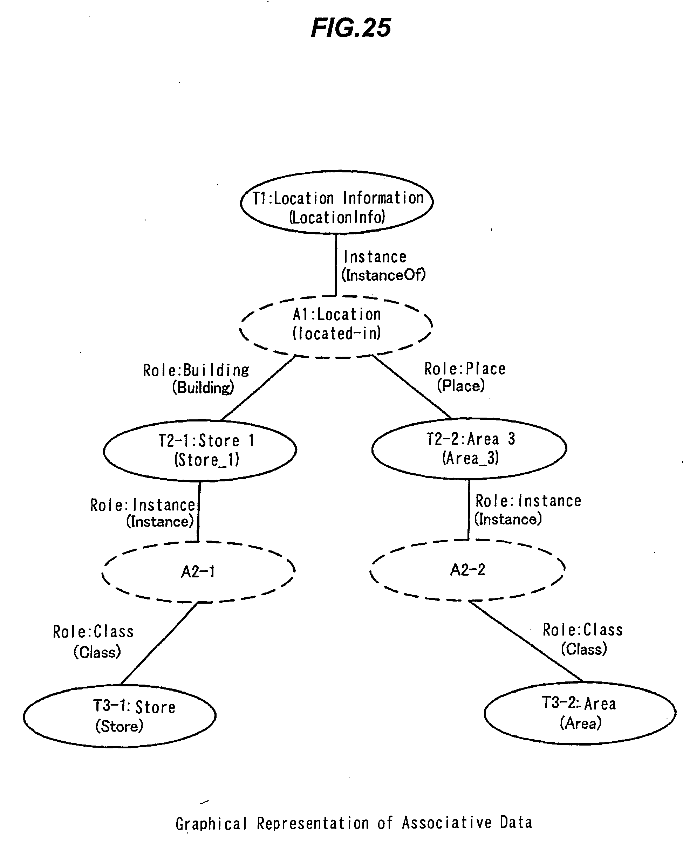

Fig. 25 shows graphical representation of data stored in the DB system 4 of Fig. 24.

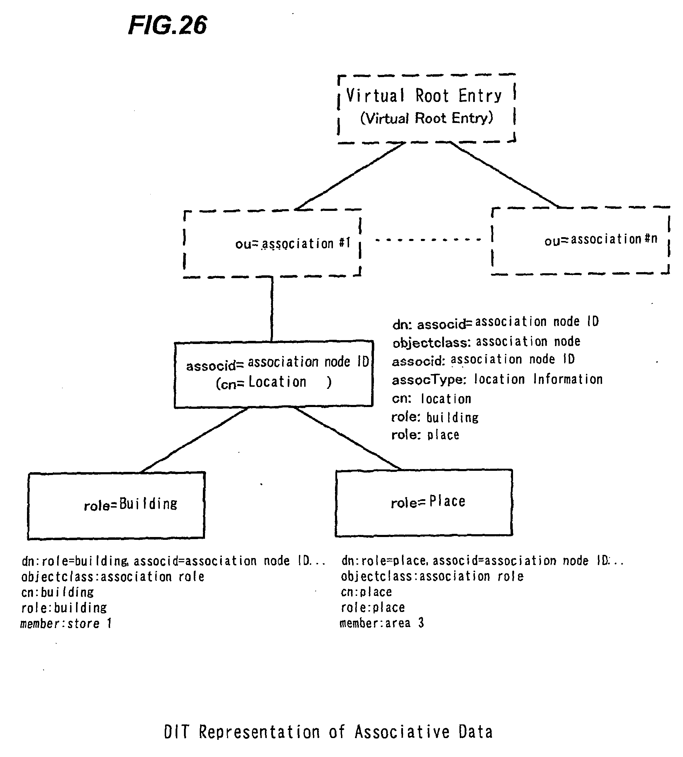

Fig. 26 shows directory information tree representation of the data shown in Fig. 25.

As described above with reference to Fig. 8, when node names or the like (node name or the like of A node is "data corresponding to association node", and node name or the like of T node is "data corresponding to topic node") are defined for A and T nodes, and an association role is defined between the A and T nodes, associative data associated by these nodes can be represented in a graphical form as shown in Fig. 25.

Fig. 25 shows a case in which "Location Information", "Store ", "Area" are defined as node names for nodes (T1, T3-1, and T3-2) for defining node types (classes) of T and A nodes, "Store 1" and "Area 3" are defined as node names for T nodes (T2-1 and T2-2), "Location" is defined as a node name for an A node (A1), and "Building" and "Place" are defined as association roles between the T and A nodes.

The A nodes A2-1 and A2-2 indicate a node for defining a node type (class) and a node as its instance (node corresponding to an entity). Thus, the nodes A2-1 and A2-2 are special nodes in that they enable association of T nodes not based on roles independently defined by a user according to a purpose but based on two roles of "Class" and "Instance" predefined by the system.

The associative data of the graphical representation shown in Fig. 25 can be represented in the form of a DIT (Directory Information Tree) which is a data model of LDAP (Lightweight Directory Access Protocol) as shown in Fig. 26.

That is, the associative data shown in Fig. 25 can be represented by entries corresponding to A nodes and entries corresponding to association roles and having T node data as attributes as indicated by solid lines in Fig. 26, which are disposed below a virtual root entry virtually provided as a top entry of each DB server 6 and entries indicating first, second, ... associations (associations #1, #2 ...) as indicated by dotted lines in Fig. 26 in accordance with DIT representation.

In other words, in the case shown in Fig. 26, entries corresponding to two roles of "Building" and "Place" are provided directly below an entry "Location" indicating associative data that a node type (assocType) is "Location Information", and members "Store 1" and "Area 3" for playing the roles are attributes of corresponding entries.

It is to be noted that in the DIT form shown in Fig. 26, "directory" is defined to structure data regarding various objects in the real world in an easy-to-understand form associated with the real world, to facilitate location of the data and to provide means for retrieving and updating the data.

"Entry" is defined to arrange/classify data regarding objects of the real world according to object classes and to represent the data as directory information, or defined as data stored in the directory.

"Directory information tree" is defined to represent, when entries (directory information) are managed in a hierarchical manner, the hierarchical relation in a tree structure.

In other words, squares in Fig. 26 correspond to entries, and it is a directory information tree (DIT) that represents a hierarchical relation thereof in a tree structure.

As described above, an entry is a set of data regarding an object, and data regarding this object is called "Attribute".

The attribute includes "Attribute Type" and one or more values, "Attribute Value(s)". Referring to Fig. 26, each entry structure is illustrated as entry representation in the LDAP in the form of "Attribute type:Attribute Value" as shown in Tables 21 to 23 below.

In the entry directly below "ou = association #1", each attribute of the entry is defined, for example, in a manner that an attribute value of an attribute type objectclass is an association node, an attribute value of an attribute type cn (common name) is location, ....

**Table 21**

| | |
|---|---|
| dn: | associd = Association node ID |
| objectclass: | Association node |
| associd: | Association node ID |
| assocType: | Location information |
| cn: | Location |
| role: | Building |
| role: | Place |

**Table 22**

| | |
|---|---|
| dn: | role = Building, associd = Association node ID |
| objectclass: | Association role |
| cn: | Building |
| role: | Building |
| member: | Store 1 |

**Table 23**

| | |
|---|---|
| dn: | role = Place, associd = Association node ID |
| objectclass: | Association role |
| cn: | Place |
| role: | Place |
| member: | Area 3 |

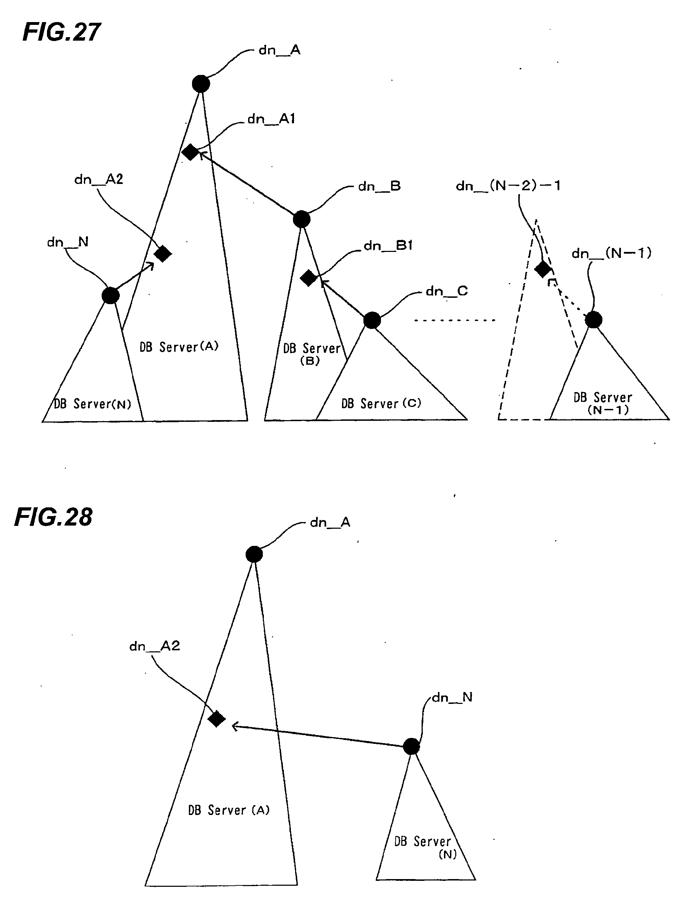

Fig. 27 shows a method of partitioning the associative data represented in the directory structure.

Fig. 28 shows a referring relation between an entry dn_A2 of a DB server 6-1 (A) and an entry dn_N of a DB server 6-n (N) shown in Fig. 27.

As shown in Fig. 27, the associative data represented in the DIT form can be partitioned according to the directory structure.

In the case shown in Fig. 27, the associative data is represented by the directory structure containing an entry dn_A and lower entries dn_A1 and dn_A2, the associative data corresponding to the directory of the entry dn_A1 or lower is partitioned corresponding to entries dn_B to dn_ (N-1), and the associative data corresponding to the directory of the entry dn_A2 or lower corresponds to the directory structure of the entry dn_N or lower (it is to be noted that in the example shown in Fig. 27, the directory structure having the entries dn_B to dn_N as top entries is a subtree, and the directory structure including such subtrees and the entry dn_A as a top entry is a directory tree).

For example, as shown in Fig. 28, the top entry dn_N of the DB server 6-n (N) shown in Fig. 27 is below the entry dn_A2 of the DB server 6-1 (A), and dn_N refers to dn_A2.

Accordingly, the associative data partitioned according to the directory tree can be partitioned and stored in the DB servers 6-1 to 6-n as shown in Fig. 27.

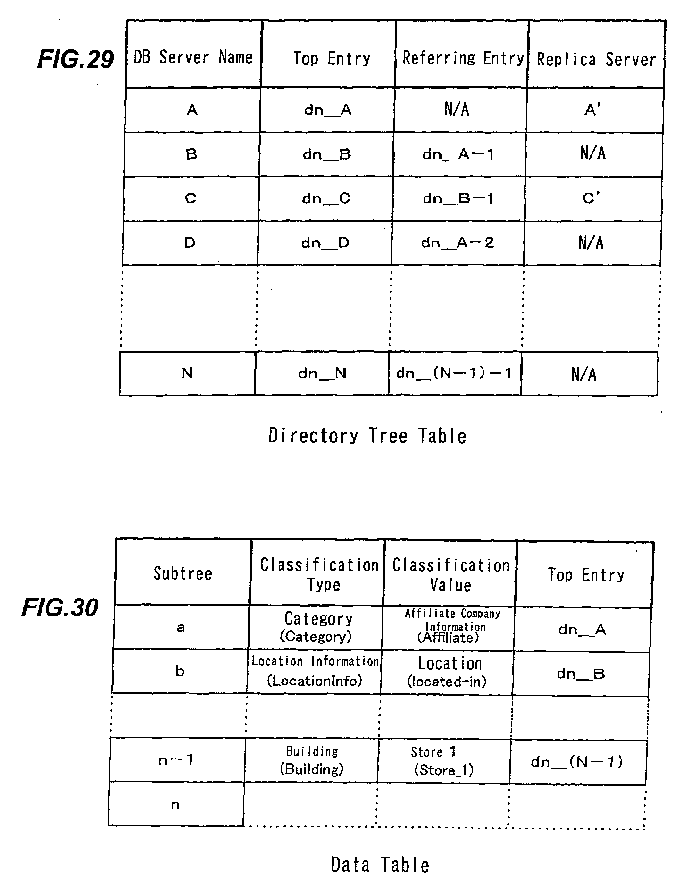

Fig. 29 shows a directory tree table used for managing the associative data partitioned and stored in the DB servers 6-1 to 6-n (DB servers A to N) as shown in Fig. 27.

To manage the associative data partitioned and stored in the DB servers 6-1 to 6-n (A to N) as shown in Figs. 27 and 28, a directory tree table similar to that shown in Fig. 29 is used.

Referring to Fig. 29, the directory tree table contains server names (A to N) of the DB servers 6-1 to 6-n, top entries (dn_A to dn_N; similar to virtual entries of Fig. 26) of the DB servers 6, entries (referring entries) referred to by the top entries of the DB servers 6, and device names (A', C' and the like) when there are replica servers (mirror servers (second database servers)) in the DB servers 6 in a corresponding manner.

Fig. 30 shows a data table for correlating the top entries dn_A to dn_N of the directory trees (or subtrees) stored in the DB servers 6-1 to 6-n shown in Figs. 27 and 28 with classification types/classification values (classification data) used for classifying the associative data stored in the directory trees (or subtrees).

As shown in Figs. 25 and 26, the associative data represented in the directory structure of the DIT form, partitioned according to the directory structure and stored in the DB servers 6-1 to 6-n (A to N) can be regarded as sets of data having common associations in the DB servers 6-1 to 6-n (A to N), respectively.

Accordingly, classification types and classification values indicating attributes or the like used for classifying the stored associative data can be defined for the directory trees (or subtrees) stored in the DB servers 6-1 to 6-n (A to N) shown in Figs. 27 and 28.

To manage the associative data stored in the DB servers 6-1 to 6-n (A to N), as shown in Fig. 30, a data table is used which contains classification types and classification values defined for subtrees a to n below the top entries dn_A to dn_N, the top entries (dn_A to dn_N), and the subtrees of the top entries or lower of the DB servers 6-1 to 6-n (A to N) of the DB servers 6-1 to 6-n (A to N) shown in Figs. 27 and 28 in a corresponding manner.

It is to be noted that "Classification Type" shown in Fig. 30 corresponds to an association type (node type of A node (Fig. 22); attribute).

"Classification Value" corresponds to an instance in the LDAP data model.

Specific examples of entries that can be top entries shown in Figs. 27 to 30 include, but are not limited to:
(1) a root entry of a subtree containing a specific classification value (instance) of a certain classification type (association type; node type of A node); and
(2) a root entry of a subtree containing associative data containing a certain specific classification value (instance).

Here, the case is described in which "Classification Type" corresponds to the association type and "Classification Value" corresponds to the instance thereof. However, this is only an example in which Fig. 30 is correlated to Figs. 27 and 28. "Classification Type" may not correspond to the association type, and "Classification Value" may not correspond to the instance thereof.

For example, the subtree a shown in Fig. 30 contains associative data of "Classification Type: Category, and Classification Value: Affiliate". This is an example in which "Classification Type" does not correspond to the association type, and "Classification Value" does not correspond to the instance thereof.

For example, "Location Information" shown as an entry classification type containing a top entry dn_B of the data table shown in Fig. 30 is an example of a classification type of the (1) "root entry of a subtree containing a specific classification value (instance) of a certain classification type (association type; node type of A node)", which contains a classification value "Location (located-in)" as one of the classification values.

This entry indicates that all the associative data having "Location (located-in)" as classification values are stored in the DB server 6-2 (B).

As other examples of classification values of the classification type "Location Information", a classification value "Adjacent (next-to)" and the like can be cited.

Alternatively, "Building" written as an entry classification type containing the top entry dn_(N-1) shown in Fig. 30 is an example of a classification type of the (2) "root entry of a subtree containing associative data containing a certain specific classification value (instance)", which includes a classification value "Store 1" as one of the classification values.

This entry indicates that all the associative data having "Store 1" as classification values are stored in the DB server 6-(n-1) (N-1).

### Creation and Search of Associative Data

Hereinafter, creation of the associative data represented in the directory structure of the DIT form described above with reference to Figs. 25 to 30, and searching for the created associative data will be described.

### First DB Management Program 50

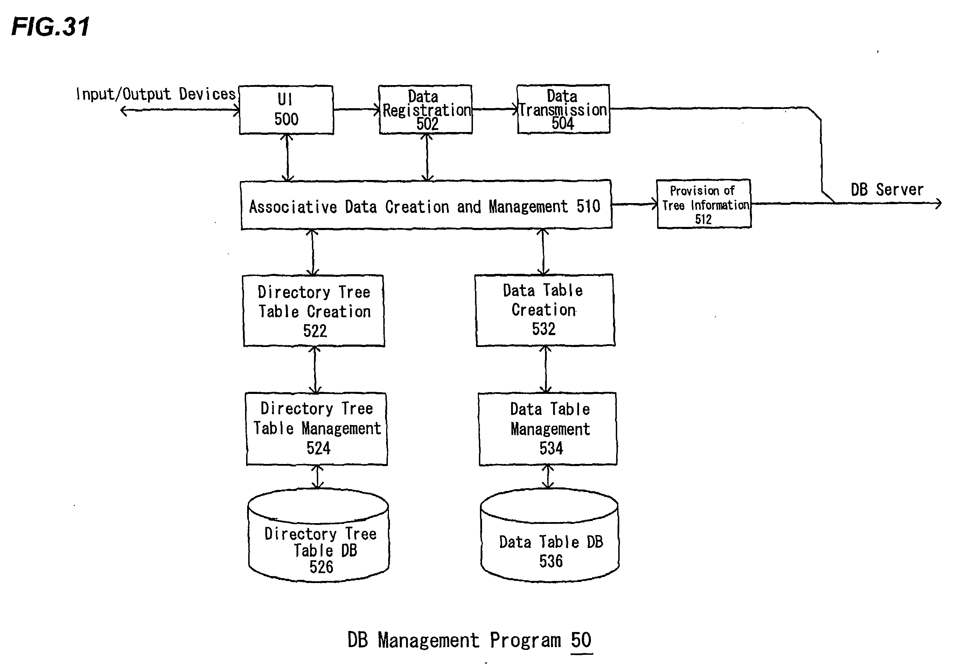

Fig. 31 shows a structure of a first DB management program 50 run on the DB management server 5 shown in Fig. 24.

Referring to Fig. 31, the DB management program 50 includes a user interface (UI) unit 500, a data registration unit 502, a data transmission unit 504, an associative data creation and management unit 510 (directory tree creating means and data correlation means), a tree information provision unit 512, a directory tree table creation unit 522 (top entry correlating means), a directory tree table management unit 524, a direction tree table DB 526, a data table creation unit 532 (classification data correlating means), a data table management unit 534, and a data table DB 536.

With these components, the DB management program 50 creates the associative data represented in the directory structure of the DIT form as shown in Fig. 26.

The DB management program 50 partitions and stores the created associative data in the DB servers 6-1 to 6-n as shown in Figs. 27 and 28, and manages the associative data by using the directory tree table and the data table shown in Figs. 29 and 30.

Additionally, the DB management program 50 properly provides data (tree data) contained in the directory tree table and the data table, which is necessary for searching to the retrieval device 40 (Fig. 24).

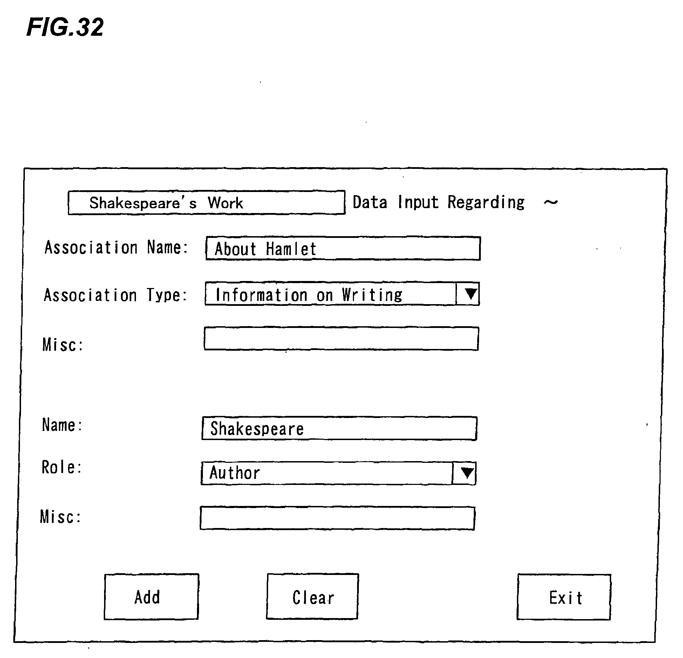

Fig. 32 shows a GUI image which the DB management program 50 shown in Fig. 31 displays to the input/output device 126 (Fig. 7) of the DB management server 5.

In the DB management program 50, the UI unit 500 provides a GUI environment for the user of the DB management server 5 or the PC 102, and displays a GUI image similar to that shown in Fig. 32 to the input/output device 126 (Fig. 7).

The UI unit 500 accepts user's operation of registering, managing or modifying the associative data on the displayed GUI image, outputs the operation to the components of the DB management program 50, such as the data registration unit 502 and the associative data creation and management unit 510, and controls the operations thereof.

Additionally, the UI unit 500 displays/outputs the data created by each component of the DB management program 50 to the input/output device 126.

It is to be noted that the UI unit 500 may be installed in the DB management server 5 or the PC 102, and the functions may be provided to the user in the PC 102.

The associative data creation and management unit 510 controls operations of the directory tree table creation unit 522 and the data table creation unit 532 or the like, creates associative data represented in the directory structure of the DIT form as shown in Fig. 26 from data indicating T and A nodes and association attributes input from the UI unit 500, and manages the created associative data by using the directory tree table and the data table shown in Figs. 29 and 30.

In response to a request, the associative data creation and management unit 510 outputs data (tree data) contained in the directory tree table and the data table and used for retrieval by the retrieval device 40 to the tree data provision unit 512.

Additionally, according to user's operation, the associative data creation and management unit 510 partitions the associative data represented in the directory structure of the DIT form as shown in Figs. 27 and 28, and outputs the associative data to the data registration unit 502.

The data registration unit 502 transmits the associative data input from the associative data creation and management unit 510 to the DB servers 6-1 to 6-n through the data transmission unit 504, and requests registration of the associative data.

The tree information provision unit 512 provides the tree data input from the associative data creation and management unit 510 in response to a request from the retrieval device 40.

The directory tree table creation unit 522 creates a directory tree table shown in Fig. 29 under control of the associative data creation and management unit 510, and outputs the table to the directory tree table management unit 524.

The directory tree table management unit 524 stores the directory tree table input from the directory tree table creation unit 522 in the directory tree table DB 526.

In response to a request, the directory tree table DB 526 outputs the directory tree table stored in the directory tree table DB 526 to the associative data creation and management unit 510.

It is to be noted that while the DB management unit 20 performs the processing of creating the AR table and the ID table from the associative data in the DB program 2 shown in Fig. 18, in the DB management program 50 shown in Fig. 31, the associative data creation and management unit 510 creates the associative data of the directory structure (Figs. 21 and 22), and the DB server 6 receives the created associative data of the directory structure through the associative data creation and management unit 510 and the data transmission unit 504 and stores/manages the associative data.

The data table creation unit 532 creates a data table shown in Fig. 30 under control of the associative data creation and management unit 510, and outputs the data table to the data table management unit 534.

The data table management unit 534 stores the data table input from the data table creation unit 532 in the data table DB 536.

Additionally, in response to a request, the data table management unit 534 outputs the data table stored in the data table DB 536 to the associative data creation and management unit 510.

Hereinafter, an overall process of the DB management program 50 will be described.

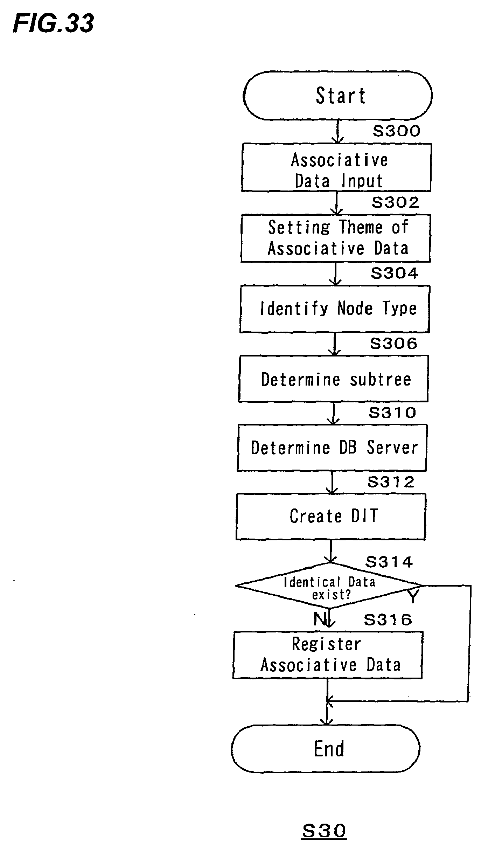

Fig. 33 is a flowchart showing a registration process S30 of the associative data by use of the DB management program 50 shown in Fig. 31.

Referring to Fig. 33, in a step S300, the UI unit 500 of the DB management program 50 or the PC 102 displays a GUI image shown in Fig. 32 to the input/output device 126.

The user performs an operation on the displayed GUI image, and inputs data regarding newly added associative data to each field.

In a step S302, the associative data creation and management unit 510 identifies an association (theme; e.g., "Work of Shakespeare") based on the associative data input during the processing of the step S300.

In a step S304, the associative data creation and management unit 510 identifies a node type (classification type; e.g., "Authorship Information") of the associative data, and sets this type as an entry attribute.

In a step S306, the associative data creation and management unit 510 refers to the data table through the data table management unit 534, and determines a subtree into which the created entry is classified based on the theme and the node type identified in the processing of steps S302 and S304.

In a step S310, the associative data creation and management unit 510 refers to the directory tree table through the directory tree table management unit 524, and determines a DB server 6 in which the subtree obtained in the processing of the step S306 is stored.

In a step S312, the associative data creation and management unit 510 creates a corresponding entry based on the data regarding the associative data input through the UI unit 500.

In a step S314, the associative data creation and management unit 510 transmits the added associative data entry to the DB server 6 determined in the processing of the step S310 through the data registration unit 502 and the data transmission unit 504. The DB server 6 judges whether the received associative data entry has been stored or not.

It is to be noted that the associative data creation and management unit 510 uses the data in the DB server 6 in pre-processing upon storage in the DB server 6.

Each entry dn (distinguished name) is allocated to this data, and all the entries in the DIT can be uniquely identified by the dn. Accordingly, the presence of an identical entry can be judged.

The DB management program 50 ends the process upon reception of a result that the added associative data entry has been stored from the DB server 6, or proceeds to processing of a step S316 otherwise.

In the step S316, the associative data creation and management unit 510 registers the added associative data entry in the determined DB server 6.

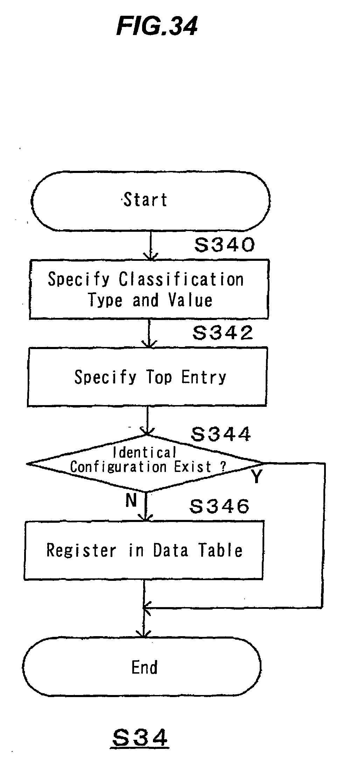

Fig. 34 is a flowchart showing an update process S34 of the data table (Fig. 30) by the DB management program 50 shown in Fig. 31.

In a step S340, the user operates the DB management server 5 (Fig. 24) or the PC 102 to specify a subtree to be changed, and sets a classification type/classification value of the specified subtree.

The associative data creation and management unit 510 receives the operations through the UI unit 500.

In a step S342, the user operates the DB management server 5 (Fig. 24) or the PC 102 to set a top entry of the specified subtree.

The associative data creation and management unit 510 receives the operation through the UI unit 500.

In a step S344, the associative data creation and management unit 510 judges whether the classification type, the classification value and the top entry indicated by the operations received in the processing in S340 and S342 have all been set for the specified subtree or not.

The associative data creation and management unit 510 reads the data table through the data table management unit 534, and ends the process when all data have been set for the specified subtree, or proceeds to processing in S346 otherwise.

In the step S346, the associative data creation and management unit 510 outputs the received setting values (specified subtree, classification type, classification value and top entry) to the data table management unit 534.

The data table management unit 534 sets the setting values input from the associative data creation and management unit 510 in the data table, and stores them in the data table DB 536.

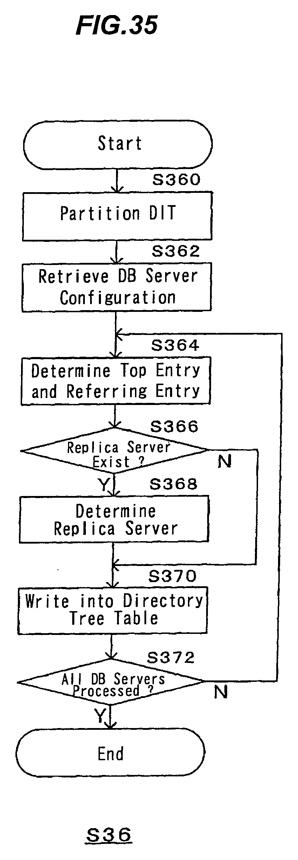

Fig. 35 is a flowchart showing an update process S36 of the directory tree table (Fig. 29) by the DB management program 50 shown in Fig. 31.

Referring to Fig. 35, in a step S360, the UI unit 500 receives user's operation of partitioning the directory information tree from the DB management server 5.

In a step S362, the associative data creation and management unit 510 obtains the directory tree table (Fig. 29) from the directory tree table management unit 524, retrieves data indicating the configuration and the directory structure of the DB servers 6, and displays the data to the user.

In a step S364, the UI unit 500 receives setting of the top entry and the referring entry of the subtree after the partitioning in accordance with user's operation on the displayed directory structure.

In a step S366, the associative data creation and management unit 510 judges whether or not to set a replica server for the DB server 6 in which the partitioned subtree is stored based on user's operation of partitioning the directory information tree.

The DB management program 50 proceeds to processing in S368 when the replica server is set, or proceeds to processing in S370 otherwise.

In the step S368, the associative data creation and management unit 510 determines the replica server when the setting of the replica server is configured in the processing in S366.

In the step S370, when the top entry and the referring entry of the subtree after the partitioning and the replica server are set, the associative data creation and management unit 510 outputs a name of the replica server to the directory tree table management unit 524.

The directory tree table management unit 524 reflects the data input from the associative data creation and management unit 510 on writing in a designated part of the directory tree table DB 526.

In a step S372, the associative data creation and management unit 510 judges whether the update process of the direction tree table has been completed or not for all the DB servers 6.

The DB management program 50 returns to the processing in S364 when the update process has not been completed for all the DB servers 6.

Next, an overall process of the DB management server 5 will be described.

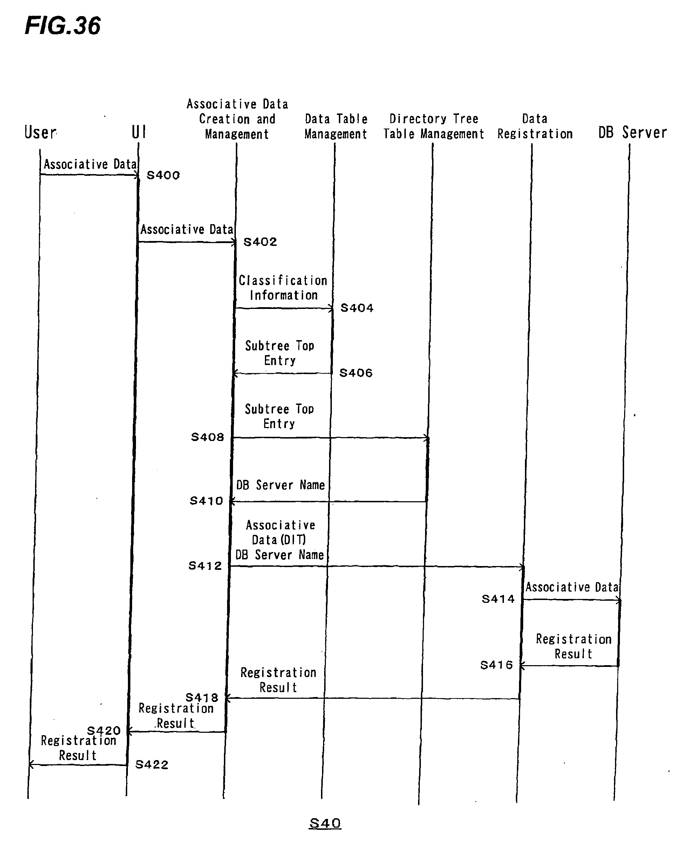

Fig. 36 is a sequence diagram showing an overall operation S40 of the DB management program 50 shown in Fig. 31.

Referring to Fig. 36, in a step S400, the user inputs associative data to the UI unit 500 of the DB management program 50.

In a step S402, the UI unit 500 outputs the data regarding the input associative data to the associative data creation and management unit 510.

The associative data creation and management unit 510 receives the data.

In a step S404, the associative data creation and management unit 510 outputs classification data (classification type/classification value) used for classifying the associative data such as a theme and a node type among the data regarding the received associative data to the data table management unit 534.

In a step S406, the data table management unit 534 receives the data used for classifying the associative data from the associative data creation and management unit 510, and returns top entries of corresponding subtrees to the associative data creation and management unit 510.

The associative data creation and management unit 510 receives the top entries of the subtrees.

It is to be noted that when there are no corresponding subtrees, the top entry (i.e., root entry) of the DB server 6-1 is returned to the associative data creation and management unit 510 in place of the top entries of the corresponding subtrees.

In the processing in S406, data corresponding to the classification type and the classification value stored in the data table (Fig. 30) are used, and the data regarding the associative data input through the GUI image shown in Fig. 32 can all be used by the associative data creation and management unit 510.

That is, the associative data creation and management unit 510 supplies a combination of a node type and a specific instance to the data table management unit 534, whereby the data table management unit 534 can obtain the top entries of the subtrees corresponding to the data used for classifying the associative data. Additionally, for example, "Category" as a classification type and "Work of Shakespeare" as a classification value can be supplied to the data table management unit 534.

In a step S408, the associative data creation and management unit 510 outputs the top entries of the subtrees obtained in the processing in S406 to the directory tree table management unit 524.

The directory tree table management unit 524 receives the top entries of the subtrees.

In a step S410, the directory tree table management unit 524 searches the directory tree table DB 526 by using the received top entries of the subtrees, and determines DB servers 6 for storing the subtrees. Data indicating the determined DB servers 6 are returned to the associative data creation and management unit 510.

In a step S412, the associative data creation and management unit 510 outputs the associative data of the DIT form and the data indicating the determined DB servers 6 to the data registration unit 502.

The data registration unit 502 transfers the input associative data to the determined DB servers 6 and registers the data.

In steps S416 to S422, a registration result (normal or abnormal end) is notified from the data registration unit 502 to the UI unit 500, and displayed to the user.

### Second DB program 60

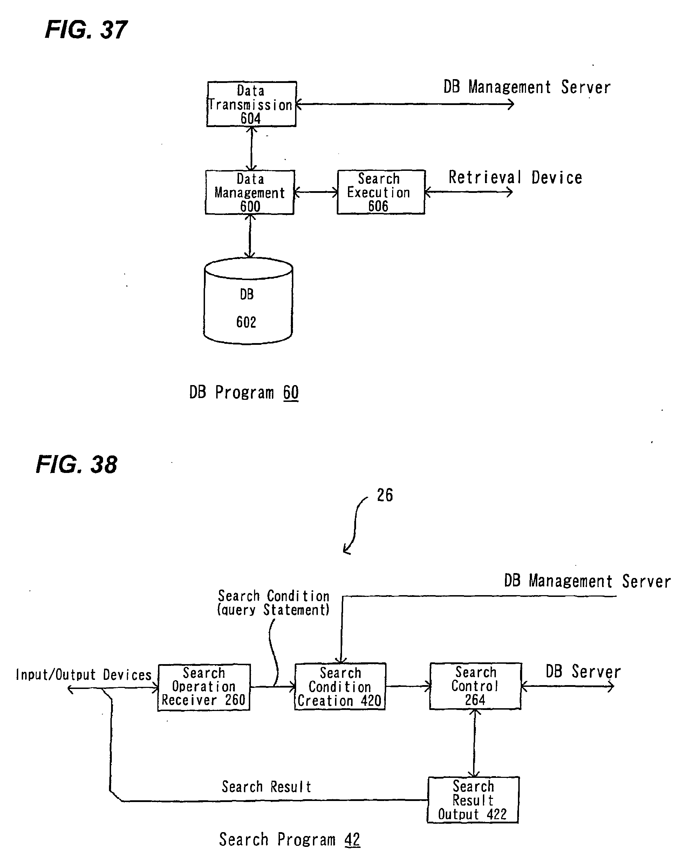

Fig. 37 shows a second DB program 60 run on each DB server 6 shown in Fig. 24.

Referring to Fig. 37, the DB program 60 includes a data management unit 600, a information DB 602, a data transmission unit 604, and a search execution unit 606.

With these components, the DB program 60 receives registration of associative data represented in a directory structure of a DIT form and properly partitioned from the DB management server 5 (DB management program 50; Fig. 31), and stores the data.

The DB program 60 provides the registered associative data in response to the search request from the retrieval device 40.

The DB program 60 modifies the registered associative data under control of the DB management server 5.

In the DB program 60, the data transmission unit 604 receives the associative data, a registration request thereof and a modification request thereof from the DB management server 5, and outputs them to the data management unit 600.

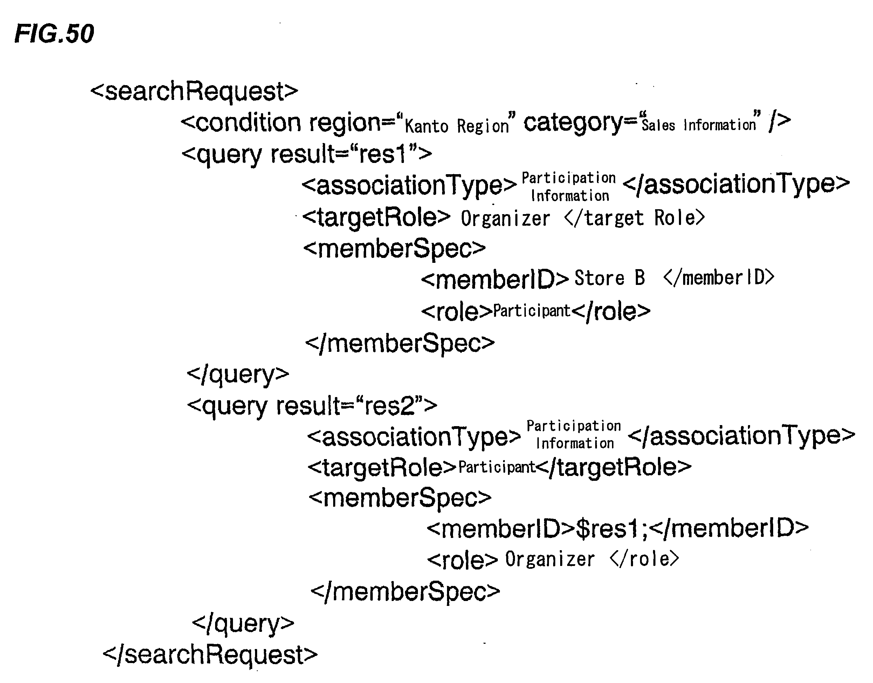

The search execution unit 606 searches for the associative data with the data management unit 600 in accordance with search conditions (LDAP operation created by a search condition creation unit 420 of a search program 42 described later and shown in Fig. 38, and LDAP operation shown in Fig. 50) from the retrieval device 40.

Further, the search execution unit 606 returns the associative data obtained from the data management unit 600 as a search result to the retrieval device 40 that sent the search request.

The data management unit 600 stores the associative data (Figs. 26 to 28) sent from the DB management server 5 or the other DB server 6 in response to the registration request and the modification request from the DB management server 5 in the information DB 602.

Additionally, in response to retrieval by the retrieval device 40, the data management unit 600 reads the associative data from the information DB 602 and outputs the data to the search execution unit 606.

### First Search Program 42

Fig. 38 shows a search program 42 run on the retrieval device 40 shown in Fig. 24.

Referring to Fig. 38, the search program 42 has a structure in which a search condition creation unit 420 and a search result output unit 422 are added to the DB search unit 26 shown in Fig. 18.

With these components, the search program 42 performs search processing for the DB server 6, and displays associative data obtained as a result of the search to the searcher.

In the search program 42, a search operation receiver 260 receives a search operation which the searcher inputs to the input/output device 126 (Fig. 7) or the like of the retrieval device 40, and outputs the operation to the search condition creation unit 420.

The search condition creation unit 420 (directory tree search means) analyzes contents of the search operation input from the search operation receiver 260, then obtains tree data matching the contents of the search operation (data necessary for search in the directory tree table and the data table (Figs. 29 and 30) from the DB management server 5, creates search conditions matching the search operation and the tree data, and outputs the search conditions to the search control unit 264.

Specifically, in accordance with a classification type and a classification value of associative data obtained by analyzing the contents of the search operations, the search condition creation unit 420 receives the data table (Fig. 30) from the DB management server 5 to search for the contents, and obtains a top entry of the associative data matching the contents of the search operation (however, when there is not such a top entry, the search condition creation unit 420 uses the top entry dn_A of the DB server 6-1 as a top entry of the associative data matching the contents of the search operation).

Then, the search condition creation unit 420 searches for the contents in the directory tree table (Fig. 29) received from the DB management server 5, and determines a DB server 6 that stores the top entry obtained by searching the data table.

Further, the search condition creation unit 420 creates a command and a parameter of an LDAP operation to be executed by the DB server 6 by using the contents of the search operation and attributes (classification type and value) used for classifying the associative data obtained from the data table, and outputs the command and the parameter as search conditions to the search control unit 264.

The search control unit 264 (data search means) outputs the search conditions input from the search condition creation unit 420 to the DB server 6, and controls the search for the associative data.

The search result output unit 422 displays/outputs the associative data returned as a result of the search from the DB server 6 to the input/output device 126 (Fig. 7) of the retrieval device 40, and to the searcher.

Hereinafter, an overall process of the search program 42 will be described.

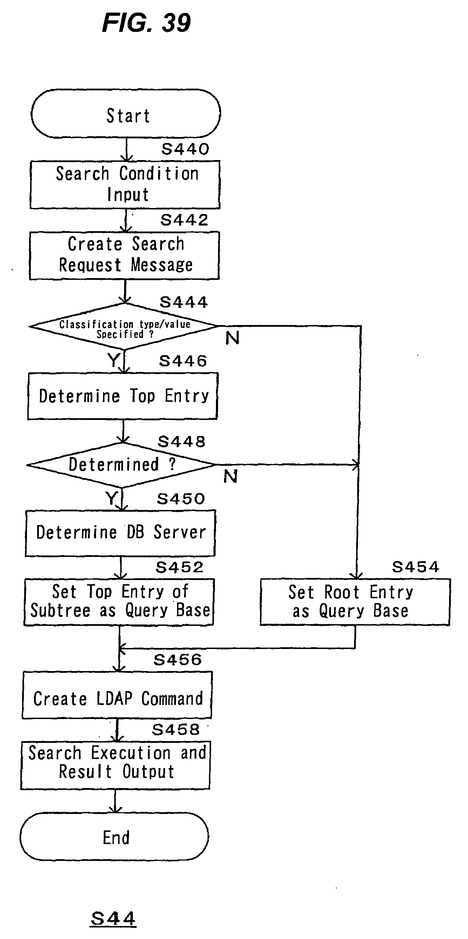

Fig. 39 is a flowchart showing a search process S44 by the search program 42 shown in Fig. 38.

Referring to Fig. 39, in a step S440, the search operation receiver 260 receives search conditions from the user.

In a step S442, the search operation receiver 260 creates a search request message (described later with reference to Fig. 50), and outputs the message to the search condition creation unit 420.

In a step S444, the search condition creation unit 420 judges whether a classification type and a classification value are specified or not in the search request message.

The search condition creation unit 420 proceeds to processing in S446 when the classification type and the classification value are specified, or proceeds to processing in S454 otherwise.

In a step S446, the search condition creation unit 420 sends the classification type and the classification value to the DB management server 5, and determines a top entry of a corresponding subtree.

In a step S448, the search condition creation unit 420 judges whether the subtree has been determined or not in the processing in S446.

The search program 42 proceeds to processing in S450 when the subtree has been determined, or proceeds to processing in S454 otherwise.

In the step S450, the search condition creation unit 420 sends the determined top entry to the DB management server 5, and determines a DB server 6 in which a subtree corresponding to the top entry is stored.

In a step S452, the search condition creation unit 420 sets the determined top entry of the subtree as a search start entry (query base).

In the step S454, the search condition creation unit 420 receives a directory tree table from the DB management server 5, refers to the received directory tree table to set the top entry (root entry) as a query base through the subtrees stored in all the DB servers, and determines a DB server 6 that stores the root entry.

In a step S456, the search control unit 264 obtains data regarding the search request, the query base and the like from the search condition creation unit 420, and creates an LDAP operation command for the determined DB server 6.

In a step S458, the search control unit 264 executes search processing on the DB server 6 by using the created LDAP operation command, and receives and outputs a result thereof.

Hereinafter, the overall process of the search program 42 will be further described in connection with the process of the DB management program 50.

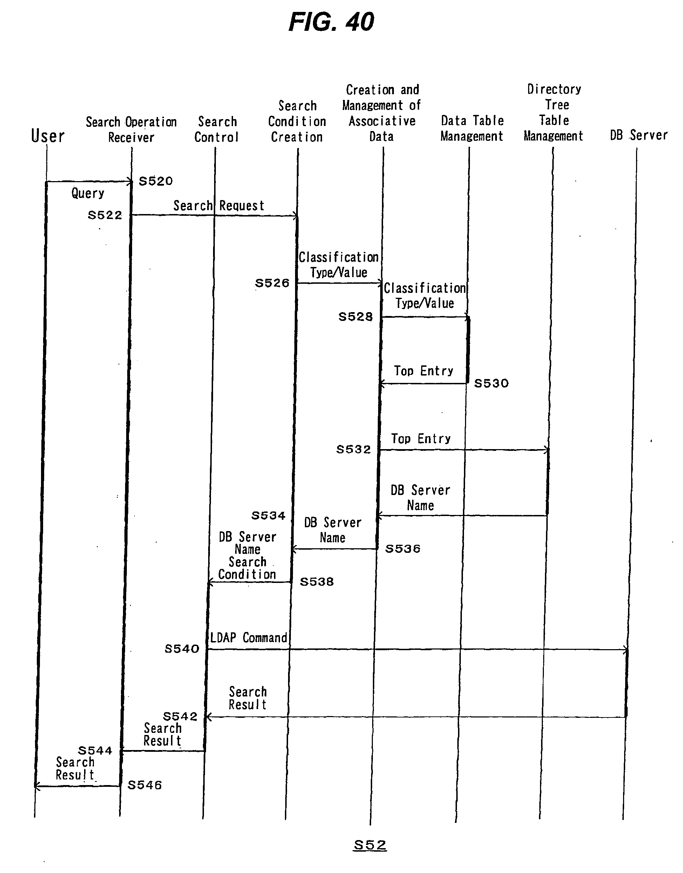

Fig. 40 is a sequence diagram showing the overall process S52 of the DB management program 50 shown in Fig. 31 and the search program 42 shown in Fig. 38.

Referring to Fig. 40, in a step S520, the search operation receiver 260 of the search program 42 receives user's query operation.

In a step S522, the search operation receiver 260 transmits a search request message to the search condition creation unit 420.

In a step S526, the search condition creation unit 420 transmits a classification type and classification value contained in the search request message to the associative data creation and management unit 510 of the DB management program 50.

It is to be noted that the processing in S526 corresponds to the processing of transmitting the classification type/value to the DB management server 5 from the search condition creation unit 420 in the step S446 shown in Fig. 39.

In a step S528, the associative data creation and management unit 510 outputs the classification type/value received from the search condition creation unit 420 to the data table management unit 534.

In a step S530, the data table management unit 534 refers to the data table by using the classification type/value input from the associative data creation and management unit 510 to obtain a top entry corresponding to the input classification type/value.

The data table management unit 534 returns the obtained top entry to the associative data creation and management unit 510.

In a step S532, the associative data creation and management unit 510 outputs the top entry obtained in the processing in S530 to the directory tree table management unit 524.

In steps S534 and S536, the directory tree table management unit 524 returns the DB server 6 corresponding to the input top entry through the associative data creation and management unit 510 to the search condition creation unit 420.

In a step S538, the search condition creation unit 420 creates search conditions, and outputs the search conditions together with a name of the determined DB server 6 or the like to the search control unit 264.

In a step S540, the search control unit 264 creates an LDAP command, and accesses the determined DB server 6 to perform search.

In steps S542 to S546, a search result is returned from the DB server 6 and displayed to the user.

### Associative Data and Search Example (1) in DB System 4

Hereinafter, how associative data are registered and the registered associative data are retrieved in the DB system 4 will be described by taking a specific example.

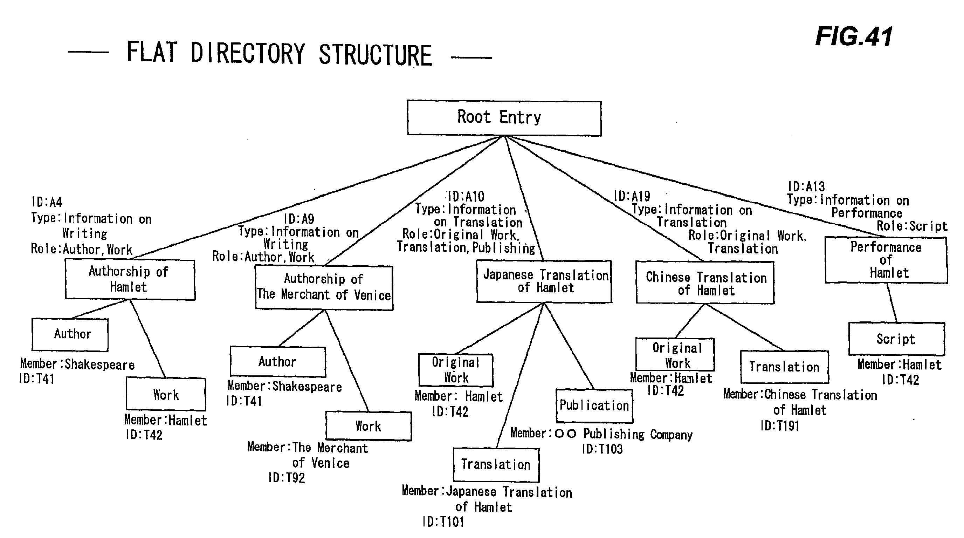

Fig. 41 is a first diagram of an associative data example of a directory structure registered in the DB server 6 of the DB system 4 shown in Fig. 24, showing a flat directory structure.

In the directory structure shown in Fig. 41, the entries (ou = associations #1 to #n) indicated by dotted lines shown in Fig. 26 are not present, but all the associative data are located directly below a root entry.

This directory structure is referred to as a "flat directory structure".

The user performs an operation of sequentially registering associative data with respect to the GUI image (Fig. 32) displayed in the input/output device 126 (Fig. 7) of the DB management server 5 (Fig. 24) or the PC 102.

With this operation, the following data are input to the DB management server 5 in the following form
(association name, association type, name, role):
(authorship of Hamlet, authorship information, Shakespeare, author),
(authorship of Hamlet, authorship information, Hamlet, work),
(authorship of the Merchant of Venice, authorship information, Shakespeare, author),
(authorship of the Merchant of Venice, authorship information, the Merchant of Venice, work),
(Japanese translation of Hamlet, translation information, Hamlet, original work),
(Japanese translation of Hamlet, translation information, Japanese translation of Hamlet, translation),
(Japanese translation of Hamlet, translation information, publication, oo Publishing Company),

As a result of the registration operation by the user, associative data are generated in a directory structure of a DIT form similar to that shown in Fig. 41.

It is to be noted that in the directory structure of the DIT form shown in Fig. 41, the partitioning of the directory information tree into subtrees is not taken into consideration, and a classification type and a classification value can be defined for the entire directory information tree, but a flat directory structure can be partitioned into subtrees if necessary.

In this directory structure, entries are disposed below the virtual root entry corresponding to five A nodes ("Authorship of Hamlet", "Authorship of the Merchant of Venice", "Japanese Translation of Hamlet", "Chinese Translation of Hamlet", and "Performance of Hamlet"; A4, A9, A10, A19, and A13 (see Fig. 19 etc. for reference)). For the virtual root entry, a classification type and a classification value are defined, and the defined classification type and value are managed based on the data table shown in Fig. 30 in the DB management server 5.

Additionally, in the directory structure, entries corresponding to association roles of the A nodes are disposed below the entries corresponding to the A nodes, and data regarding T nodes (T41, T42, T92, T101, T103, and T191; see Fig. 19) which play respective roles are set as entry attributes.

The associative data shown in Fig. 41 are all stored in one DB server 6-1 (Fig. 24). Alternatively, the associative data are partitioned based on each of top entries, stored in the five DB servers 6-1 to 6-n and made targets for search by the search program 42.

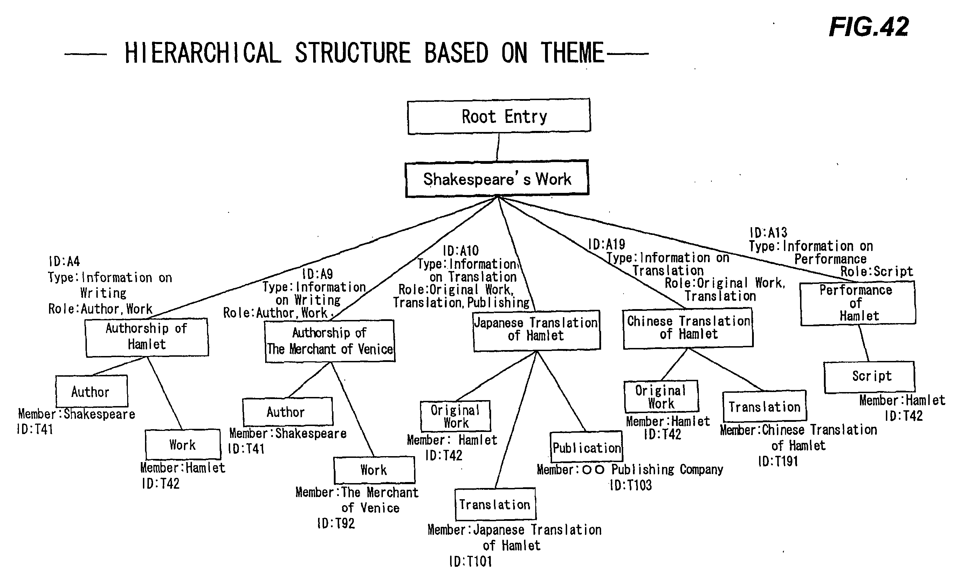

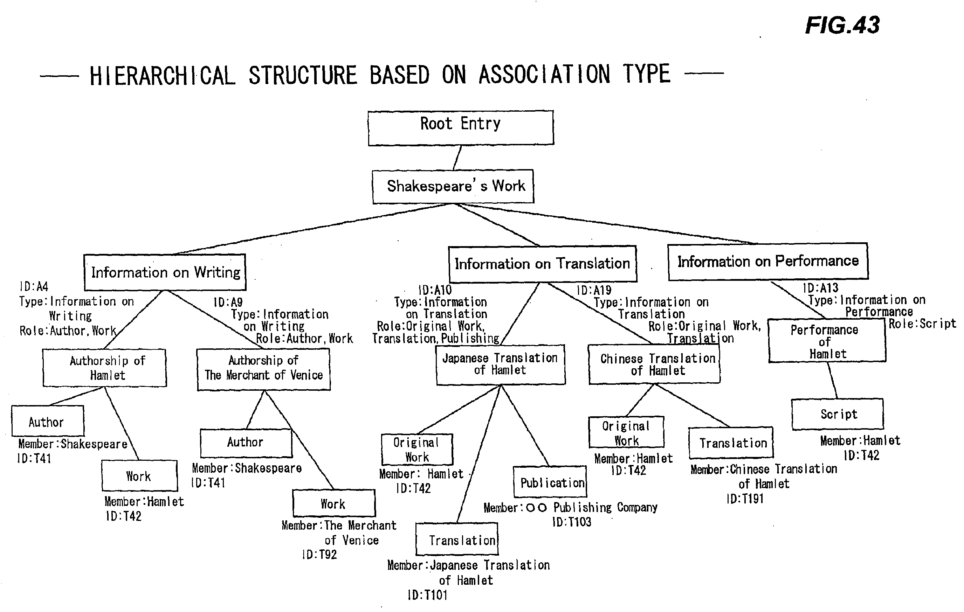

Figs. 42 and 43 are second and third diagrams showing the associative data of the directory structure shown in Fig. 41.

Fig. 42 shows a case in which a corresponding entry "Shakespeare's Work" is newly disposed below a root entry by paying attention to a certain association (theme) which is Shakespeare's work, and associative data are disposed therebelow, thereby realizing a hierarchy based on the theme. The entry "Shakespeare's Work" corresponds to one of the entries (ou = associations #1 to #n) indicated by the dotted lines in Fig. 26.

Fig. 43 shows a case in which entries representing classification types of "Authorship", "Translation" and "Performance" (association types; node types of A nodes) are defined and newly disposed below the entry "Shakespeare's Work".

As described above, by registering the associative data below the entries in accordance with the association types (node types), the hierarchical structure is realized based on the association types (node types).

As shown in Fig. 42, the associative data of Fig. 41 can be further hierarchized.

That is, "Shakespeare's Work" can be defined as a common theme for the nodes contained in the associative data shown in Fig. 41. Thus, as shown in Fig. 42, the user may operate the DB management server 5 to create a new entry indicating that data stored in the entries and below are related to Shakespeare's work on the entries corresponding to the five A nodes, and may hierarchize the associative data.

In the case shown in Fig. 42, the associative data are represented in the directory structure containing entries "Authorship of Hamlet (A4)" to "Performance of Hamlet (A13)" below the entry "Shakespeare's Work".

For example, the entry "Shakespeare's Work" and the entries "Authorship of Hamlet (A4)" to "Chinese Translation of Hamlet (A19)" or below are stored as subtrees in the DB server 6-1, and the entries "Performance of Hamlet (A13)" or below are stored as subtrees in the DB server 6-2 or the like, whereby the associative data can be partitioned into subtrees in accordance with the directory structure. The subtrees thus obtained can be partitioned and stored in the DB servers 6-1 to 6-n.

In such a case, the directories of "Shakespeare's Work" and "Performance of Hamlet" are set as top entries, classification types and values are defined for these top entries, the defined classification types and values are managed in the data table shown in Fig. 30 by the DB management server 5, and a referring relation thereof is managed in the directory tree table shown in Fig. 29.

In another example, in the hierarchical directory structure of the associative data shown in Fig. 42, the associative data corresponding to "Shakespeare's Work" and "Authorship of Hamlet" and "Authorship of the Merchant of Venice" therebelow are stored in the DB server 6-1, the associative data corresponding to "Japanese Translation of Hamlet" and "Chinese Translation of Hamlet" are stored in the DB server 6-2, and the associative data corresponding to "Performance of Hamlet" is stored in the DB server 6-3.

It is to be noted that the top entries are root (top) entries in the subtrees, and thus only one top entry is defined for each subtree stored in the DB server 6. A classification type/value is defined for this top entry.

Thus, in the example shown in Fig. 42, to store the associative data corresponding to "Japanese Translation of Hamlet" and "Chinese Translation of Hamlet" in the DB server 6-2, a top entry (e.g., entry corresponding to "Translation Information" shown in Fig. 43) is provided to integrate the two entries, and a subtree in which this is set as a top entry is stored.

A referring relation of the subtrees thus partitioned is managed by using the directory table shown in Fig. 29, and a classification type and a classification value defined for each subtree are managed by using the data table shown in Fig. 30.

Furthermore, when "Authorship Information" is defined as an association type (node type) for the A4 node ("Authorship of Hamlet") and the A9 node ("Authorship of the Merchant of Venice") among the five A nodes shown in Fig. 41, "Translation Information" is defined as an association type (node type) for the A10 node ("Japanese Translation of Hamlet") and the A19 node ("Chinese Translation of the Merchant of Venice"), and "Performance Information" is defined as an association type (node type) for the A13 node ("Performance of Hamlet"), the defined association types (node types) can be hierarchized as shown in Fig. 43.

For example, in the hierarchical structure of the associative data shown in Fig. 43, the associative data corresponding to "Shakespeare's Work" and "Authorship Information" therebelow are stored in the DB server 6-1, the associative data corresponding to "Translation Information" is stored in the DB server 6-2, and the associative data corresponding to "Performance Information" is stored in the DB server 6-3.

In such a case, the entries of "Shakespeare's Work", "Translation Information" and "Performance Information" are set as top entries, classification types and values are defined for the top entries, the defined classification types and values are managed in the data table shown in Fig. 30 in the DB management server 5, and a referring relation thereof is managed in the directory tree table shown in Fig. 29.

When the searcher (user) executes the search program 42 (Fig. 24) to search for the associative data stored in the DB servers 6 as shown in Figs. 41 to 43, the search program 42 analyzes contents of the search operation, and obtains tree information (directory tree table) and necessary information of data table (Figs. 29 and 30) matching the contents of the search operation from the DB management server 5.

Furthermore, the search program 42 creates search conditions (command and parameter for LDAP operation) matching the search operation and the tree information, and performs a search in the DB server 6 which stores the directory information matching the search conditions to obtain a search result.

The search result thus obtained is displayed to the user of the search program 42.

### Associative Data and Search Example (2) in DB System 4

Hereinafter, how the associative data are registered and the registered data is retrieved in the DB system 4 will be described in more detail by taking a specific example of sales information indicating commercial goods, stores and programs for promoting sale of commercial goods.

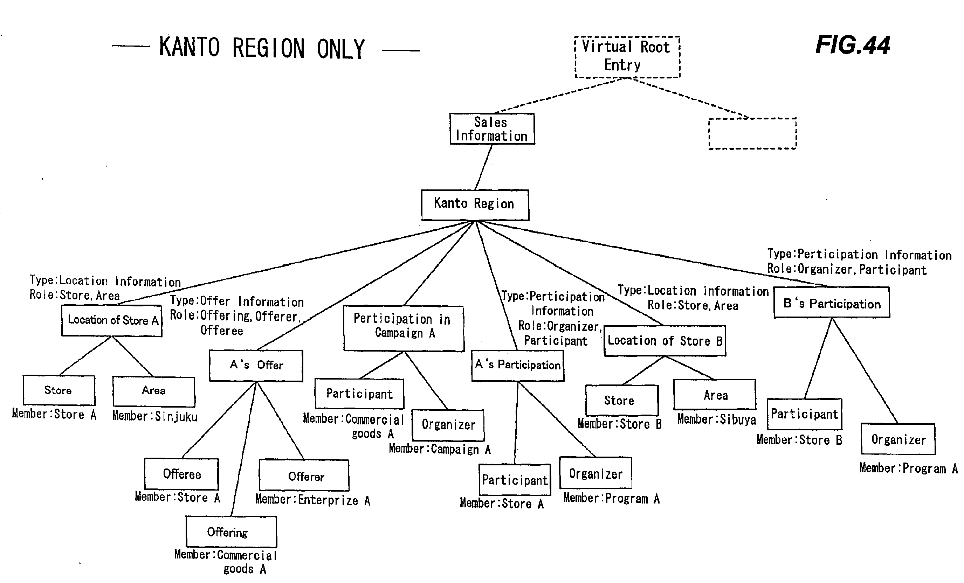

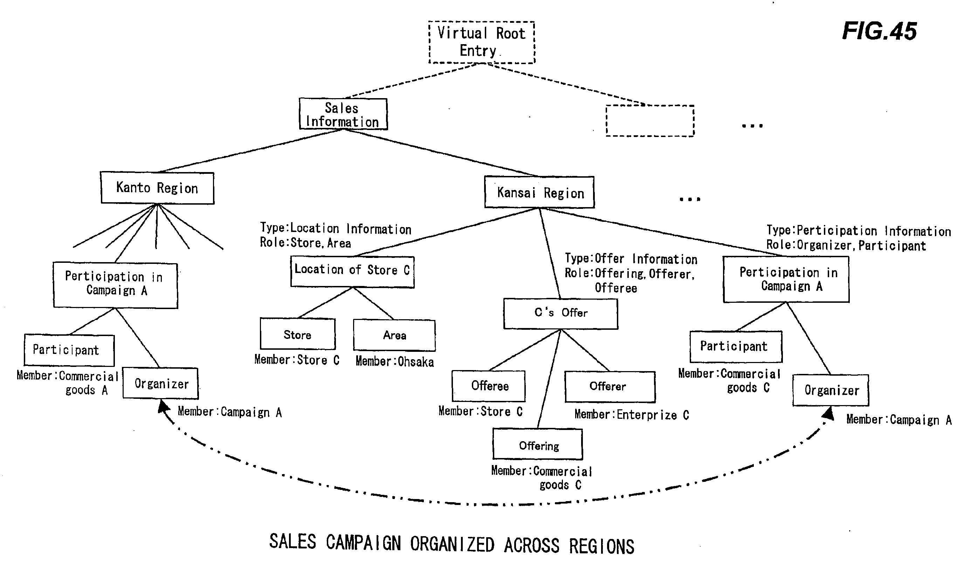

Figs. 44 and 45 are fourth and fifth diagrams showing associative data of a directory structure registered in the DB servers 6 of the DB system 4 shown in Fig. 24. Fig. 44 shows sales information of a specific area, e.g., Kanto region, only, and Fig. 45 shows sales information of multiple areas, e.g., Kanto and Kansai regions.

By user's operation of the DB management server 5 or the PC 102 shown in Fig. 24, the sales information of the Kanto region is registered as associative data represented in a directory structure shown in Fig. 44.

That is, based on the registered data of the associative data input by the user, an entry for integrating directory information regarding "Sales Information" is disposed directly below a virtual root entry. Below this entry, an entry regarding the sales information of "Kanto Region" is disposed.

Regarding the sales information of "Kanto Region", entries having "Location Information", "Offer Information" and "Participation Information" as association types (node types) are disposed. Below these entries, entries corresponding to association roles such as "Store", "Area", "Offering" and "Organizer" are disposed. As attributes of these entries (attributes are stored in the DB servers 6, but independent management tables are not defined or created to manage the attributes), data regarding members that play roles of "Store A", "Shinjuku" and the like (corresponding to node IDs and node names of the T node ID table (Fig. 21)) are registered.

It is to be noted that "Role" shown in Fig. 44 or the like corresponds to the association role of the AR table shown in Fig. 20, and "Member" corresponds to the T node.

In the example shown in Fig. 20, for the association node (A node) A4, the member T41 plays a role of "Author", and the member T42 plays a role of "Work".

As shown in Fig. 45, when the sales information further contains information (sales information of Kansai region or the like) in addition to that of the Kanto region, an entry of "Sales Information" is disposed directly below a virtual root entry. Below this entry , entries of "Kanto Region" and "Kansai Region" are disposed. Below the entry of "Kansai Region", entries representing association types (node types) of "Location Information", "Offer Information" and "Participation Information" are disposed.

Below these entries, entries corresponding to roles of "Store", "Offering", "Area", "Organizer" and the like are disposed. As attributes of the entries, data regarding members which play roles of "Store B", "Store C", "Osaka", "Campaign A" and the like are registered.

For example, the sales information shown in Figs. 44 and 45 is partitioned into subtrees. For example, the directory information other than the virtual root entry and "Sales Information" therebelow is stored in the DB server 6-1 (A; Fig. 24), the directory information of "Kanto Region" and lower below "Sales Information" is stored in the DB server 6-2 (B), the directory information of "Kanto Region" or lower is stored in the DB server 6-3 (C), and directory (not shown) information of regions other than these regions is stored in the DB server 6-4 (D) or the like.

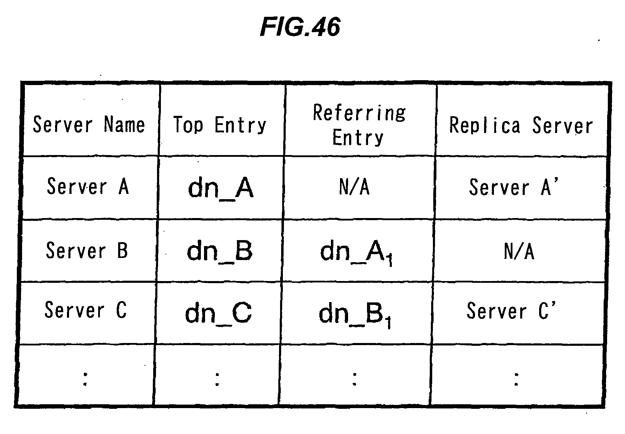

Fig. 46 shows a directory tree table indicating top entries and referring entries of the sales information (associative data) shown in Figs. 44 and 45.

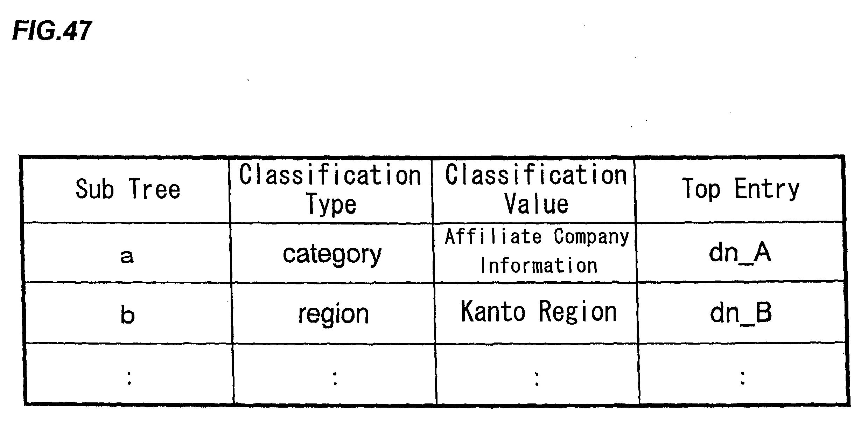

Fig. 47 shows a data table indicating classification types and values of the top entries of the sales information (associative data) shown in Figs. 44 and 45.

The top entries and the referring entries of the sales information stored in the DB servers 6-1 to 6-3, the top entries of the partitioned directory tree (or subtree), and the classification type/value of the directory information stored in the subtree are managed by the DB management server 5 based on the directory tree table and the data table shown in Figs. 46 and 47.

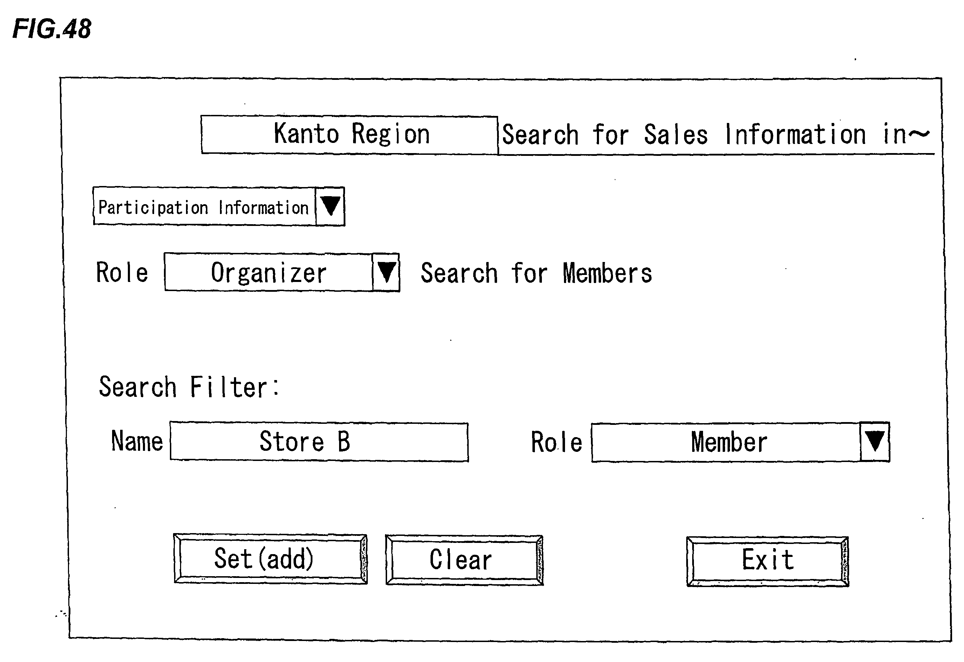

Fig. 48 shows a GUI image used for the sales information shown in Figs. 44 and 45.

The GUI image shown in Fig. 48 is displayed in the input/output device 126 of the DB management server 5 or the PC 102. In accordance with user's operation on the GUI image, the sales information registered in the DB servers 6-1 to 6-3 is searched for.

### Search for Sales Information of only Kanto region

To begin with, search for the sales information of only the Kanto region shown in Fig. 44 will be described.

It is to be noted, however, that Fig. 44 shows the sales information of only the Kanto region, and as actual directory information, information of other regions and information in addition to the sales information are all registered/stored.

The searcher (user) performs an operation of search for, for example, "stores affiliated with store B through participation in a certain sales program in Kanto region" on the GUI image (Fig. 48) displayed in the input/output device 126 of the retrieval device 40.

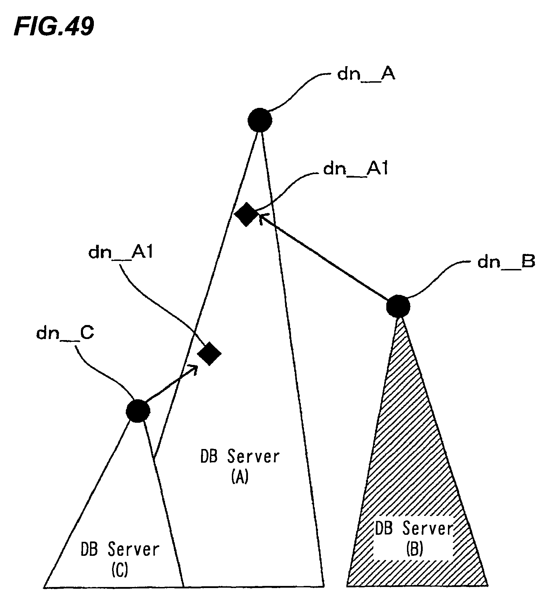

Fig. 49 shows a process in which the retrieval device 40 shown in Fig. 24 retrieves the target DB server 6 from the directory tree table and the data table shown in Figs. 46 and 47.

For example, as shown in Fig. 49, the retrieval device 40 analyzes contents of searcher's search request, and refers to the contents of the data table (Fig. 47) contained in the tree information obtained from the DB management server 5 to obtain a top entry dn_B of a subtree (directory of "Kanto Region") in which "Region" and "Kanto Region" are correlated as a classification type and a classification value.

Further, the retrieval device 40 searches for contents of the directory tree table (Fig. 46) contained in the tree information, and retrieves the DB server 6-2 (B) in which the top entry dn_B has been stored.

Fig. 50 shows a search request message for creating an LDAP operation obtained from the search conditions shown in Fig. 48 and used for search for the sales information of only the Kanto region shown in Fig. 44.

It is to be noted that Fig. 50 shows a search request input by the user as an XML message, and an LDAP operation command used for actual search is generated from this search request, although formats other than XML are not excluded from the scope of the present invention.

The LDAP operation (LDAP command and parameter) for searching for "stores affiliated with store B through participation in certain sales program in Kanto region" is generated from the search conditions input by the operator, the top entry of the subtree obtained from the tree information, and the information indicating its storage in the DB server 6-2 (B), and search is performed in the DB server 6-2 (B).

Fig. 50 shows a search request message for creating an LDAP operation that indicates the retrieval device 40 performs the following search operations (1) and (2) in the DB server 6-2 (B; Fig. 24) which stores the directory of the Kanto region and entries below the directory.

(1) Entries whose lower entry "Role" is "Participant" and whose lower entry "Member" is "Store B" are obtained from all the entries in which "Association type" (node type of A node shown in Fig. 22; association type) is "Participation Information", and member attribute values (member names) are obtained from those of the lower entries in which "Role" is "Organizer".

As a result of this processing, "Program A" is obtained as a sales program in which the store B participates.

(2) Entries whose lower entry "Role" is "Organizer" and whose lower entry "Member" is "Program A" are obtained from all the entries in which "Association type" is "Participation Information", and member attribute values (member names) are obtained from those of the lower entries in which "Role" is "Participant".

As a result of this processing, "Store A" and "Store B" are obtained as stores which participate in the sales program "Program A". The retrieval device 40 selects "Store A" different from "Store B" contained in the contents of the search operation (Fig. 48) as a final search result.

### Searching for Sales Information of in specific areas

Next, searching for the sales information of the Kanto and other regions shown in Fig. 45 will be described.

The searcher (user) performs an operation of searching for, for example, "stores participating in campaign in which store A participates by offering commercial goods irrespective of regions (in all regions)" on the GUI image (Fig. 48) displayed in the input/output device 126 of the retrieval device 40.

The retrieval device 40 analyzes contents of searcher's search operation, and searches the data table (Fig. 47) contained in the tree information obtained from the DB management server 5. However, since the contents of the search operation do not limit regions, the retrieval device 40 retrieves an entry of "Sales Information" (dn_A in Fig. 46, for example) referred to by region entries of "Kanto Region", "Kansai Region" and the like.

Further, the retrieval device 40 searches the directory tree table (Fig. 46), and retrieves the DB server 6-1 (A) in which the top entry dn_A has been stored.

An LDAP operation (LDAP command and parameter) for search for "stores participating in campaign in which store A participates by offering commercial goods irrespective of regions (in all regions)" is generated from the search conditions input by the operator, the top entry obtained from the tree information, and the information indicating its storage in the DB server 6-1 (A), and search is performed in the DB server 6.

The LDAP operation includes the following search operations.

(1) Entries whose lower entry "Member" is "Store A" and whose lower entry "Role" is "Offeree" are obtained from all the entries in which "Association type (node type of A node shown in Fig. 22; association type)" is "Offer Information", and member attribute values (member names) are obtained from those of the lower entries in which "Role" is "Offering".

As a result of this processing, "Commercial Goods A" are obtained as commercial goods offered by the store A.

(2) Entries whose lower entry "Member" is "Commercial Goods A" and whose lower entry "Role" is "Participant" are obtained from all the entries in which "Association type" is "Participation Information", and member attribute values (member names) are obtained from those of the lower entries in which "Role" is "Organizer".

As a result of this processing, "Campaign A" is obtained as a campaign program to which the commercial goods A are offered.

(3) Entries whose lower entry "Member" is "Campaign A" and "Role" is "Organizer" are obtained from all the entries in which "Association type" is "Participation Information", and member attribute values (member names) are obtained from those of the lower entries in which "Role" is "Participant".

As a result of this processing, the retrieval device 40 retrieves "Commercial Goods A" and "Commercial Goods C" as commercial goods offered by the store which participates in the campaign A.

(4) Entries whose lower entry "Member" is "Commercial Goods A" and whose lower entry "Role" is "Offering" or whose lower entry "Member" is "Commercial Goods C" and whose lower entry "Role" is "Offering" are obtained from all the entries in which "Association type" is "Offer Information", and member attribute values (member names) are obtained from those of the lower entries in which "Role" is "Offeree".

As a result of this processing, "Store A" and "Store C" are obtained as stores for offering the commercial goods A and C to the campaign A, and the retrieval device 40 selects, out of "Store A" and "Store C", the "Store C" different from the "Store A" contained in the contents of the search operation (Fig. 48) as a final search result.

### Dynamic Modification of Directory Structure and Load Distribution among DB

### Severs

As described above, in the DB system 4 (Fig. 24), the associative data are represented in the directory structure. Thus, partitioning and replication on a subtree basis among the DB servers 6 are easy to perform.

Thus, in the DB system 4, for example, even when access to a certain entry stored in the DB server 6 becomes excessive for one reason or another, measures are easily taken for load distribution such as addition of a replica server (mirror server) for storing the entry, and transfer of the entry and its subordinate entries (set of a certain entry and its subordinate entries may be referred to as subtree, hereinafter) together to the other DB server 6.

Hereinafter, description will be made of a dynamic modification of the directory structure and a subtree exchange/movement that are suited to load distribution among the DB servers 6 and prevention of a degradation in system performance of the DB system 4 by using the features of the DB system 4.

The following method is employed for the dynamic modification of the directory structure, and the subtree exchange/movement among the DB servers 6 in the DB system 4:
(1) creation of new subtrees (provision of new subtrees) in the same DB server 6, and
(2) transfer of subtrees from the high-load DB server 6 to the low-load DB server 6, or exchange between a frequently accessed subtree of the high-load DB server 6 and an infrequently accessed subtree of the low-load DB server 6 (subtree exchange/movement).

### Provision of new subtree

To begin with, provision of new subtrees in the DB system 4 will be described.

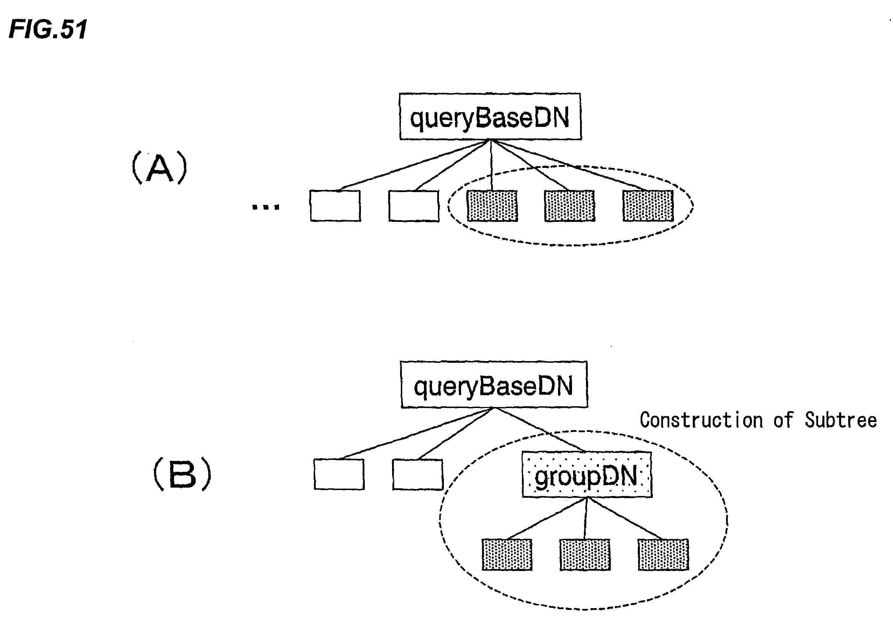

Figs. 51 show provision of new subtrees in the DB server 6 of the DB system 4 shown in Fig. 24, where part (A) shows a directory structure before provision of a new subtree, and part (B) shows a directory structure after provision of a new subtree.

Consideration will be given to a case, as shown in Fig. 51 (A), in which when the retrieval device 40 sets queryBaseDN as a query base and performs search by using a filter queryfiler, entries matching the search conditions concentrate in a part of the directory tree (or subtree) stored in a certain DB server 6.

It is to be noted that the filter queryFiler corresponds to search conditions of the LDAP, and conditions of "Role" = "Offering", "Member" = "Commercial Goods C" and the like constitute a filter queryFiler in the search operation described thus far.

In the filter queryFiler, complex conditions can be represented by a logical product of some conditions.

The DB server 6 counts the number of times of matching of each entry with the search conditions for each search operation, and results of such counting are totaled in the DB management server 5, whereby a set of frequently accessed entries and superordinate entries thereof can be obtained under specific search conditions.

For example, in the directory structure before the provision of the new subtree (Fig. 51 (A)), by performing such measurement, it is possible to detect that hatched entries shown in the drawing match the search conditions and access concentrates on these entries under certain search conditions (query base: queryBaseDN, filter: queryFilter).

When such access concentration is detected, a superordinate entry (groupDN) is provided to a set of the access-concentrated entries, and those entries are built up as a new subtree. Thus, access to the entry set can be localized, and a degradation in performance of the DB system can be prevented.

Furthermore, preparation can be made for moving the access-concentrated subtrees between one DB server 6 and the other.

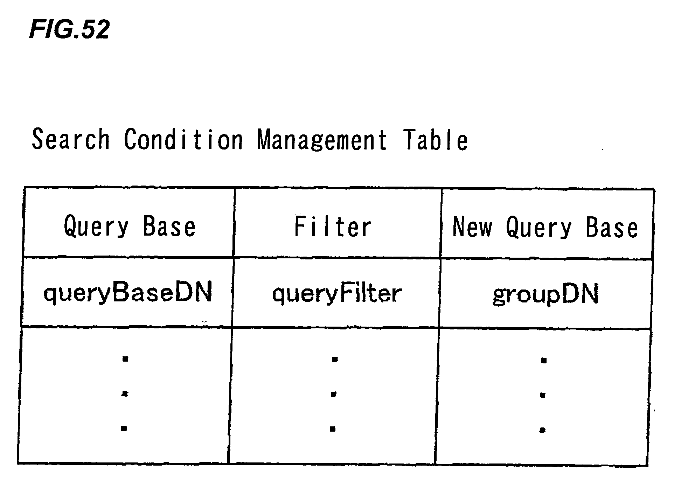

Fig. 52 shows a search condition management table used for the provision of new subtrees shown in Figs. 51 (A) and (B).

When a subtree is newly created by providing the superordinate entry (groupDN), the DB management server 5 (Fig. 24) creates a search condition management table as shown in Fig. 52 in which a search starting entry (query base; queryBaseDN), a filter (queryFilter) used for the search, and an entry (new query base; groupDN) below the search starting entry and set up above access-concentrated entries are correlated, and supplies the table to the retrieval device 40.

In the case of receiving the search condition management table to create search conditions, when search including above-mentioned specific filter (queryFilter) as a logical product in its query filter occurs in the subtrees below the changed entry (query base: queryBaseDN), the retrieval device 40 performs the search by using filters excluding the specific filter (queryFilter) not for the subtrees below the original search starting entry (query base; queryBaseDN) but for subtrees below a newly-created search starting entry (new query base; groupDN). Accordingly, it is possible to shorten a time necessary for the search.

When the filter does not contain the specific filter (queryFilter), the original entry (queryBaseDN) is set as a search starting entry, and search is performed in a range of all the subordinate subtrees.

After the provision of new subtrees, as in the case of not using the search condition management table, when a top entry for search cannot be obtained from the data table (Fig. 47) or the search condition management table, the retrieval device 40 performs search from the top directory in the DB servers 6-1 to 6-n (A to N).

### Movement/Exchange of Subtree

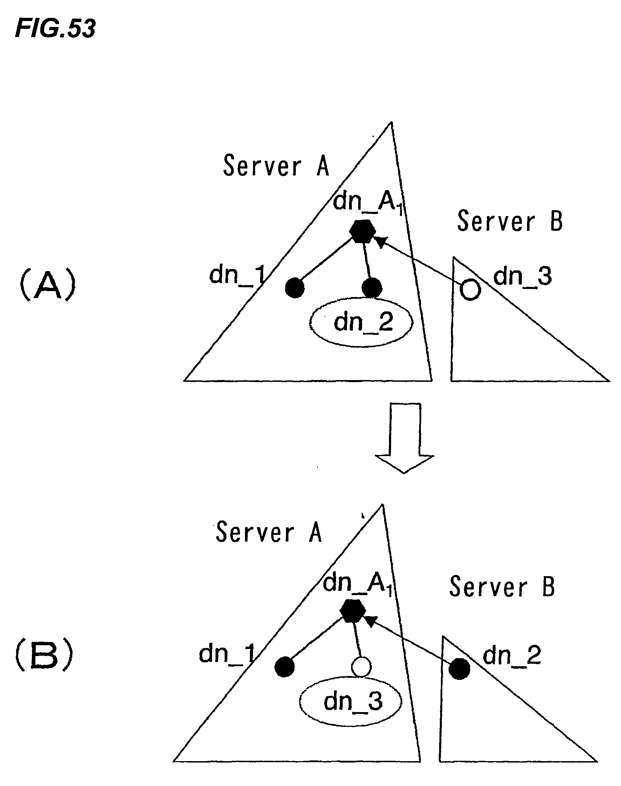

Figs. 53(A) and 53(B) exemplify subtree exchange/movement between the DB servers 6-1 and 6-2 (A and B) of the DB system 4 shown in Fig. 24, where Fig. 53(A) shows a directory structure before subtree exchange, and part Fig. 53 (B) shows a directory structure after subtree exchange.

Consideration will be given to a case, as shown in Fig. 53(A), in which there are subtrees (subtrees of entry dn_3 or lower) where access concentrates in the DB server 6-2 (B), while there are subtrees (subtrees of entry dn_2 or lower) of almost no access in the DB server 6-1 (A).

The number of times of access to each entry is counted by the DB server 6, and results of such counting are totaled by the DB management server 5, whereby a frequently accessed subtree can be obtained. Simultaneously, a loading state of the DB server 6 can be obtained. Additionally, a subtree on which access concentrates can be obtained by using the search condition management table shown in Fig. 52.

When such access concentration (nonuniformity) is detected, as shown in Fig. 53(B), a subtree of an entry dn_3 or lower of the high-load DB server 6-2 (B) is configured as a subtree of an entry dn_A-1 or lower of the DB server 6-1 (A), while a subtree of an entry dn_2 of the DB server 6-1 (A) is configured as a subtree in which dn_2 of the DB server 6-2 (B) is a top entry, and the subtrees are exchanged between the DB servers 6-1 and 6-2 (A and B). Accordingly, loads can be distributed between the DB servers 6-1 and 6-2 (A and B).

However, considering access concentration/nonuniformity at a macro level (e.g., case in which the number of times of being searched is small, thereby lowering of access and load), it is not always necessary to use the search condition management table for the subtree movement/exchange.

The provision of new subtrees (search condition management table) is designed to achieve a high speed (high efficiency) of search processing thereafter in accordance with a degree of access concentration under specific search conditions which has occurred until a certain point of time.

On the other hand, the subtree movement/exchange solves a problem that considerably uneven distribution of loads occurs due to an increase/decrease in the absolute number of times (frequency) of access to each server or subtree not dependent on search conditions or not limited to specific search conditions.

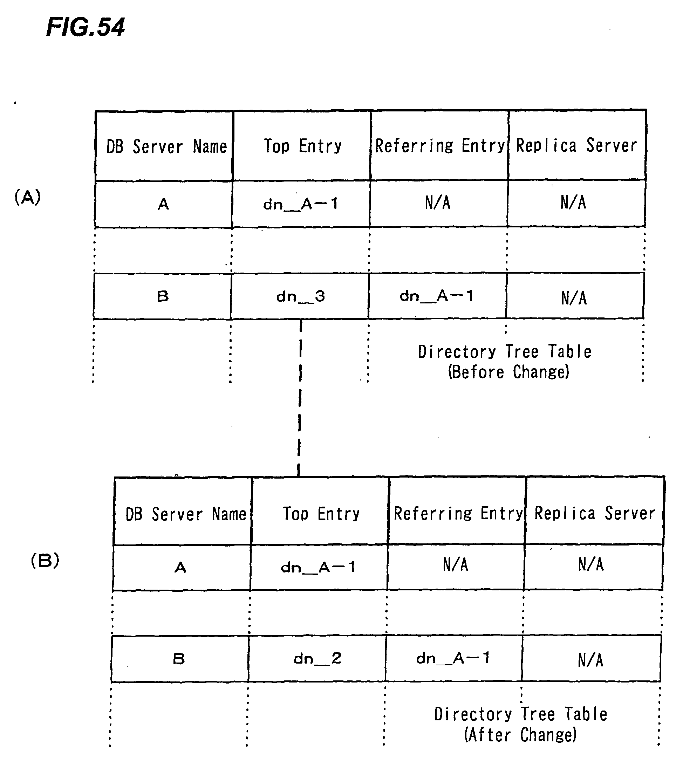

Figs. 54 show updating of the directory tree table (Fig. 46) for the DB servers 6-1 and 6-2 (A and B) which is caused by the subtree exchange shown in Figs. 53(A) and (B), where part (A) shows the directory table before updating, and part (B) shows the directory table after updating.

It is to be noted that such subtree exchange is carried out for the subtrees newly provided as shown in Figs. 51 (A) and (B) and the existing subtrees.

When the updating is performed, the DB management server 5 updates the contents of the directory tree table for the DB servers 6-1 and 6-2 (A and B) as shown in Figs. 54(A) and (B) (in this case, however, there is no change in the contents of the directory tree table for the DB server 6-1 (A)).

For example, when access concentrates on the directory dn_1 of the DB server 6-1 (A) shown in Fig. 53(A) while access to the entire DB server 6-2 (B) is infrequent, thereby setting a low-load state, loads are distributed among the DB serves 6 only by moving a subtree of the directory dn_1 or lower from the DB server 6-1 (A) to the DB server 6-2 (B).

The aforementioned subtree movement/exchange is performed in accordance with the following procedure.

(1) Measurement of access frequency: the DB server 6 measures the numbers of times (frequencies) of access to the entries from entry directly below the virtual root entry to entry in an upper position by one layer the first level of the basic component (Fig. 26) of the associative data, and the DB management server 5 totals the measured values.

(2) Selection of subtree of movement/exchange source: when considerably uneven access (concentration) to subtrees below a plurality of entries belonging to the same level is detected in each DB server 6, the DB management server 5 selects subtrees below the entries as subtrees of the movement/exchange source.

(3) Selection of DB server of movement/exchange destination: upon the selection of the subtree of the movement/exchange source, the DB management server 5 selects the other DB server 6 in which the subtrees of the movement/exchange source are not stored as subordinate entries and whose access frequency (load) is lower as a whole than that of the DB server 6 which has stored the subtrees of the movement/exchange source.

### Third DB Program 62

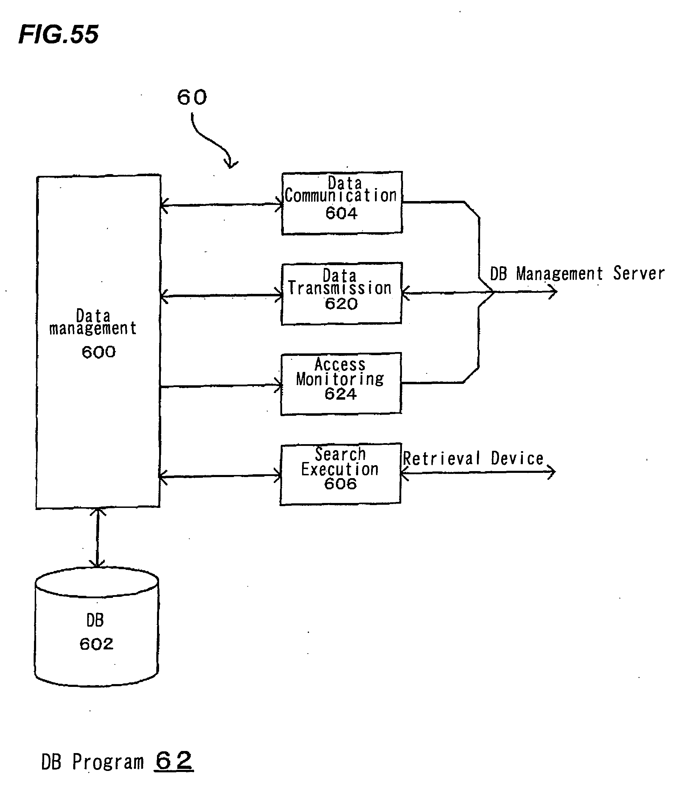

Fig. 55 shows a third DB program 62 run on the DB server 6 when subtrees are newly created or moved/exchanged in the DB system 4 shown in Fig. 24.

Referring to Fig. 55, the DB program 62 employs a configuration that a data transmission unit 620 and an access monitoring unit 624 are added to the second DB program 60 shown in Fig. 37.

With these components, the DB program 62 realizes functions necessary for provision of new subtrees and movement/exchange in addition to the functions similar to those of the second DB program 60.

In the DB program 62, the data transmission unit 620 transmits the associative data necessary for subtree movement/exchange shown in Figs. 53(A) and 53 (B) according to control from the DB management server 5.

The access monitoring unit 624 measures the number of times (frequency) of access to each entry of the directory information stored in the DB server 6, and transmits the measured value to the DB management server 5.

### Second DB Management Program 56

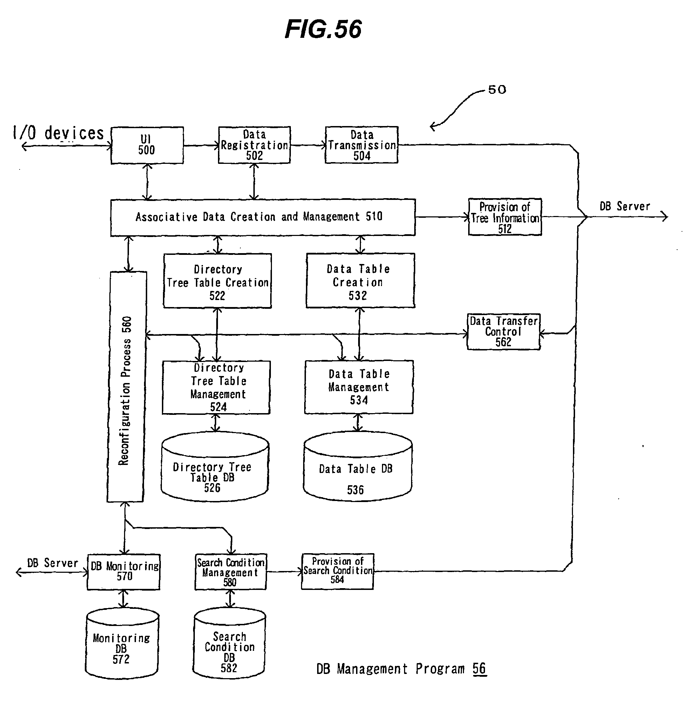

Fig. 56 shows a second DB management program 56 run on the DB management server 5 when subtrees are newly constructed and moved/exchanged in the DB system 4 shown in Fig. 24.

Referring to Fig. 56, the second DB program 56 employs an architecture that a reconfiguration process unit 560, a data transfer control unit 562 (data transfer means), a DB monitoring unit 570, a monitoring DB 572, a search condition management unit 580, a search condition DB 582, and a search condition provision unit 584 are added to the first DB management program 50 shown in Fig. 31.

With these components, the DB management program 56 realizes functions necessary for provision of new subtrees and movement/exchange in addition to the functions similar to those of the first DB management server 50.

In the DB management program 56, the DB monitoring unit 570 totals the number of times (frequencies) of access to entries sent from the DB servers 6 and data (query base, and filter) regarding the search operation of the LDAP used for the access, and stores the totaled value in the monitoring DB 572.

The DB monitoring unit 570 outputs the stored totaled value of the access frequencies and the data regarding the search operation to the reconfiguration process unit 560.

The reconfiguration process unit 560 controls the data transfer control unit 562 in accordance with the totaled value of the number of times of access to the entries input from the DB monitoring unit 570, and performs processing for the provision of new subtrees shown in Figs. 51 (A) and (B).

The reconfiguration process unit 560 controls the data transfer control unit 562 in accordance with the totaled value of the number of times of access to the entries, and performs processing necessary for the movement/exchange of subtree shown in Figs. 53(A) and (B).

Moreover, the reconfiguration process unit 560 controls the data table management unit 534 to perform processing necessary for the modification of the directory tree table (Fig. 46) which is caused by the provision of new subtrees and the movement/change shown in Figs. 54(A) and (B).

The search condition management unit 580 creates the search condition management table shown in Fig. 52 when subtrees are newly created or moved/changed, and stores the table in the search condition DB 582.

Additionally, the search condition management unit 580 outputs the stored search condition management table to the search condition provision unit 584.

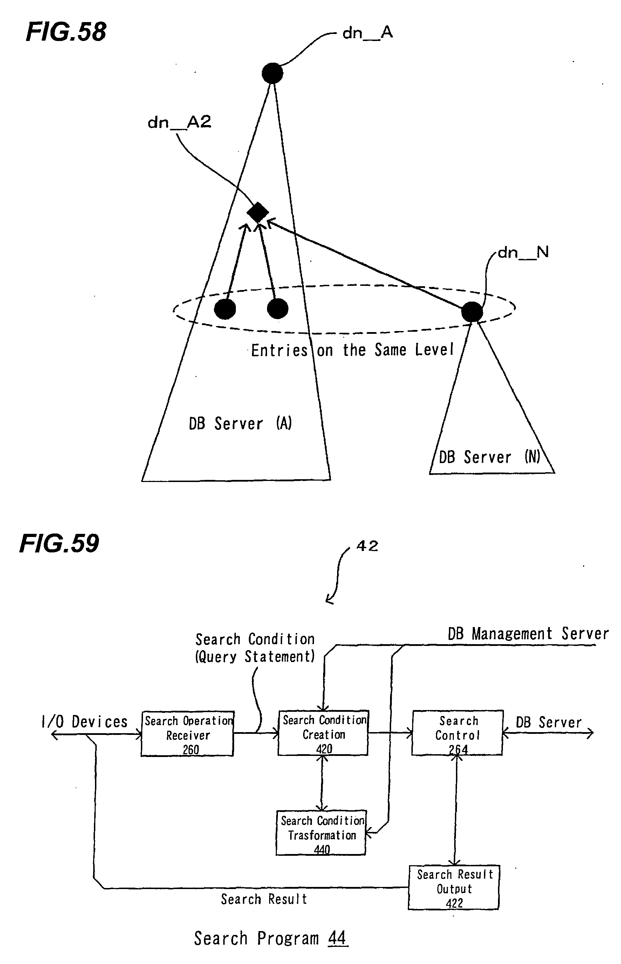

The search condition provision unit 584 provides the search condition management table input from the search condition management unit 580 to the retrieval device 40 (search program 44; Fig. 59).

Hereinafter, the counting of the numbers of accessing times will be described in more detail.

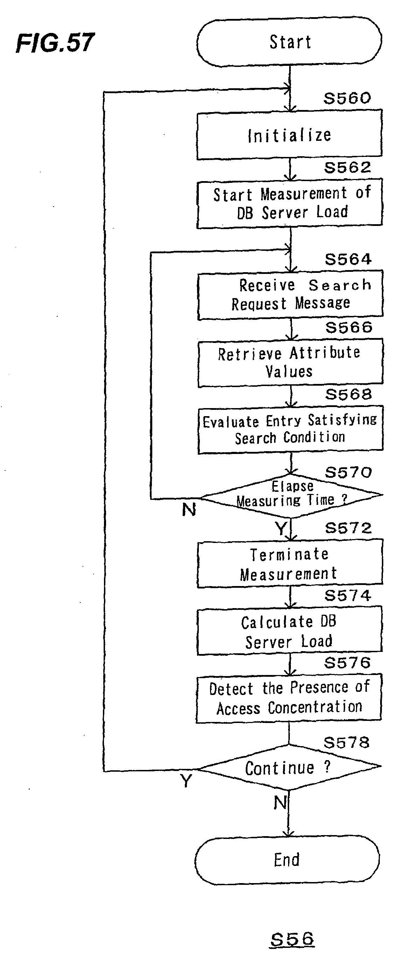

Fig. 57 is a flowchart showing a process S56 of the DB management program 56 shown in Fig. 56.

Referring to Fig. 57, in a step S560, the DB management program 50 performs initialization.

In a step SS562, the DB monitoring unit 570 starts measurement of the number of times of access to each entry of the DB server 6.

In a step S564, the DB server 6 receives an LDAP search operation command from the search control unit 264.

In a step S566, the DB monitoring unit 570 retrieves search conditions contained in the search operation command input to the DB server 6.

In a step S568, the DB monitoring unit 570 retrieves data of entries matching search conditions from the DB server 6.

It is to be noted that the processing in S564 to S568 is carried out for totaling data regarding the search operation performed by the DB server 6, and the totaled value is sent from the DB server 6 to the DB monitoring unit 570.

In a step S570, the DB monitoring unit 570 judges whether a predetermined measuring time for totaling the data regarding the search operation has elapsed or not.

The DB management program 56 proceeds to processing in S572 if the measuring time has elapsed, or proceeds to processing in S564 otherwise.

In a step S572, the DB monitoring unit 570 ends the measurement of the number of accessing times.

In a step S574, the DB monitoring unit 570 calculates the numbers of times of access to all the entries and the loading states of all the DB servers 6 during the measuring time from the start to the end of the measurement.

In a step S576, the reconfiguration process unit 560 detects presence of access concentration for all the entries based on the measuring result calculated by the DB monitoring unit 570.

In a step S578, the DB monitoring unit 570 judges whether or not to continue the process.

The DB management program 56 proceeds to processing in S560 if the process is continued, or ends the process otherwise.

Fig. 58 shows entries at the same level stored across a plurality of DB servers.

For example, access concentration on an entry or a subtree is determined by the following method of (1) or (2).

(1) An access concentration index (access concentration index = number of entries satisfying search conditions/number of entries present at specific level (Fig. 51 (A)) is calculated for all the search operations within a predetermined measuring time.

When the number of execution times of each search operation is larger than a preset number and a calculated access concentration index is equal to or lower than a threshold value, occurrence of access concentration with respect to the search conditions is determined.

(2) The DB servers 6 that store the partitioned subtrees are set as targets of measurement, the number of times (frequency) of processing in which a top entry of each subtree and all the entries belonging to the same level as that of the top entry are used as query bases in accordance with a search request is set as a frequency of access to the subtree, and access concentration is determined by a method similar to that of (1).

### Second Search Program 44

Fig. 59 shows a second search program 44 run on the retrieval device 40 when subtrees are newly provided and moved/exchanged in the DB system 4 shown in Fig. 24.

Referring to Fig. 59, the second search program 44 employs a configuration that a search condition transformation unit 440 is added to the first retrieval device 40 shown in Fig. 38.

The search program 44 transforms the search conditions by using the search condition management table in addition to functions similar to those of the first retrieval device 40.

In the search program 44, the search condition transformation unit 440 receives the search condition management table (Fig. 52) from the DB management unit 5, and judges whether a filter and a search starting entry (query base) contained in the search conditions created by the search condition creation unit 420 match the conditions shown in the search condition management table or not.

When the filter and the query base contained in the search conditions match the conditions shown in the search condition management table, the search condition transformation unit 440 modifies the original search starting entry (query base; queryBaseDN) to a new search starting entry (new query base; groupDN), and controls the search condition creation unit 420 to transform the filter into a new filter in which the filter (queryFilter) shown in the search condition management table is removed from the filter of the search conditions.

### Operation of DB System 4 when Subtree is Newly Created

Hereinafter, an overall operation of the DB system 4 when subtrees are newly created will be described.

As described above with reference to Fig. 51 (A), the number of times the entries match the search conditions for each search operation is counted by the DB server 6, and such counting results are totaled by the DB management server 5, whereby a set of frequently accessed entries and top entries thereof under specific search conditions can be obtained.

When such access concentration is determined, by providing a top entry (groupDN) in the set of entries on which access concentrates, and constructing its subordinate entries as a new subtree, it is possible to localize the access to the set of entries and to prevent a degradation in performance of the DB system.

The DB server 6 notifies the DB management server 5 of the number of times of access to each entry and a filter used for the accessing.

The DB management server 5 counts the numbers of times (frequencies) of access to the entries and the filters used for the accessing from the DB server 6.

When access to the subtree of a certain DB server 6 is frequent, as shown in Figs. 51 (A) and (B), the DB management server 5 controls the DB server 6 to create new subtrees.

The DB management server 5 modifies the contents of the search condition management table (Fig. 52) to match the newly created subtrees.

The DB management server 5 provides the modified search condition management table to the retrieval device 40.

When creating search conditions based on the search operation in response to searcher's (user's) search requests, the retrieval device 40 performs transformation by using the search condition management table provided from the DB management server 5, and performs a search in the DB server 6.

### Operation of DB System 4 when Subtree is Moved/Exchanged

Next, an overall operation of the DB system 4 when the subtrees are moved/exchanged will be described.

As described above with reference to Fig. 58, by totaling the numbers of times each entry is set as query bases for the entries at the same level across the plurality of DB servers, access concentration on the subtree can be determined.

The DB server 6 measures the number of times each entry is used as a query base, and notifies the DB management server 5 of the result.

The DB management server 5 counts the number of times each entry is set as query bases for the top entry of each DB server 6 and all the entries of the other DB servers at the same level as that of the top entry, and calculates an access frequency of each subtree.

When access to the subtree of a certain DB server 6 is frequent, as shown in Figs. 53(A) and (B), the DB management server 5 controls the DB server 6 to move/exchange the subtree.

Additionally, the DB management server 5 modifies the contents of the directory tree table (Fig. 46), the data table (Fig. 47), and the like to match the moved/exchanged subtree.

The DB management server 5 provides the modified directory tree and data tables to the retrieval device 40.

The retrieval device 40 performs a search in the DB server 6 by using the provided directory tree and data tables in accordance with searcher's (user's) search operation.

It should be noted that although some disclosed embodiments of the present invention are implemented in form of software instructions that are contained in a computer-readable medium and executable by a computer, the present invention is not limited to such arrangement. In alternative embodiments, hard-wired circuitry may be used in place of or in combination with software instructions. Thus, the invention is not limited to any specific combination of hardware circuitry and software.

It should be further noted that the disclosed embodiments of the present invention provide the following advantages.

(1) The disclosed embodiments provide a data model and a database system allowing easy addition of various kinds of information, especially data elements or fields, without the need of changing the schema of the database.

(2) The disclosed embodiments further provide a data model and a database system allowing data to be uniquely parsed, stored and retrieved for reproduction.

(3) The disclosed embodiments also provide a database system and management method and software allowing loads to be easily distributed among a plurality of processing devices.

(4) The disclosed embodiments additionally provide a data model and a database system and management method and software allowing users to search for registered information.

(5) The disclosed embodiments further provide a method of converting preexisting databases to a data model and a database system that allows easy addition of various kinds of information, especially data elements or fields, without the need of changing the schema of the database.

While there have been described and illustrated specific embodiments of the invention, it will be clear that variations on the details of the embodiment specifically illustrated and described may be made without specifically departing from the true spirit and scope of the invention as defined in the appended claims.

## Claims

1. A database system for creating a database of a directory tree form by associating each of one or more association nodes with one or more topic nodes, each of the one or more topic nodes having data belonging thereto, and an association attribute being defined to represent each of associations between the associated association nodes and topic nodes, said database system comprising:
directory tree creating means for creating an association node entry for each of the association nodes and an association attribute entry for each of the association attributes, and for creating a directory tree by correlating the entries in accordance with an association between the respective association node and the respective association attribute; and
data correlating means for correlating the data belonging to one of the topic nodes with the created association attribute entry in accordance with an association between the topic node and the respective association attribute.

2. The database system according to claim 1, wherein the association attribute represents a role defined between the associated association node and topic node.

3. The database system according to claim 1 or 2, wherein
the directory tree includes one or more subtrees,
top entries of the directory tree are defined for the directory tree and the subtrees,
at least one top entry of each of the subtrees refers to at least one of the entries of
the directory tree and/or the other subtrees, and
the association nodes and topic nodes are correlated in a hierarchical fashion in
the directory tree and the subtrees.

4. The database system according to claim 3, further comprising top entry correlating means for correlating the at least one top entry of each of the subtrees with the at least one entry in the directory tree and/or the other subtrees which is/are referred to by the at least one top entry.

5. The database system according to claim 3 or 4, further comprising one or more first database servers for storing the data belonging to at least one of the topic nodes included in one of the directory tree and the subtrees, data belonging to the association node associated with said at least one topic node, and a role defined between the associated topic and association nodes in accordance with said one of the directory tree and the subtrees.

6. The database system according to claim 5, further comprising data transfer means for transferring and storing the data stored in one said first database server in another said first database server.

7. The database system according to claim 6, wherein the data transfer means determines the data to be transferred based on an operation state of the first database server from which the data is to be transferred.

8. The database system according to claim 6, wherein the data transfer means determines data to be transferred based on a state of accesses to the directory tree or the subtree.

9. The database system according to any of claims 5 to 8, further comprising a second database server for storing a replica of the data stored in one or more of the first database servers, and
top entry correlating means for correlating the at least one top entry of each of the subtrees with the at least one entry in the directory tree and/or the other subtrees which is/are referred to by the at least one top entry, and for further correlating a top entry of the first database server with the second database server.

10. The database system according to claim 9, wherein each of the directory tree and the subtrees further includes one or more further subtrees, and the database system further includes subtree creating means for creating at least one said further subtree from each of the directory tree and the subtrees.

11. The database system according to claim 9 or 10, wherein classification information used for classifying the association nodes and topic nodes is defined for each of the directory tree and the subtrees, and the database system further includes classification information correlating means for correlating each of the directory tree and the subtrees with the classification information defined for said directory tree or subtree.

12. The database system according to claim 11, further comprising a retrieval device for retrieving the stored data belonging to at least one of the topic nodes.

13. The database system according to claim 12, wherein the retrieval device
includes
search condition accepting means for accepting search conditions,
directory tree search means for searching for the directory tree or the subtree correlated to the classification information corresponding to the accepted search conditions, and
data search means for searching for the stored data belonging to at least one of the topic nodes included in the directory tree or the subtree found by the directory tree search means.

14. A computer implemented data management method for creating a database of a directory tree form by associating each of one or more association nodes with one or more topic nodes, each of the one or more topic nodes having data belonging thereto, and an association attribute being defined to represent each of associations between the associated association nodes and topic nodes, said method comprising:
creating an association node entry for each of the association nodes and an association attribute entry for each of the association attributes;
creating a directory tree by correlating the entries in accordance with an association between the respective association node and the respective association attribute; and
correlating the data belonging to one of the topic nodes with the created association attribute entry in accordance with an association between the topic node and the respective association attribute.

15. The computer implemented data management method according to claim 14, wherein:
the directory tree includes one or more subtrees,
top entries of the directory tree are defined for the directory tree and the subtrees, at least one top entry of each of the subtrees refers to at least one of the entries of the directory tree and/or the other subtrees, and
each of the directory tree and the subtrees further includes one or more further subtrees; and
the method further comprises creating at least one said further subtree from each of the directory tree and the subtrees.

16. The computer implemented data management method according to claim 14, wherein:
the directory tree includes one or more subtrees,
top entries of the directory tree are defined for the directory tree and the subtrees,
and
at least one top entry of each of the subtrees refers to at least one of the entries of the directory tree and/or the other subtrees; and
the method further comprises:
storing the data belonging to at least one of the topic nodes included in one of the directory tree and the subtrees, data belonging to the association node associated with said at least one topic node, and a role defined between the associated topic and association nodes in accordance with said one of the directory tree and the subtrees; and
searching for the stored data belonging to the topic node.

17. The computer implemented data management method according to claim 16, further comprising:
accepting search conditions;
searching for the directory tree or the subtree correlated to classification information corresponding to the accepted search conditions; and
searching for the stored data belonging to the topic node included in the directory tree or subtree obtained as a result of the searching.

18. The computer implemented data management method according to claim 14, further comprising:
storing the data belonging to at least one of the topic nodes included in one of the directory tree and the subtrees, data belonging to the association node associated with said at least one topic node, and a role defined between the associated topic and association nodes in a plurality of first database servers in accordance with said one of the directory tree and the subtrees; and
transferring and storing the data stored in one said first database server in another said first database server.

19. A computer program comprising computer program code means for performing all of the steps of any of claims 14 to 18 when said program is run on a computer.

20. A computer program as claimed in claim 19 embodied on a computer readable medium.

21. A computer-readable memory having stored thereon a data structure, the data structure comprising:
a topic node field for storing therein object data belonging to a plurality of objects;
an association node field for storing therein association data describing associations among said objects; and
an association attribute field for storing therein role data representing attributes of roles played by the objects with respect to the associated associations.

22. A method for converting a first data structure having a plurality of nodes connected by a plurality of links to a second data structure having a plurality of associated topic and association nodes, the method comprising:
converting each of the nodes of the first data structure to one of the topic nodes of the second data structure;
converting each of the links of the first data structure to one of the association nodes of the second data structure;
in the second data structure, associating each of the association nodes with two of the topic nodes corresponding to the nodes which in the first data structure are connected by the link corresponding to said association node; and
in the second data structure, assigning an association attribute to each association between the associated association and topic nodes to represent attributes of roles played by the nodes with respect to the associated links in the first data structure.
